# EUROPEAN PATENT SPECIFICATION

(11) **EP 0 598 036 B1**
(45) Date of publication and mention of the grant of the patent: **10.09.1997**
(21) Application number: 92917805.1
(22) Date of filing: 04.08.1992
(51) Int. Cl.: H04K 1/04, H04L 9/06

(54) **NONLINEAR DYNAMIC BLOCK SUBSTITUTION METHODS.**
NICHTLINEARE DYNAMISCHE VERFAHREN ZUR BLOCKVERTAUSCHUNG.
PROCEDES DE SUBSTITUTION DYNAMIQUE NON LINEAIRE DE BLOCS.

(30) Priority: 05.08.1991 US 741097
(43) Date of publication of application: 25.05.1994
(73) Proprietor: LITTON SYSTEMS, INC., Woodland Hills, California 91367 (US)
(72) Inventor: MITTENTHAL, Lothrop, Thousand Oaks, CA 91361 (US)
(74) Representative: Wombwell, Francis
(86) International application number: PCT/US92/06497
(87) International publication number: WO 93/03559

(56) References cited:
- EP-A- 0 421 754
- US-A- 4 195 200
- US-A- 4 322 577
- US-A- 4 520 232
- US-A- 4 685 132
- US-A- 5 038 376

## Description

### BACKGROUND OF THE INVENTION

### 1. Field of the Invention.

The present invention relates to the field of encryption devices and methods, and more particularly, to block substitution encryption methods and devices.

### 2. Prior Art.

In many cases, it is desired to communicate information in digital form from one location to another in a manner which is clear and unambiguous to the receiver, but which is incomprehensible to an interloper therebetween. Accordingly, in many instances, it is common to encrypt the information to be communicated by some predetermined encryption process, to transmit the encrypted form of the information and to then decrypt the information at the receiving location. Depending upon the degree of security desired, a relatively simple and easily broken encryption may be used, as any level of encryption will make the transmission meaningless to the casual interloper. In other situations, the degree of security desired may dictate the use of an encryption technique which is more difficult to decipher by cryptanalysis, or of course hopefully in the highest level of security, make the same substantially impossible to decipher. Applications for such encryption techniques include commercial applications such as sensitive communications between manufacturing plants, bank branches, etc., and military applications including but not limited to IFF (identification friend or foe). While in some cases the primary objective of the encryption is to prevent an interloper from deciphering the information being communicated, in other cases a primary object, such as in IFF, is to prevent the interloper from himself originating false information with the same encryption scheme so as to mislead the intended receiver. Both objectives are frequently present in many applications.

Block substitution is a method used to encrypt a clear text message which is in the form of a sequence of binary numbers. In accordance with the method, the sequence is broken into blocks of some predetermined block length n, with the block substitution device substituting a unique new block of binary numbers for each of those in the clear text. Substitute blocks constitute the encrypted message or cipher text, each substitute block representing a nonambiguous one-to-one transformation of a clear text block. In the prior art, such substitution generally takes place by means of look-up tables, switching arrangements, or feedback shift registers. However, without changing codes or substitution schemes frequently, the encryption may be broken by cryptanalysis, though, changing look-up tables is cumbersome, only a limited number of possible switching arrangements is practical, and repeated cycling of a shift register is time consuming. An additional problem arises in finding substitutions which do not have any pattern or bias in them. At the present time, candidate substitutions are examined by computer simulation for possible systematic patterns and in some cases, additional circuitry is used to compensate therefor.

Various types of encryption equipment and methods are well-known in the prior art. See for instance U.S. Patents No. 3,796,830, 3,798,359, 4,078,152, 4,195,200, 4,255,811, 4,316,055 and 4,520,232. In general, these systems as they relate to block substitution are key dependent ciphering and deciphering systems and are not based upon block substitution by modulo 2 addition of one additive permuted set of numbers to another, as in the present invention.

In EP-A-0421754 methods and apparatus for modulo 2 addition based encryption by block substitution techniques are disclosed which allow use of the substitution scheme with relatively simple hardware. The block substitution, a one to one mapping of n bit binary numbers onto themselves, is based on the fact that certain permutations of the n bit binary numbers define a block substitution by modulo 2 addition of one permuted set of numbers to another, and that a subset of these define equations having an additive relationship when viewed as vectors, whereby the remainder of the set may be generated from a limited subset of the equations. This allows the simple changing of the transformation on a frequent basis. Various properties of the transformations and methods of using the same were disclosed. The fact that the remainder of the set equations may be generated from a limited subset of the equations, however, may make cryptanalysis less difficult than desired in some applications. Accordingly the present invention comprises a method and apparatus for nonlinearizing the equations, also in an orderly and readily variable manner, so that the remainder of the set equations may no longer be generated from a limited subset of the equations.

### BRIEF DESCRIPTION OF THE INVENTION

Methods and apparatus for nonlinearizing modulo 2 addition based encryption by block substitution techniques which allows use of the substitution scheme with relatively simple hardware and yet makes cryptanalysis more difficult. The basic block substitution, a one to one mapping of n bit binary numbers onto themselves, is based on the fact that certain permutations of the n bit binary numbers define a block substitution by modulo 2 addition of one permuted set of numbers to another, and that a subset of these define equations having an additive relationship when viewed as vectors. This allows the simple changing of the transformation on a frequent basis. Then the equations are nonlinearized, also in an orderly and readily variable manner, so that the remainder of the set equations may no longer be generated from a limited subset of the equations. Various properties of the transformations and methods of using the same are disclosed.

### BRIEF DESCRIPTION OF THE DRAWINGS

Figure 1 illustrates a many-one transformation of one set of three bit binary numbers to another set of binary numbers by a modulo 2 addition.

Figure 2 illustrates a one-to-one transformation of one set of three bit binary numbers to another set of binary numbers by a modulo 2 addition.

Figure 3 presents the transformation equations of Figure 2 reordered, excluding the first equation, making the three digit number in the first column the same as the three digit number in the second column of the preceding row. Excluding the first equation, each column now is in the same order but with different starting positions.

Figure 4 corresponds to Figure 3, though with the first and third columns shifted vertically with respect to the second column. These shifts are 6 and 2 positions downward respectively. Except for the first equation, each column remains in the same order but with different starting positions.

Figure 5 corresponds to Figure 4, with the ⊕ and = symbols interchanged for encryption purposes.

Figure 6 is a block diagram of an apparatus for encrypting data.

Figure 7 is a block diagram of apparatus for decrypting data encrypted by the apparatus of Figure 6.

Figure 8 is an example of encryption using Figure 6.

Figure 9 is an example of decryption using Figure 7.

Figure 10 presents a set of transformation equations corresponding to those of Figure 4 with the fixed word 001 added to columns 1 and 2 thereof. Except for the first equation, columns 1 and 2 are in the same order but with different starting positions.

Figure 11 is a block diagram for an apparatus for encrypting data in accordance with a set of transformation equations such as those of Figure 10.

Figure 12 is a block diagram for an apparatus for decrypting data encrypted with the apparatus of Figure 11.

Figure 13 is an example of encryption using Figure 11.

Figure 14 is an example of encryption using Figure 12.

Figure 15 illustrates a rearrangement equations in Figure 2 into the general form xₙ₋₁ ⊕ xₙ = zₙ.

Figure 16 is a block diagram of a system for encryption and decryption in accordance with the present invention.

Figure 17 illustrates a set of equations useful for encryption and decryption derived by adding the offset 0101 to the first and second columns of the set of equations presented in Table 18 of the Appendix in Appendix 2 on page 110.

### DETAILED DESCRIPTION OF THE INVENTION

Since the present invention comprises methods and apparatus for nonlinearizing the modulo 2 addition based encryption by block substitution described in detail in parent application, that disclosure is repeated herein to provide a basis for the improvement of the present invention. Thus as described in the parent application, in the description to follow, the methods and apparatus of the parent application will first be described with respect to blocks of n bit binary numbers where the value of n is 3. Then the methods and apparatus will be expanded to n bit blocks generally, and certain characteristics of blocks up to n = 8 will be presented. By presenting the following example for n = 3, it is believed that the concepts of the original invention may be better understood than would be the case if a larger block having many more combinations were used.

Block substitution is the term usually applied to a one-to-one mapping of the n-bit binary numbers onto themselves. This mapping can be written as a pairing of the 2ⁿ n-bit numbers:

| | |
|---|---|
| X₁ | Z₁ |
| X₂ | Z₂ |
| . | . |
| . | . |
| Xₖ | Zₖ |
| . | . |
| . | . |
| . | . |

where each column is the set of the same 2ⁿ distinct n-bit numbers but written in different orders. Thus, this mapping can be thought of as a permutation of the n-bit numbers written as:${\text{X}}_{\text{1}} {\text{X}}_{\text{2}} {\text{..X}}_{\text{k}}$${\text{Z}}_{\text{1}} {\text{Z}}_{\text{2}} {\text{..Z}}_{\text{k}}$ or (X₁ Xᵢ Xⱼ) for some set of indices. This usual notation for permutations simply means that x₁ → Xᵢ, Xᵢ → Xⱼ, etc.

Going back to the column notations, one could define a set of simple equations from the original set and its image: 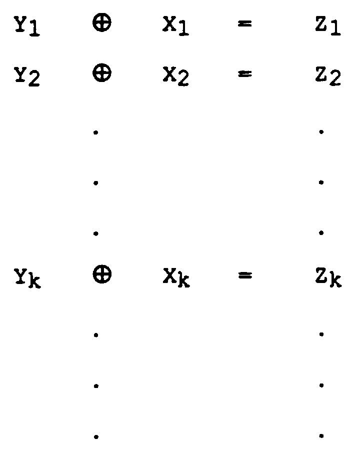 where ⊕ means modulo 2 addition (i.e., addition of corresponding digits without any carry). In general, the set {Y₁, Y₂,...} will not all be distinct, but in certain circumstances they will be. In accordance with the original invention, when they are distinct, block substitutions can be generated by modulo 2 addition rather than by conventional means. The main tasks are to determine the circumstances, if any, in which this scheme works, how the substitutions can be quickly changed, and the lack of bias.

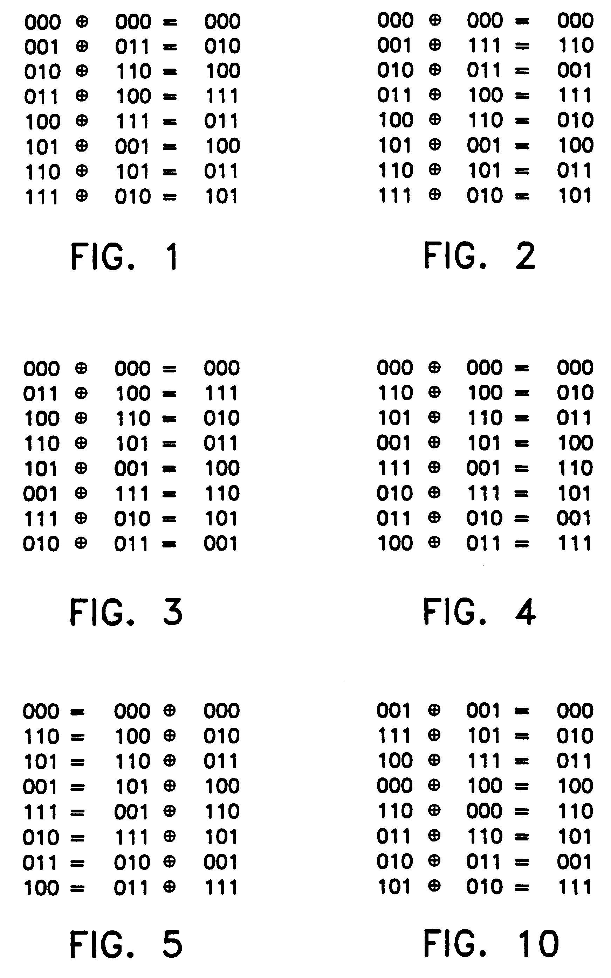

It is not obvious that block substitutions can ever be generated by modulo 2 addition. For example, consider the attempt to substitute one arrangement of 3-bit binary numbers for another by modulo 2 addition shown in Figure 1. In column 3 on the right, 011 and 100 each appear twice, while 001 and 110 never appear. The numbers in column 1 on the left, acting on the numbers in column 2 in the center, constitute a transformation of the set of 3-bit binary words of column 1 into themselves. This is a many-one transformation and is useless for block substitutions because of the ambiguity that results when trying to recover the original block for the transformed blocks 011 and 100.

Trying another arrangement as shown in Figure 2 gives a different result. Any pair of columns now constitutes a one-to-one transformation. In particular, the transformation is one-to-one from the 3-bit binary numbers of column 3 (the clear text) onto themselves, the encrypted text of column 1. Each column consists of all the 3-bit numbers exactly once.

Obviously, one could use the transformations of Figure 2 to transform any three digit binary block into an encrypted binary block, and of course use the same equations to de-encrypt the encrypted message by finding the encrypted word in column 1 and then selecting the corresponding clear text word in the same row, column 3 of Figure 2. This is most convenient if ⊕ and = are interchanged as shown in Figure 5. An equivalent transformation to transform the encrypted word back to the clear text word results if the words of column one are added to those of column two to obtain those in column three.

Referring again to Figure 2, an interesting property of the transformation shown therein, and for that matter, for all transformations of the type of interest herein, may be seen. In particular, of the eight blocks of three binary numbers, the lower four blocks 000, 001, 010 and 011 map into two blocks of the lower four, namely 000 and 001, and two blocks of the upper four, namely 110 and 111. Similarly of course, the four larger blocks of the eight map two into blocks in the lower four, and two into blocks of the upper four. Similarly, the even blocks 000, 010, 100 and 110 map into two even blocks, 000 and 010, and into two odd blocks, 001 and 011. The odd four blocks map half into odd blocks and half into even blocks. Obviously for decryption, the same is true. Thus, knowledge of some characteristic of the encrypted block such as its being large, small, even, odd, etc., does not convey any similar knowledge of a characteristic of the unencrypted block. As a result of this, the encryption is said to be unbiased. For that matter it should be noted that, even considering the middle digit of each block, the four blocks of Figure 2 having a zero as the middle digit map two blocks into blocks also having a zero as a middle digit, and two blocks having one as the middle digit. Similarly of course, the four blocks having a one as the middle digit map two into blocks having a one as a middle digit, and two into blocks having a zero as the middle digit. This property applies to all block sizes and extends to dividing equally all set of blocks which may be characterized algebraically as maximal subgroups. This unbiased character of the encryption is a highly beneficial characteristic of the encryption scheme disclosed herein, particularly in conjunction with the frequent changing of the encryption from time to time.

In particular, in any practical encryption device of course, one would like to be able to frequently change the encryption scheme so that patterns will not persist for a sufficient length of time to allow cryptanalysis of the pattern. For this purpose, certain properties of the equations of Figure 2 may be recognized by rearranging the rows of Figure 2 as shown in Figure 3. Rearrangement of the rows in any manner of course does not effect the transformation in any way, as each of the equations maintains its own integrity separate and apart from its position in the table. In essence, the second row of Figure 3 is the 4th row in Figure 2 and the third row of Figure 3 is the fifth row in Figure 2, with each successive row being arranged so that the left column in each successive row contains the same 3 bit number as the second column of the preceding row. When so arranged, neglecting the first or identity row, it will be noted that each of the three columns contains the same sequence of the 3 bit binary numbers, with wrap-around. In particular, the first column has the same sequence as the second column, but displaced downward therefrom one position (or upward six positions), and the third column has the same sequence as the second column, though displaced downward three positions (or upward four positions) from the sequence of column two.

Neglecting the first row or identity row of Figure 3 again, if the 3 bit binary numbers in column 1 are shifted downward a total of six positions with wrap-around with respect to the second column, it will be noted that a one to one transformation still results, as shown in Figure 4. Except for the identity row, the transformation is entirely different from that of Figure 3. By way of example, 111 column 3 maps into 011 column 1 in Figure 3, and maps into 100 column 1 in Figure 4. In addition however, it is important to note that the sequence of the 3 digit numbers in columns 1 and 3 of Figure 4 (separating out the identify row) is still the same as that in column 2 of Figures 3 and 4, though each is shifted with wrap-around in comparison to column 2. Thus, the transformation of Figure 3 has been changed to the new transformation of Figure 4 by merely shifting the numbers in the first column of Figure 3 with respect to those in the second column, and with the numbers in the third column also being shifted with respect to those in the second column, but by a different amount to preserve the integrity of the modulo 2 addition equations. Again, for decryption, symbols ⊕ and = of Figure 4 can be interchanged as in Figure 5.

More generally for any block size, the sets of equations can be written as:

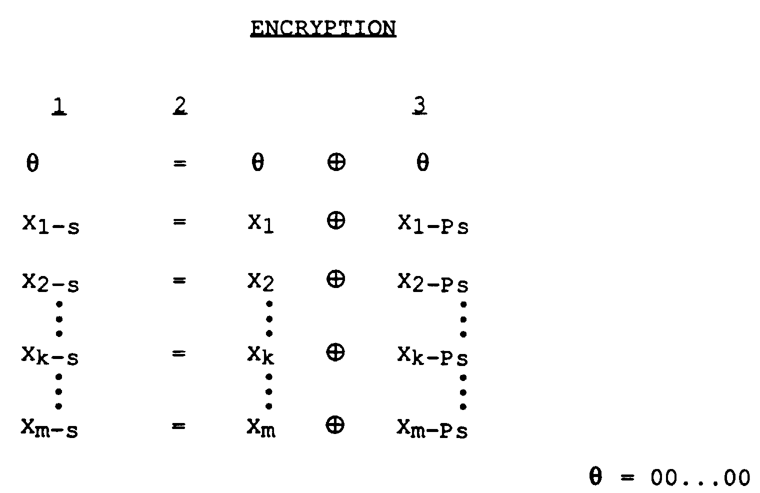

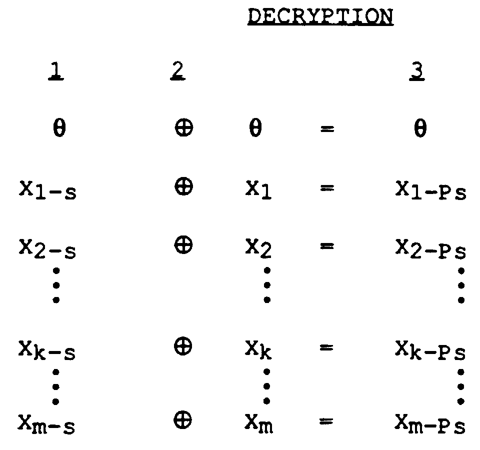

For block size n, m = 2ⁿ-1. θ = 00...00, the n bit word consisting of all zeroes.

If column 1 is shifted by S positions with respect to column 2, then column 3 is shifted by a different amount Pₛ to preserve the integrity of the modulo 2 addition equations. For a given shift S, Ps is determined by the shift programmer.

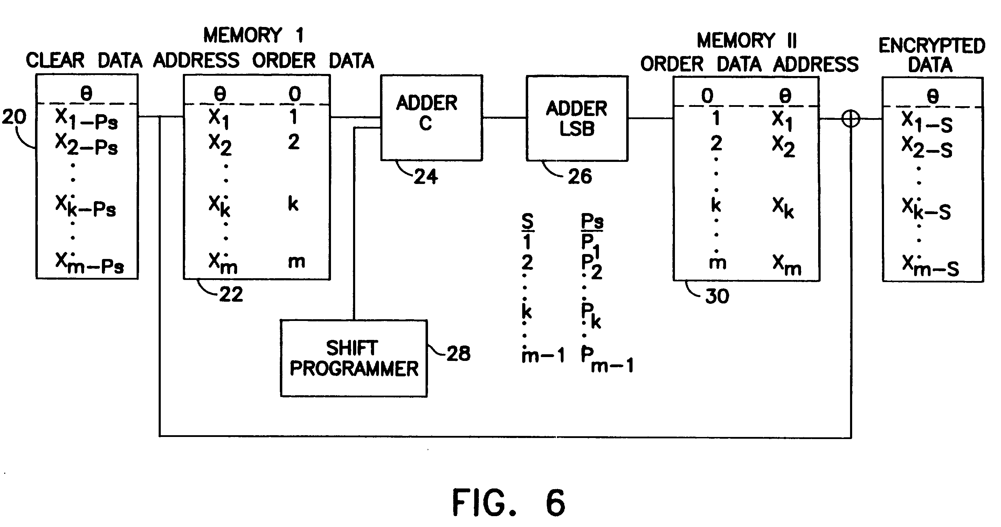

Now referring to figure 6, a block diagram of a system for carrying out encryption in accordance with the encryption and decryption techniques discussed so far may be seen.

The clear test word is sent to its address in Memory I. This corresponds to selecting a word X_{k-Ps} from column 3 other than θ. The concept is to add it to its counterpart in column 2. If X_{k-Ps} is other than θ and is to be added to Xₖ, this is equivalent to adding the word with order data K - Pₛ in column 3 to the word with order K - Pₛ + Pₛ = K, also in column 3. Thus the order data of the clear test word K - Pₛ is sent to the adder to be added to Pₛ. The new order number is sent to its address in Memory II. The content of that address is added modulo 2 to the clear test word to obtain the encrypted word
Xₖ₋ₛ in column 1. If the clear text word is θ, its cipher test image is the same.

Adding of the order data is accomplished by two adders, carry (C) and least significant bit (LSB). The carry adder adds the numbers conventionally with carry, e.g. 001 + 011 = 100. However, if the addition requires more than n digits, that is, a 1 is carried to the n+1 position, that extra 1 is instead added to the first position, e.g., 100 + 110 = 1010 ⇒ 011. This is accomplished by the LBS adder. This is simply addition modulo m where m = 2ⁿ - 1. In this example, n = 3, m = 7 and the addition expressed in decimal terms is 4 + 6 = 10 ≡ 3 mod 7 where 100 ⇒ 4, 110 ⇒ 6 and 011 ⇒ 3.

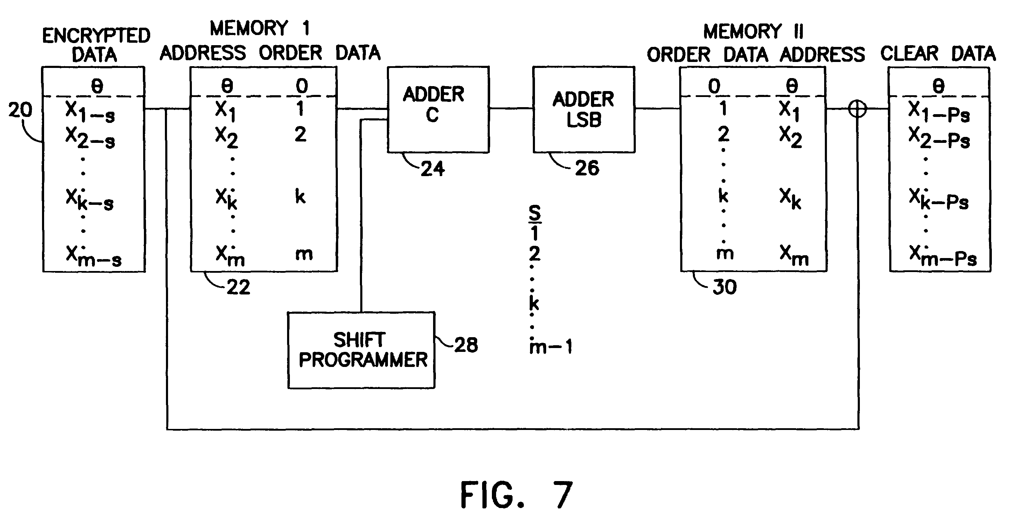

The block diagram for decryption is shown at Figure 7. The cipher text word is sent to its address in Memory I. This corresponds to selecting a word Xₖ₋ₛ from column 1 other than θ. The concept is to add it to its counterpart, Xₖ in column 2. This is equivalent to adding Xₖ₋ₛ in column 1 to the word with order data K - s + s = K, also in column 1. Thus the order data of the cipher text word, K-s is sent to the adder to be added to s. The new order number is sent to its address in Memory II. The contents of that address is added modulo 2 to the cipher text word to obtain the de-encrypted word X_{k-Ps} in column 3. If the cipher text word is θ, it is de-encrypted as θ.

The addition of order data, K - S + S and K - Pₛ + Pₛ is understood to be modulo m or with wraparound. That is, if the order data is greater than m, the last position, m is subtracted from the order data. If the cipher text word is θ, it is de-encrypted as the same word.

The shift program determines the order in which the shifts, S, in column 1 are used, with the corresponding Pₛ shift S in column 3. Any desired order can be used. The shift S corresponds to a power of the basic permutation described on Page 8, which determines the substitution by addition.

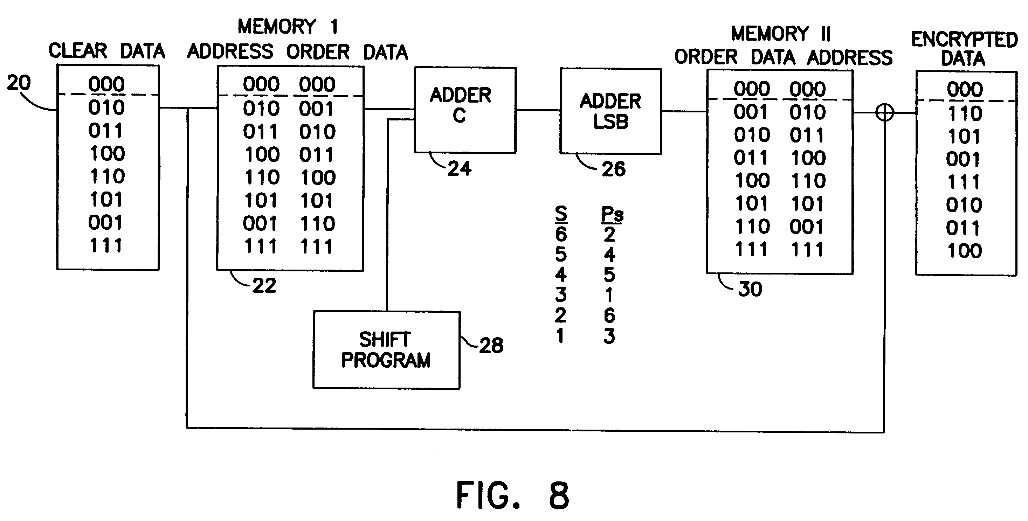

Thus, by way of example, in Figure 8, if the clear data value is 010, then that address in Memory I provides order data 001, which is binary notation that 010 is in position 1 in the sequence in Memory I (column 3 of the set of equations). The first shift position in the program is S = 6, for which P₆ = 2. To the position of 010, K - P₆ = 1 is added P₆ = 2. In binary notation, 001 + 010 = 011. Corresponding to the address 011 in Memory II is the number 100. (This is equivalent to saying that 100 is in position 3 in column 3). 110 = 100 ⊕ 010 is the cipher text word. This represents the first of the additive equations in Figure 5.

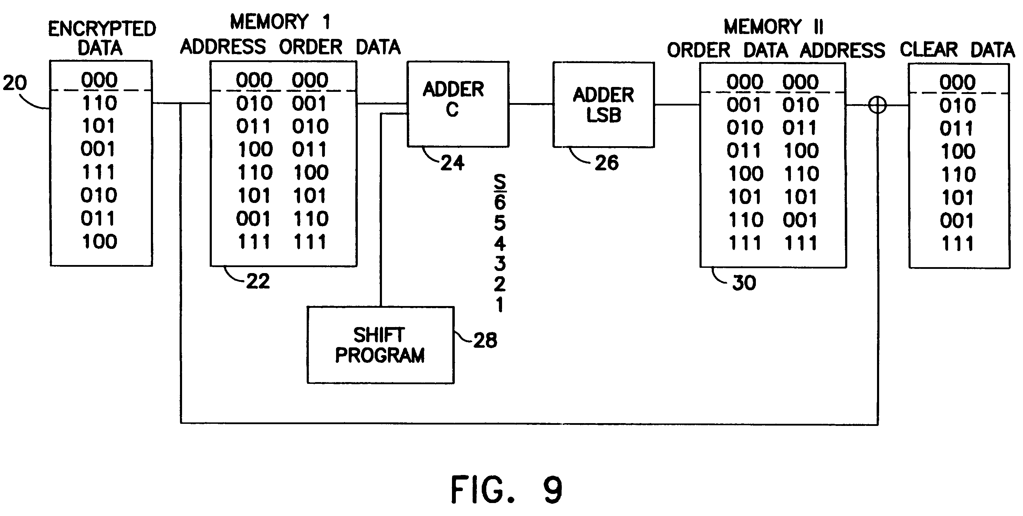

For decryption, the cipher text word is 110. In Figure 9, that address in Memory I provides order data 100, or position 4 in the sequence in Memory I. The first shift position in the program is S = 6. To the position of 110, K - 6 = 4, is added 6, or 110 in binary notation. 4 + 6 = 10. Subtracting by m = 7, 10 - 7 = 3, or position 3 with wrap around. In binary notation, 100 + 110 = 011 modulo 7. Corresponding to the address 011 in Memory II is the number 100. 110 ⊕ 100 = 010. This represents the first of the additive equations in Figure 4.

If one adds Modulo 2 a fixed number to the first and second columns of Figure 4. A still further one-to-one transformation results.

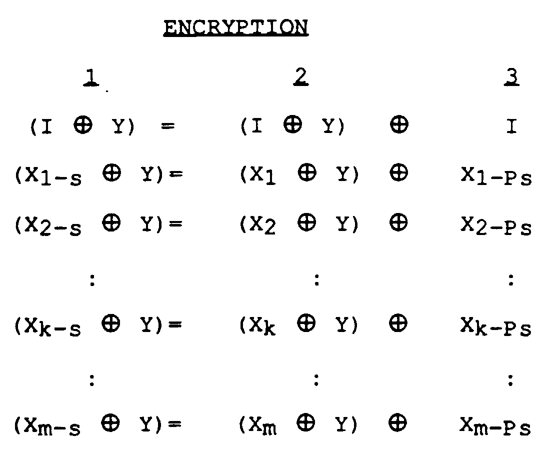

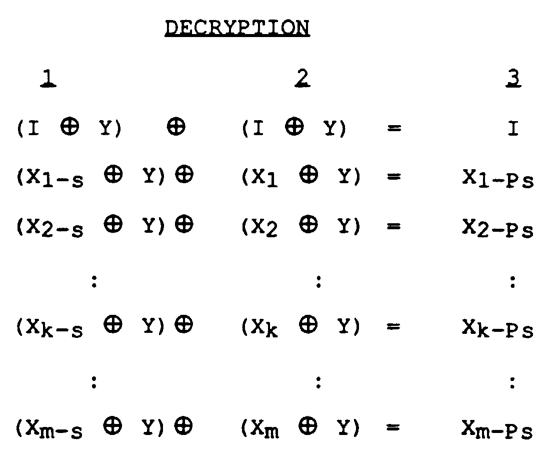

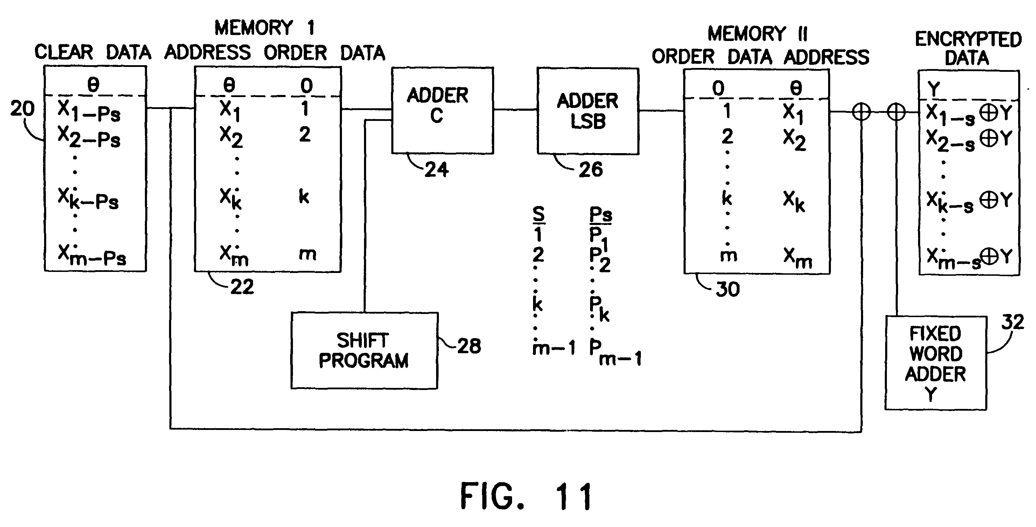

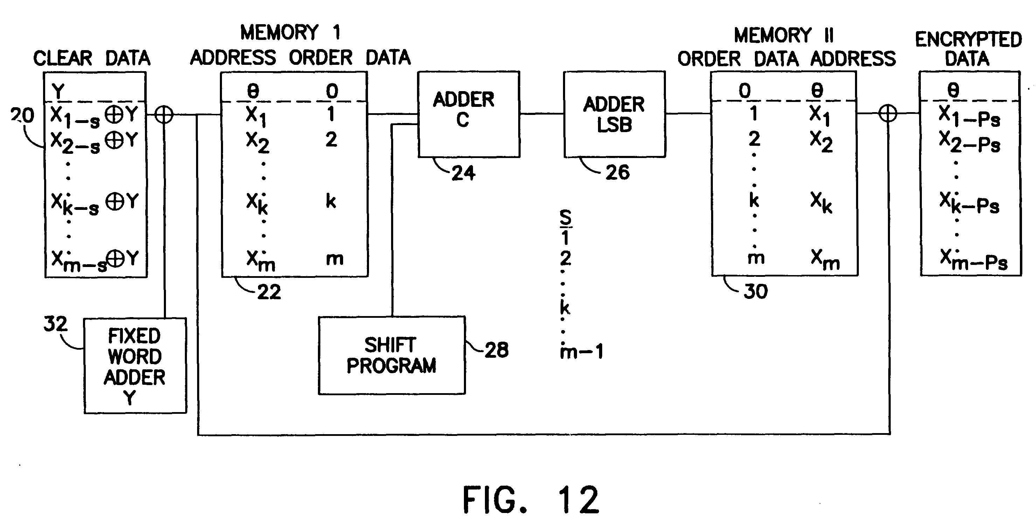

Now referring to Figures 11 and 12, for any block size a block diagram for carrying out encryption and decryption using a fixed word other than θ, the zero word, may be seen. The procedure is essentially the same as before with the additional step of adding the fixed word Modulo 2 as the last step in the encryption process and the first step in the decryption process.

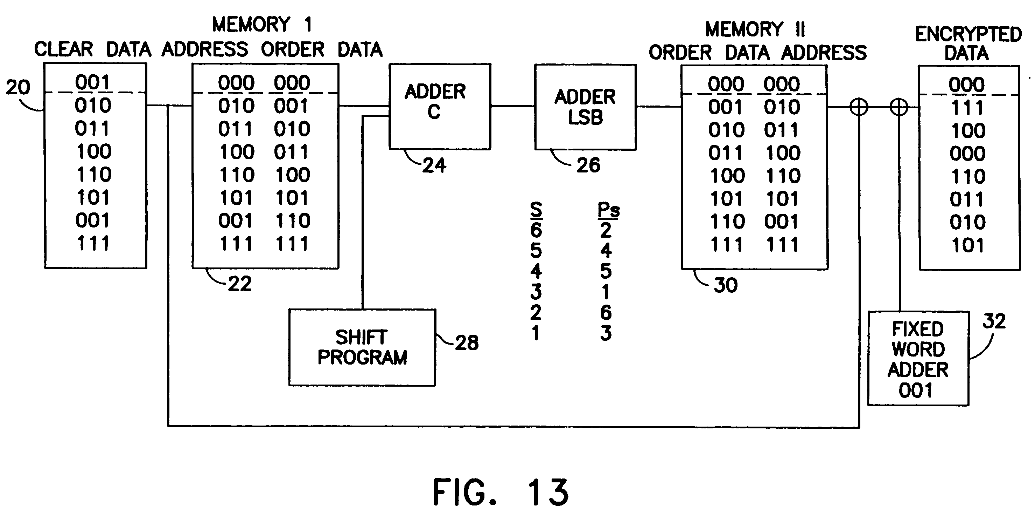

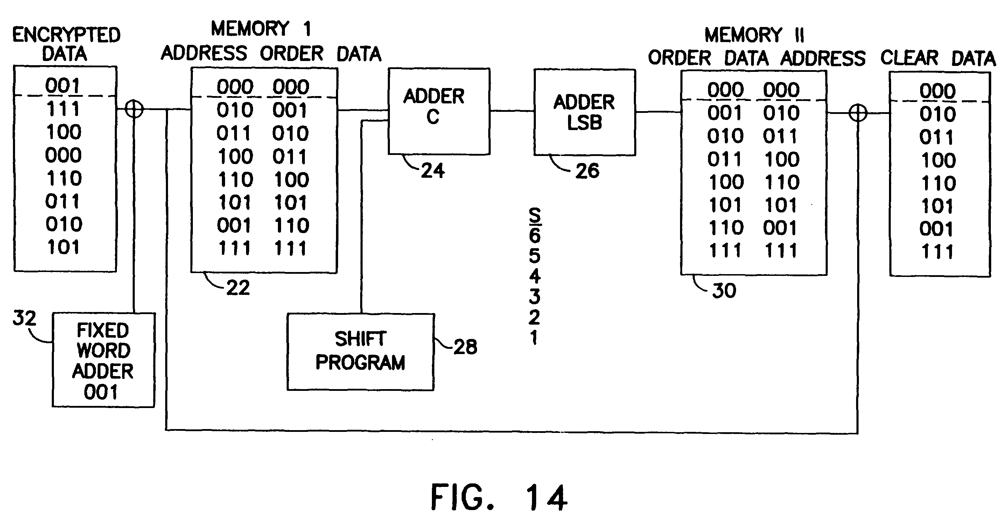

An example is shown in Figure 13 and 14. In this case, 000 no longer remains fixed, but is transformed into 001. Now 110 is transformed to itself and thus becomes fixed in this case.

The fixed word adder can add in succession any or all of the n bit words in whatever order is selected by the user.

Now referring to Figure 8, as an example, a block diagram of a system for carrying out encryption in accordance with the encryption and decryption techniques discussed so far may be seen. As shown in the figure, any value of the clear data 20, except 000, is provided as an address to memory 22. Stored at the various memory addresses is the order data for the clear data value, that is, the position, expressed as a binary number, of that clear data value in the ordered sequence of the right column of Figure 4 (and Figures 5 and 10). This position is provided as an output of the memory 22 to an adder shown as the combination of adders 24 and 26. The adders are coupled to add the output of the memory to a value of shift Pₛ as controlled by shift programmer 28. This addition is not a modulo 2 addition but rather is the normal binary add, with the one exception that the carry from the most significant bit is coupled to the carry in of the least significant bit. Thus, the adder will provide the result 001 as the sum 1 larger than 111, not 1000 or simply 000. Thus, it may be seen that the output of the adders is a new three bit binary number shifted in the order data sequence by an amount Pₛ. This new position is then used as the address for memory 30, which provides as its output the three bit binary number corresponding to the value in column 2 of Figure 4, or the corresponding clear data value in Figure 3. Thus, by way of example, if the clear data value is 010, that value as an address to memory I provides the location of that value of 001 in the sequence. If the shift program selects S = 6, then P6 = 2 and column 3 is shifted downward two positions from column 2 or by an amount 010. The three bit binary number which would then be adjacent to the clear data value of 010 is 100 as in Figure 5. This added modulo 2 to the clear data 010 provides an encrypted value of 110, corresponding to the value shown in Figure 5. However, if the clear text data value is 000, that value as an address to Memory I provides the location of the value of 000 in the sequence. It is not shifted but provided unchanged as the order data in memory 30. Thus 000 added to itself, remains fixed.

The downward shift Pₛ of the sequence of column 3 of Figure 5 in comparison to the basic order data of column 2 of Figure 5 of course corresponds to a complimentary upward shift. Thus, for an n bit block, a downward shift of Pₛ is equivalent to an upward shift of m-Pₛ. Note also that for a three bit block, all values of possible shift provide the desired one-to-one mapping except for a shift of the first column with respect to the second column of zero, and of 7 and multiples thereof, as such shifts would provide a second column in the matrix having each row the same as the corresponding row of the first column, and any number added to itself modulo 2 will be zero. Thus, for a shift of seven or multiples thereof, all clear data values map to 000, useless for encryption purposes. In general however, it will be shown later that for n bit blocks larger than three bits, all shifts other than zero and integer multiples of m give the desired result and thus are usable in accordance with the original invention.

The block diagram for decryption in accordance with Figure 7 is shown in Figure 9. From a hardware standpoint, this diagram is exactly the same as that of Figure 8 for encryption, the decryption differing only in the shift S applicable for a given shift Pₛ for encryption. As in the example on page 14, for a shift Ps of 2 for encryption, a shift 6 provides the proper decryption, etc., as shown in the tables of Figures 8 and 9. Obviously, the encryption hardware and the decryption hardware must be using the associated shifts for the clear data to be properly recovered on decryption, though the applicable shift may be varied frequently at both ends to make cryptanalysis very difficult, if not virtually impossible.

If one adds modulo 2 a fixed number to any pair of columns of Figure 5, a still further one-to-one transformation results. By way of example, in Figure 10 the fixed number 001 has been added modulo 2 to the first and second columns of Figure 5. Now 010 as a clear text word maps into an encrypted word 111, whereas in the example of Figure 8, 010 mapped into 110.

An example of a block diagram for the encryption using a fixed word adder may be seen in Figure 13. This figure is identical to Figure 8 with the exception that the fixed word adder 32 has been included to add the fixed word (001 in the example) to the output of memory 30 corresponding to the value in the same row of the second column as 010 of the first column. Thus, the fixed word adder merely adds the fixed word (001 in the example) to the column 2 value, after which the clear text word is added modulo 2 thereto to obtain the encrypted data. Again for the example, using clear data of 010 as the address to memory 22, the output of the memory will be 001. Using the same shift as in the example of Figure 8, 010, Pₛ = 2 is added to the 001, to provide an address to memory 30 of 011. This results in an output from memory 30 of 100, to which fixed word adder adds modulo 2, the fixed word 001, yielding 101. This added modulo 2 to the clear text word 010 gives the encrypted word 111 as shown in Figure 10.

A block diagram for decryption, corresponding to the block diagram for encryption of Figure 13, is shown in Figure 14. As may be seen, Figure 14 is identical to Figure 13 (though the shifts for decryption are again different from the shifts for encryption), with the exception of the fixed word adder also adding modulo 2 the fixed word to the encrypted data before the same is applied to memory 22. This modulo 2 addition is in essence the second modulo 2 addition of the fixed word, as a first modulo 2 addition of the fixed word was done in Figure 11 to get the encrypted word. Thus, since a second modulo 2 addition of the same word in effect cancels the first modulo 2 addition so that after the encrypted data in Figure 12 has the fixed word added modulo 2 thereto, the result of that modulo 2 addition may be used with the equations of Figure 10 for decryption purposes. Thus, by way of example, using the encrypted word 111 of the example of Figure 13, 111 ⊕ 001 =110 as the address to memory 22 of Figure 14. This gives a memory output of 100, to which the value of S = 6 or 110 is added. 100 + 110 = 1010 ⇒ 011 with wrap-around. This in turn gives an address of 011 to memory 30 or an output thereof of 100, to which is added modulo 2 110, the address to memory 22, to recover the clear text data 010. Further of course, while the fixed word adder of Figures 13 and 14 used a fixed word 001, any other 3-bit fixed word may be used, or for that matter, the fixed word may be varied from time to time with or separate and apart from variations in the shift, a fixed word of 000 essentially reducing the operation of the system to that of Figures 8 and 9.

Obviously, the methods described in relation to Figures 6, 7, 11 and 12 may readily be carried out with a microprocessor based system under program control. Alternatively, the memory could readily be preprogrammed in read only memory used essentially as look-up tables, and the adders and modulo 2 adders could readily be conventional adder circuitry so that at least the major elements of an encryption and decryption system could be realized in either high speed discrete components or through a custom integrated chip. The shift program also could take various forms depending upon how often a shift is desired, the extent to which the shift order is itself varied, etc., microprocessor based, integrated circuits or other realizations being readily applicable, including shift register implementations as desired.

In Appendix 1 which follows, the transformations hereinbefore described are further analyzed and various properties and characteristics thereof are set forth. In Appendix 2, certain aspects of the method of block substitution of the parent application are reviewed, and the concepts of nonlinearity and nonlinear mappings of clear text to encrypted text (and vice versa) are presented. Nonlinearity in this sense means that the mappings of clear text to encrypted text (and from encrypted text to clear text) are nonlinear under the operation of bit-wise addition modulo 2. In that regard, it was pointed out that Figure 1 illustrates a many-one transformation of one set of three bit binary numbers to another set of binary numbers by a modulo 2 addition. This specific example maps the eight possible values of the three bit numbers in the first column by modulo 2 addition to six three bit numbers in column 3 representing six of the eight possible combinations, with two (100 and 011), each being repeated twice. Because two three bit numbers (010 and 101) map to the same three bit number (100), and two other three bit numbers (100 and 110) map to the same three bit number (010), the reverse mapping will have ambiguities, making the mapping illustrated in Figure 1 unsuitable for encryption and decryption purposes.

On the other hand, Figures 2 through 5 provide sets of equations for encryption of any of the eight possible three bit clear text words (column 1) to a corresponding nonambiguous encrypted text word (column 3). These equations remain valid by the interchanging of columns 1 and 3, and thus with this interchange, form the equations for the corresponding decryption in the same way that the equations before the interchange form the equations for encryption. However, the set of equations shown in each of Figures 2 through 5 are linear in the sense that the addition of any two equations within a given set of equations (eight equations for three bit numbers such as in Figures 2 through 5) is also one of the equations of the set. For instance, in Figure 2, while the addition of the first or null equation to any other equation yields that other equation and is thus trivial, the addition of the second and third equations provides the fourth equation, the addition of the third and fourth equation provides the second equation, the addition of the fourth and fifth equation provides the eighth equation, etc. Even when one adds modulo 2 one equation to itself, one obtains one of the eight equations, namely the null equation, as may occur when one adds more than two equations modulo 2 such as, by way of example, equations two, three and four, as the addition of equations two and three yields equation four, and equation four added to itself yields the null equation. In that regard, adding two equations modulo 2 may be considered equivalent to adding any greater number of equations, as either or both of the equations added may be considered to be the sum of two or more other equations. Further, there is no combination of equations the sum of which is not another equation in the given set. What is most significant from a cryptanalysis standpoint is that given the right three of the seven equations other than the null equation, the remaining four equations may be determined by the appropriate sums of the combinations of the three known equations. For instance, while the combinations of sums of equations two, three and four of Figure 2 cannot be used to generate the rest of the equations, equations two, three or four, and five, six, seven or eight can be so used. Taking for example, equations two, four and eight, the sum of equations two and four provides equation three, the sum of equations two and eight provides equation seven, the sum of equations two, four and eight provides equation six, and the sum of equations four and eight provides equation five. Also the foregoing rule, of course, applies to encryption of words of other bit lengths, the generating equations for the sixteen equations for encryption of a four bit word being determined by adding modulo 2 various combinations of four independent equations.

With respect to the set of equations in Figure 10, adding any two equations does not provide a third equation of the set, though adding 001 to each of the left hand columns of the Figure 10 again provides the null equation and the rest of the set of equations of Figure 5, which set is generatable by any three independent equations of the set. It is this ability to generate the remainder of the equations from a basic set of independent equations which the present invention is intended to avoid, the present invention doing so in an orderly and logical manner so that not only may the base set of linear equations be varied from time to time or dynamically in the various ways disclosed in the original application, but the resulting base set may also be nonlinearized from time to time or dynamically to a varying extent and in varying combinations, making cryptanalysis much more difficult than before.

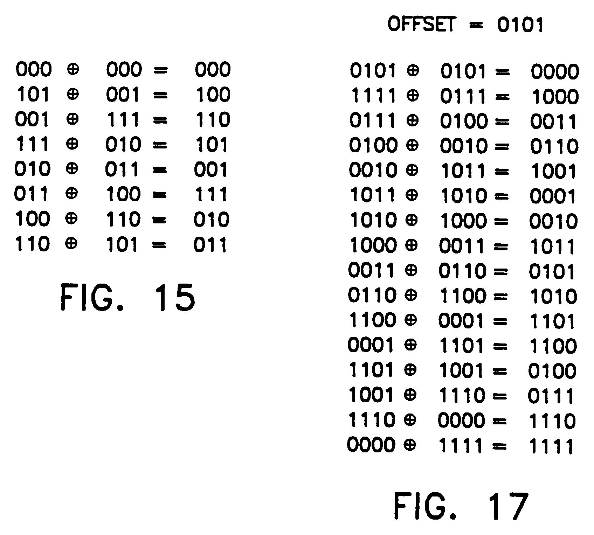

Referring again to Figure 2, if one rearranges the order of the equations, there is, of course, no change in the mapping of the numbers in column 1 to the numbers in column 3. Accordingly, the equations in Figure 2 may be rearranged as shown in Figure 15. In particular, it will be noted that, neglecting the null equation, the first number appearing in column 2 (001) occurs in the next line of column 1, the second number in column 2 (111) occurs in the third line of column 1, etc., the wraparound resulting in the last number in column 2 (101) falling on the first line of column 1 (again neglecting the null equation). The resulting organization of the equations is in the form illustrated in section 3.2 of Appendix 2, where in Figure 15, x₁ is 001 and xₘ is 101. Any set of equations for words (numbers) of any bit length having a null equation and 2ⁿ - 1 non-zero equations may be so arranged without any changing of the mapping defined thereby, as such an arrangement is a mere changing of the order of appearance of the equations and not a changing of any of the equations themselves.

It is shown in Section 3.2 of Appendix 2 that certain groups of such equations may be altered by rearrangement of the words appearing in columns 1 and 2 to provide correspondingly new modulo 2 addition equations, which when substituted for the original group of equations within the original set of equations still maintains a one to one mapping and thus is suitable for use in encryption and decryption. In that regard, the one to one mapping is preserved because the order of the multibit words appearing in columns 1 and 2 of the selected group of equations is changed, but not the words themselves, so that the group of words mapped and the group of words to which they are mapped by the selected equations has not been changed, though within those two groups, which word in column 1 maps to which word in column 3 has been changed. The net effect of these changed equations is that the same no longer are linear extensions of the unchanged equations, that is, the same can no longer be generated by the addition of two or more of the unchanged equations. This, therefore, breaks up the linearity of the original set, the possible extent of which will be subsequently discussed, making the cryptanalysis more difficult as desired.

It is shown in Section 3.2 of Appendix 2 that under certain conditions, groups of equations within a given set may be altered and used to replace the corresponding original group of equations within the original set so as to maintain a one to one mapping for the complete set, and at the same time break up the linear characteristic of the set of equations as hereinbefore described. These conditions are more specifically illustrated in equation form in Section 3.3 of Appendix 2, wherein the two possible modifications are illustrated in equation form. The basic concept is to take sums of consecutive triples of rows in the original set of equations, with the analysis in Section 3.2 of Appendix 2 showing that, as stated in Section 3.3, the nonlinearization by taking such consecutive triples of rows works if, and only if, a set of only three or four consecutive rows of the original set are used. If three consecutive rows are used, four rows are actually modified, namely the three consecutive rows of the original set, together with a fourth row corresponding to the vector sum modulo 2 of the three consecutive rows. The modification can be obtained by adding vectorially to each of the four rows, the following equation:${\text{(x}}_{\text{1}} {\text{⊕ x}}_{\text{2}} {\text{) ⊕ (x}}_{\text{1}} {\text{⊕ x}}_{\text{2}} \text{) = Θ}$

If four consecutive rows of the original set of linear equations are used, six rows of the original set of equations are modified, namely the four consecutive rows, together with the row representing the vector sum of the first three of the four consecutive rows, and the row corresponding to the vector sum of the last three of the four consecutive rows of the original set (e.g. the row corresponding to the sum of rows 1, 2 and 3, and the row corresponding to the sum of rows 2, 3 and 4, as shown in section 3.3 of Appendix 2). The modification in this case may be obtained by adding vectorially to the corresponding six rows the following:${\text{to rows 1 and q (x}}_{\text{1}} {\text{⊕ x}}_{\text{2}} {\text{) ⊕ (x}}_{\text{1}} {\text{⊕ x}}_{\text{2}} \text{) = Θ}$${\text{to rows 2 and 3 (x}}_{\text{1}} {\text{⊕ x}}_{\text{3}} {\text{) ⊕ (x}}_{\text{1}} {\text{⊕ x}}_{\text{3}} \text{) = Θ}$${\text{to rows 4 and q + 1 (x}}_{\text{2}} {\text{⊕ x}}_{\text{3}} {\text{) ⊕ (x}}_{\text{2}} {\text{⊕ x}}_{\text{3}} \text{) = Θ}$

The form of the equations above and the original equations shown in section 3.3 of Appendix 2 suggests that nonlinearization works if one takes the first, second, third and one other row of the original set of linear equations, or alternatively, if one takes the first, second, third, fourth and two other rows of the original set of linear equations. Since the method works because the equations in the original set as selected for modification are linear within themselves, equations once nonlinearized by the methods of the present invention may not be again used as part of the nonlinearization process. This would tend to suggest that only four or six equations could be nonlinearized by this process, which of course would be an insignificant number of the total equations for larger word sizes (for instance, a four bit word requires 16 equations, an eight bit word 256 equations, etc.). However, again referring to Figure 15, it is to be noted that which word or number in column 2 is to be selected from the non-null rows as x₁ is arbitrary. By way of example, if one selected 011 as x₁ rather than 001, the third non-zero line would become the first, the fourth non-zero line the second, the fifth non-zero line the third, the sixth non-zero line the fourth, the seventh non-zero line the fifth, the first non-zero line the sixth, etc., essentially shifting the lower five equations up and wrapping the upper two non-zero equations around, with the result that the equations themselves are not changed, nor is the ordering of the equations, but rather only the starting point in that sequence is changed. Such an arrangement of equations was shown in Figure 3, wherein x₁ = 100 and xₘ (= x₇) = 011. Thus the equations presented in section 3.3 of Appendix 2 are general in the sense that if three consecutive rows and the row corresponding to the sum of the three consecutive rows are to be modified (nonlinearized) any three consecutive rows may be so selected, limited only by the fact that none of the three selected nor the row corresponding to the sum of the three can have previously been nonlinearized as a result of an earlier selection. Similarly, if four consecutive rows plus the two sum rows hereinbefore described are selected, any four consecutive rows may be so used, again provided that none of the four selected nor of the two sum rows may have previously been nonlinearized by this process. To generalize the equations for nonlinearization, one need only consider x₁ as being the value in the second column of the first of the three or four successive rows selected, and renumbering values in each column accordingly.

It will be noted that the nonlinearization process is carried out on the equations other than the null equations. Since there are 2ⁿ - 1 such equations, wherein n is the bit length of the word used, there is necessarily an odd number of equations available for nonlinearization regardless of the value of n, whereas the nonlinearization process nonlinearizes an even number (4 or 6) equations at a time (obviously in a high speed system, apparatus may be provided to simultaneously nonlinearize different non-overlapping groups of a given set of linear equations, as the nonlinearization processes for non-overlapping groups are totally mutually independent, regardless of which process is used). Thus, it is clear that not all equations in any given linear set may be nonlinearized. Consequently, there is a question as to how many of the equations may be nonlinearized, and whether there is a logical manner of selecting equations for nonlinearization. These considerations are discussed in Sections 3.4 through 3.6 of Appendix 2. In general, while not all equations may be nonlinearized, normally a vast majority of the equations may be nonlinearized for word sizes of four or more bits, leaving the remaining nonlinearized equations of little significance, and perhaps if anything, possibly misleading from a cryptanalysis viewpoint. Further of course, it should be noted that varying from time to time or dynamically varying the number and identification of the rows to be nonlinearized and which nonlinearization technique is used further compounds the cryptanalysis problem, though such time varying or dynamically varying nonlinearization is not that difficult from a hardware standpoint (or software standpoint, if done under software control) as the starting set of linear equations (which themselves may be varied from time to time or dynamically, as herein before described) may be generated from a simple and readily variable generating function, which set of equations may be nonlinearized in both manner and extent utilizing logical processes, which manner and extent may each themselves be varied from time to time or dynamically.

As an example of the foregoing, attention is directed to the table on page 99 (the Appendix of Appendix 2) which provides the sixteen equations for the linear mapping of a four bit number or word to another four bit number or word utilizing a specific generating function. Note that these sixteen equations are organized in the manner indicated for the original equations in section 3.3 of Appendix 2. As noted in the Appendix of Appendix 2, it is easily verified that the sum of any two of the sixteen equations in Table 1 is another of the sixteen equations in accordance with the concept of linearity as used herein. Table 1 is nonlinearized and is presented in its nonlinearized form in Table 15 of the Appendix of Appendix 2. In particular, the nonlinearization is in accordance with the first method, namely, utilizing three consecutive rows of the original set of equations (neglecting the null equation), plus the row representing the sum of the first three rows. In that regard, the sum modulo 2 of the first three non-zero numbers in column 1 (1001, 0001 and 0010) is equal to 1010, the value in the eleventh row of the non-zero equations. Thus rows one, two, three and eleven are nonlinearized by adding modulo 2 x₁ ⊕ x₂ to each of columns 1 and 2 thereof. To be more specific, x₁ equals 0001 and x₂ equals 0010, so that x₁ ⊕ x₂ = 0011. Adding modulo 2 0011 to the first equation gives 1010 ⊕ 0010 = 1000 (1000 is the original value in column 3 for the first equation) as shown in Table 15 of the Appendix in Appendix 2. The same addition for the equations on lines 2, 3 and 11 carries out the transformation for these four lines. Similarly, if one adds lines 5, 6 and 7 of the non-zero equations, one obtains the equation of line 15 of the non-zero equations, the last non-zero equation shown on page Al. These four lines may be nonlinearized in the same manner as lines one, two, three and eleven, noting however that the applicable equation is effectively now:${\text{(x}}_{\text{5}} {\text{⊕ x}}_{\text{6}} {\text{) ⊕ (x}}_{\text{5}} {\text{⊕ x}}_{\text{6}} \text{) = Θ}$

With respect to further nonlinearization of the set of sixteen equations in Table 15 of the Appendix in Appendix 2, there are two other series of three consecutive equations in the table, specifically, lines 8, 9 and 10 and 12, 13 and 14 which might be considered. The modulo 2 sum of lines 8, 9 and 10 however, provide line 3 of the non-zero equations, a line already used, and the modulo 2 sum of lines 12, 13 and 14 provide line 7, another line already used. Accordingly, while two additional groups of three consecutive lines or three consecutive equations exist, the same cannot be used for further nonlinearization because the sum of either of the three is a line or equation which has already been nonlinearized.

As another example, note Table 4 set out in the Appendix of Appendix 2 hereof. This set of linear equations uses the same generating function but as applied to a new base, x₁ = 0011, x₂ = 0110, x₃ = 1100, x₄ = 1000, which when nonlinearized using the same set of equations as in the previous example (equations 1, 2, 3, 5, 6, 7, 11 and 15)
provides the nonlinear set of equations set forth below Table 4 of the Appendix of Appendix 2.

Finally, as a third example, note the example shown in Table 17 of the Appendix in Appendix 2, with the nonlinearized equations shown in Table 18 of the Appendix in Appendix 2. This example is an example of another nonlinearization of the table of 15 equations (together with the null equation) presented in Table 1 of the Appendix of Appendix 2, nonlinearized using a different basis, specifically four successive (non-zero) equations 1, 2, 3 and 4 together with the sum of 1, 2 and 3, namely equation 11, and the sum of equations 2, 3 and 4, namely equation 12, together with the three successive equations 13, 14 and 15 and the sum thereof, equation 8. The equations for nonlinearizing four consecutive equations plus the two modulo 2 sum equations of course have been given before herein and are set out in section 3.3 of Appendix 2. In particular, three different equations are used, one for rows 1 and q, one for rows 2 and 3, and one for rows 4 and q + 1. By way of example, taking row 1, zero is added to column 3 and x₁ ⊕ x₂ is added modulo 2 to each of columns 1 and 2 (the modulo 2 sum of anything to itself equalling zero). Since x₁ ⊕ x₂ = 0011, adding this to equation 1 yields the equation 1010 ⊕ 0010 = 1000, the first non-zero equation in the nonlinearized set of equation in Table 18 of the Appendix of Appendix 2. For row 2 of the linear set of non-zero equations, x₁ ⊕ x₃ is added to each of columns 1 and 2, namely 0001 ⊕ 0100 = 0101. Adding this to columns 1 and 2 of row 2 of the linear set of equations in Table 1 of the Appendix of Appendix 2 yields the fifth non-zero equation in the set of equations in Table 18. Finally, as an example of the use of the third equation for rows 4 and q + 1, x₂ ⊕ x₃ = 0010 ⊕ 0100 = 0110. Adding this, for example, to columns 1 and 2 of row 4 of the linear non-zero equations yields row 2 of the non-zero equations in the nonlinearized set of equations in Table 18. Of course all six of the applicable rows must be modified in accordance with the nonlinearization process. Thus, in this latter example, 10 of the equations are nonlinearized instead of the 8 in the prior example, and of course the resulting mapping from column 1 to column 3 is generally quite different for the two sets of equations.

Finally, the nonlinearized equations may be further modified by adding modulo 2 an offset to each of the first two columns. This, of course, is equivalent to adding the offset modulo 2 to itself which of course is 0 and therefore does not affect the numbers in the third column. By way of specific example, Figure 17 presents the set of equations of the third example described above and shown in Table 18 of the Appendix of Appendix 2 as modified by the addition of the offset 0101 to the first and second columns.

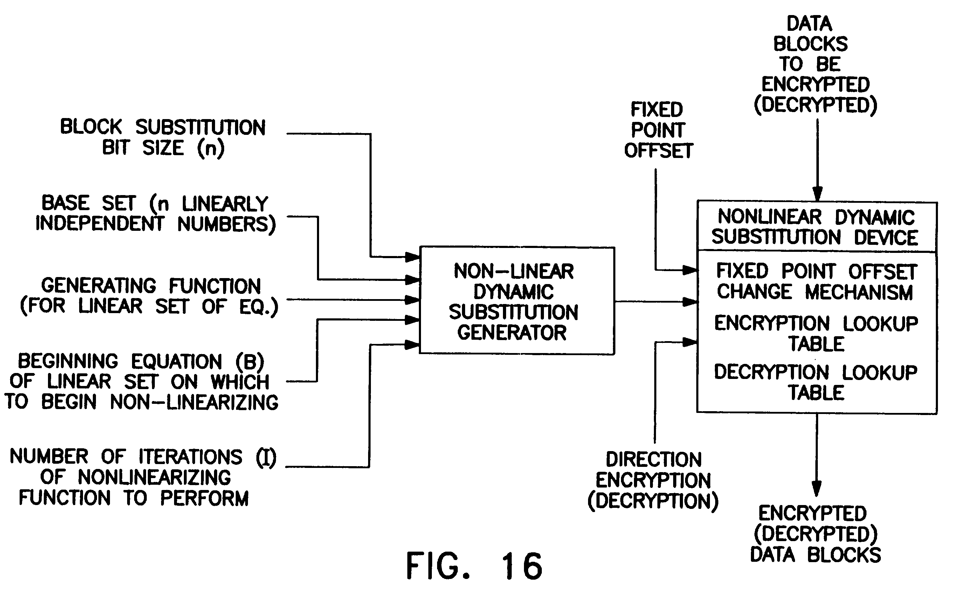

Figure 16 shows a block diagram of typical apparatus for encryption and decryption in accordance with the present invention. As may be seen in Figure 16, it is convenient to ultimately use a look-up table in the form of a read/write memory wherein the clear text data block or the encrypted text data block (both n bits long) is presented in parallel as the address to the memory with the data stored at the corresponding address corresponding to the encryption or decryption of the respective data block, respectively. For that purpose, it may be convenient to use a memory of twice the address space of that required for either encryption or decryption (e.g. n + 1 address bits) so that the memory address range is one bit wider than the data block to be operated on. In this manner, one bit of the memory address may be used to designate whether the operation is to be an encryption or a decryption operation. By way a specific example, the most significant bit of the memory address might be 0 to indicate a decryption process or a 1 to indicate an encryption process, with the decryption data stored in the lower half of the address range of the memory and the encryption data stored in the upper address range of the memory. Thus both encrytion and decryption may be done as desired by the look-up table by control of the single bit, and encryption or decryption of a block of n bits may be achieved in a single memory cycle.

Assuming that the mappings for encryption and decryption are to be changed periodically and/or dynamically, some method of altering the contents of the look-up table must be provided. While this could be done by specialized hardware, it is convenient to do the same by an appropriate processor under program control, as the alteration of the encryption and decryption schemes normally will occur far less frequently than the encryption and decryption process itself must be carried out. Accordingly, the same normally need not be accomplished with the same speed as encryption and decryption itself. Accordingly, the nonlinear dynamic substitution generator shown in Figure 16 may operate under program control based on various inputs thereto. In particular, the equation for encryption may readily be generated under program control given certain basic information defining the same, such as by way of example the block substitution bit size (n), the base set of n linearly independent numbers, the generating function, the beginning equation of the linear set on which to begin nonlinearizing, and the number of iterations of the nonlinearizing function to perform.

Once the offset has been applied to the nonlinearized equations, each number or block in column 3 is stored in the portion of the look-up table assigned to encryption at an address equal to the block in column 1 for the respective row. Thus, when a number or block in column 1 is applied as the address, the number read out of the memory is the number in column 3 for that row representing the respective encrypted block. For the decryption portion of the table, the process is reversed, in that the blocks in column 3 are used as memory addresses (more appropriately address portions, the full address including the address bit designating decryption) with the data stored at those addresses being the respective blocks in column 1. Thus, during decryption the memory is entered at the address defined by the encrypted block, with the data stored at the respective address being provided as the output corresponding to the associated clear text block. For convenience, detailed methods for encrytion and decryption are set out in Appendix 3.

Obviously the encryption and decryption processes could be carried out entirely under program control, as both processes simply involve logical manipulations given certain (variable) starting information. However, the speed with which encryption and decryption could be carried out would be very grossly reduced, as the processor would wind up regenerating the same encryption and decryption equations over and over again. In comparison, the use of the look-up table allows a one time determination of the full set of encryption and decryption equations, which information for any data block to be encrypted or de-encrypted is continuously available in a single memory cycle until such time as the equations are to be changed.

### APPENDIX 1

### UNBIASED BLOCK SUBSTITUTIONS

### ABSTRACT

A block substitution is a one-to-one mapping of the n-bit binary numbers onto themselves. Such a substitution or transformation can be represented by a permutation. It is shown that certain permutations of the n-bit binary numbers define a block substitution by modulo 2 addition of one permuted set of numbers to another. Such permutations are termed replicative. A subset of these have an additional feature which is that the equations which they define have an additive relationship when viewed as vectors. Such permutations are termed additive. An unbiased block substitution is defined. It is shown that substitutions defined by an additive permutation are unbiased and that any unbiased block substitution can be represented by a replicative permutation. Additive permutations are shown to form groups which retain the same properties. The conditions for existence of these additive permutations are established, some properties of the groups determined, and the number of such groups enumerated and compared with all possible permutations of the n-bit numbers.

### INTRODUCTION

A block substitution is the term usually applied to a one-to-one mapping of the n-bit binary numbers onto themselves. This mapping can be written as a pairing of the 2ⁿ n-bit numbers: 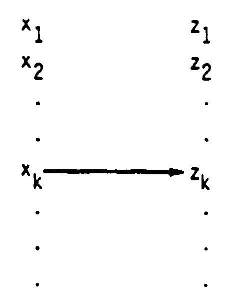 where each column is the set of the same 2ⁿ distinct n-bit numbers but written in different orders. Thus, this mapping can be tnought of as a permutation of the n-bit numbers written as: 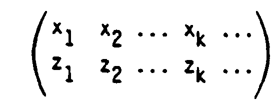 or (x₁ xᵢ xⱼ ...) ) for some set of indices. This usual notation for permutations simply means that x₁ → xᵢ, xᵢ → xⱼ, etc.

Going back to the column notation, one could define a set of simple equations from the original set and its image: 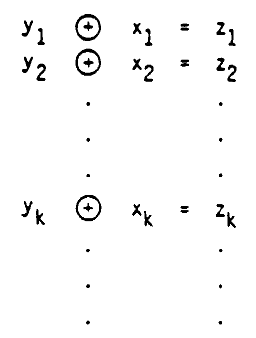 where ⊕ means modulo 2 addition (i.e., addition of corresponding digits without carrying). In general, the set {y₁, y₂ ...} will not all be distinct but in certain circumstances, they will be. When they are distinct, block substitutions can be generated by modulo 2 addition rather than by conventional means. The main tasks are to determine the circumstances, if any, in which this scheme works, how the substitutions can be quickly changed, and the lack of bias.

It is not obvious that block substitutions can ever be generated by modulo 2 addition. For example, consider the attempt to substitute one arrangement of 3-bit binary numbers for another by modulo 2 addition. This is shown in Figure 1. In column 3, on the right, 011 and 100 each appear twice, while 001 and 110 never appear. The numbers in column 1, on the left, acting on the numbers in column 2, in the center, constitute a transformation of the set of 3-bit binary words into themselves. This is a many-one transformation and is useless for block substitutions. 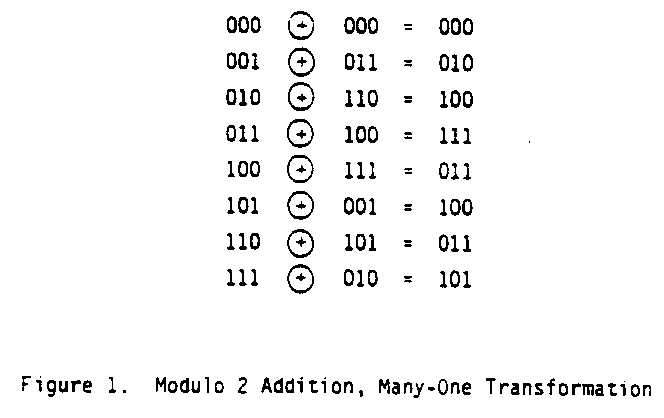 Trying another arrangement shown in Figure 2 gives a different result. In this case, the transformation is one-to-one from the 3-bit binary numbers onto themselves. Each column consists of all the 3-bit numbers exactly once.

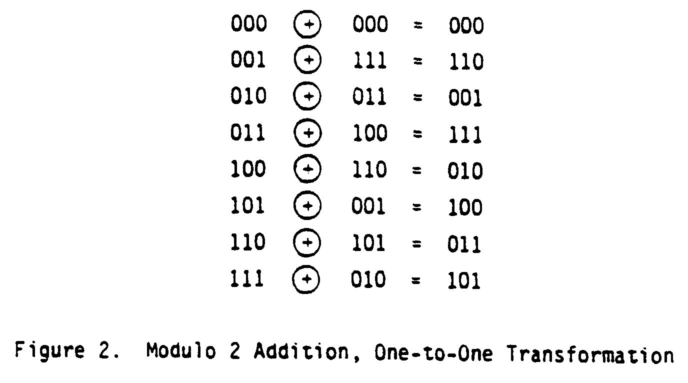

Definition: A replicative array of n-bit binary numbers is a set of 2ⁿ = m+1 equations:${\text{y}}_{\text{1}} {\text{⊕ x}}_{\text{1}} {\text{= z}}_{\text{1}} \text{.} \text{.} \text{.} {\text{y}}_{\text{m+1}} {\text{⊕ x}}_{\text{m+1}} {\text{= z}}_{\text{m+1}}$ where the sets {yₖ}, {xₖ}, and {zₖ} each consist of the 2ⁿ distinct n-bit binary numbers.

The set {yₖ} defines the mapping xₖ→zₖ. Since the yₖ take on all values, exactly one member of the set yⱼ = I = (0...0) the identity. Thus, xⱼ = Zⱼ is a fixed point and there is no other. Since each column consists of the distinct n-bit numbers, it is a permutation of each of the other two columns.

The first question is how to construct such a replicative array.

Proposition 1: A replicative array of n-bit binary numbers can be constructed from sums of any set of n+1 rows each of whose columns contain tne identity and n generators of Gₙ, the group of n-bit binary numbers.

Proof: Without loss of generality we can assume that the first n+1 rows have this property. Either one row is I = I ⊕ I or the identity occurs in three different rows. Assume z₁ = x₁ = y₁ = I. Then each set {z₂, ..., zₙ₊₁}, {x₂, ...., xₙ₊₁}, {y₂, ...., yₙ₊₁} is composed of n distinct generators of Gₙ. To construct tne remaining rows of the array, take modulo 2 sums of pairs of rows 2 through n+1, sums of triples of these rows, etc, and, finally, 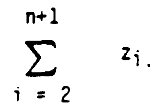 The number of additional rows constructed in this manner is: 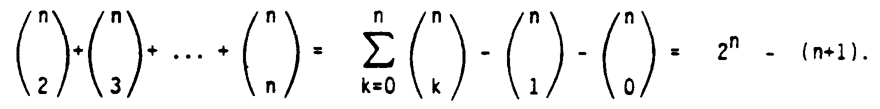 So the array is completely specified by this process. Since each of the zᵢ, xᵢ, and yᵢ for i > n+1 are different linear combinations of the generators, they will all be distinct, and the sets of 2ⁿ elements of {zᵢ}, {xᵢ} and {yᵢ} will each be a permutation of the n-digit binary numbers.

Now assume that z₁ = x₂ = y₃ = I. No pair of rows from the first tnree could be added together because this would cause a duplication of z₁, x₂, or y₃ in one of the columns. We avoid this problem by adding together odd numbers of rows from the initial n+1 rows. Thus we have: 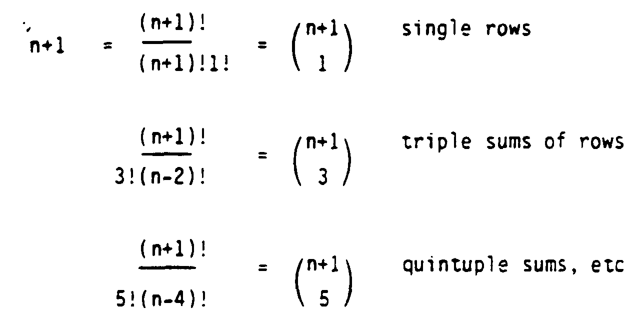 Keeping in mind the general identity for binomial coefficients: 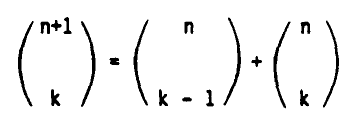 we can sum the number of rows generated this way, for n odd: 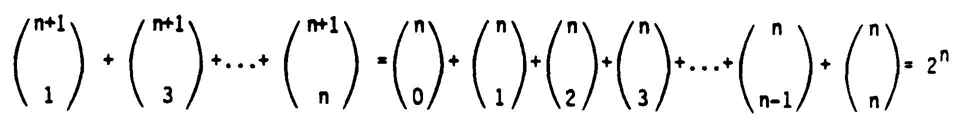 For n even, the final term in the sum on the left is: 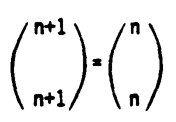 so that it again adds to 2ⁿ rows.

As in the first case, the column elements are 2ⁿ distinct linear combinations of the generators and the identity. (Q.E.D.)

Proposition 1 gives a method of generating replicative arrays but does not imply that all can be generated this way. It is convenient to introduce another definition. The individual rows of the replicative array can be thought of as vectors which can be added to each other by adding the corresponding scalar components modulo 2.

Definition: A replicative array, which has the property that the vector sum modulo 2 of any odd number of rows is again another row in the original array, will be called an additive array.

Clearly, replicative arrays generated as in proposition 1 are additive arrays, but there are others as well which do not have this additive property.

Proposition 2: Any additive array of n-bit numbers with fixed row I ⊕ I = I has a maximal set of n linearly independent rows.

Proof: Let k be the maximal number of independent rows and assume k < n. The additive array has exactly 2ⁿ rows including the identity. By proposition 1 these k rows generate an array of 2^{k} rows. Thus, the remaining 2ⁿ - 2^{k} rows must be duplicates, and the array cannot be additive.

If k = n+q where q is a positive integer, then a maximal set of independent rows will generate 2^{n+q} rows. In each column, each of the 2ⁿ distinct n-bit numbers will appear 2^{q} times. This 2ⁿ additive array is embedded in the array with 2^{n+q} rows. One can extract it by making a proper selection of rows from the larger array. Choose the first row for the additive array, for example, x₁ ⊕ y₁ = z₁. x₁ will appear 2^{q}-1 more times in column 1, similarly for y₁ in column 2 and z₁ in column 3. Since the same combination of x₁ and y₁ will not occur again, 3 (2^{q}-1) rows must be eliminated from further consideration for the additive array. From the second choice, z₂, one must eliminate 2^{q}-1 rows containing z₂ in column 3, but since x₂ or y₂ may have appeared in a row already eliminated, we can only say that in the second step, the number of rows eliminated is ≥ 2^{q-}1. For each succeeding step ≥ 2^{q}-1 rows are eliminated. The process is complete after 2ⁿ steps. 2ⁿ rows have been selected and the number of rows eliminated is:${\text{≥ 3(2}}^{\text{q}} {\text{-1) + (2}}^{\text{n}} {\text{-1) (2}}^{\text{q}} {\text{-1) = (2}}^{\text{n}} {\text{+2) (2}}^{\text{q}} \text{-1)}$ Thus, the total number of rows selected and eliminated is:${\text{≥ 2}}^{\text{n}} {\text{+ (2}}^{\text{n}} {\text{+2) (2}}^{\text{q}} {\text{-1) = 2}}^{\text{n+q}} {\text{+ 2(2}}^{\text{q}} {\text{-1) > 2}}^{\text{n+q}} \text{.}$ So there are not sufficient rows to complete this process. This contradiction implies k = n. (Q.E.D.)

The above may seem to be rather academic, but it shows how to generate additive arrays and the resulting substitutions, and also shows that this process gets them all. But these additive arrays have another very useful property described in the next proposition.

Proposition 3: An additive array with fixed identity row is a group.

Proof: Rows in the array can be thought of as vectors and added by respective components: 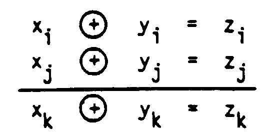 where xᵢ ⊕ xⱼ = xₖ, etc. This is the group operation. Each row in the array is the sum of some subset of the n generators. The sum of two rows is also the sum of some subset of the generators and, thus, is in the array which consists of all possible such sums. The group identity is the row I = I ⊕ I. (Q.E.D.)

Each pair of columns defines a permutation as follows: take a number in one column, e.g., y₁ in column 2, and find the same number in column 1. It will have a partner, say y₂, in column 2. Again, locating y₂ in column 1, there will be a partner y₃ in column 2. This defines a permutation y₁→y₂→y₃→... from column 2 to column 1. Six such permutations, three of which are distinct, are defined by the additive array.

Definition: A permutation defined by an additive array will be called an additive permutation.

Initially, consider the case where the fixed point is I, and let yₘ₊₁ = xₘ₊₁ = zₘ₊₁ = I. The order of rows in the additive array is arbitrary. For the second row, one could select yⱼ = x₁ and for the third row, yₖ = xⱼ, etc. Redesignating the indices, one obtains:$\text{I ⊕ I = I} {\text{x}}_{\text{m}} {\text{⊕ x}}_{\text{1}} {\text{= z}}_{\text{1}} {\text{x}}_{\text{1}} {\text{⊕ x}}_{\text{2}} {\text{= z}}_{\text{2}} {\text{x}}_{\text{2}} {\text{⊕ x}}_{\text{3}} {\text{= z}}_{\text{3}} \text{.} \text{.} \text{.}$ The order of the numbers in columns 1 and 2 now represents the permutation defined by those two columns which leads to:

Definition: An additive array whose rows are arranged in the order defined by the permutation between columns 1 and 2 will be said to be normalized.

Proposition 4: An additive array with fixed identity can be written in the form:$\text{I ⊕ I = I} {\text{x}}_{\text{m}} {\text{⊕ x}}_{\text{1}} {\text{= x}}_{\text{1-p}} {\text{x}}_{\text{1}} {\text{⊕ x}}_{\text{2}} {\text{= x}}_{\text{2-p}} \text{.} \text{.} \text{.} {\text{x}}_{\text{m-1}} {\text{⊕ x}}_{\text{m}} {\text{= x}}_{\text{m-p}}$ where p is an integer.

Proof: In normalized form the array can be written:$\text{I ⊕ I = I} {\text{x}}_{\text{m}} {\text{⊕ x}}_{\text{1}} {\text{= z}}_{\text{1}} {\text{x}}_{\text{1}} {\text{⊕ x}}_{\text{2}} {\text{= z}}_{\text{2}} \text{.} \text{.} \text{.} {\text{x}}_{\text{m-1}} {\text{⊕ x}}_{\text{m}} {\text{= z}}_{\text{m}}$ Since the array is a group, it can be regenerated by taking sums of successive pairs of rows to obtain:$\text{I ⊕ I = I} {\text{(x}}_{\text{1}} {\text{⊕ x}}_{\text{m}} {\text{) ⊕ (x}}_{\text{1}} {\text{⊕ x}}_{\text{2}} {\text{) = (z}}_{\text{1}} {\text{⊕ z}}_{\text{2}} \text{)} {\text{(x}}_{\text{1}} {\text{⊕ x}}_{\text{2}} {\text{) + (x}}_{\text{2}} {\text{⊕ x}}_{\text{3}} {\text{) = (z}}_{\text{2}} {\text{⊕ z}}_{\text{2}} \text{)} \text{.} \text{.} \text{.} {\text{(x}}_{\text{m-1}} {\text{⊕ x}}_{\text{m}} {\text{) ⊕ (x}}_{\text{m}} {\text{⊕ x}}_{\text{1}} {\text{) = (z}}_{\text{m}} {\text{⊕ z}}_{\text{1}} \text{)}$ The rows in the new array must be the same (but rearranged) as those in the original. From the diagonal structure on the left, the order of the rows must be the same although the starting point in the sequence of rows has been shifted by some unspecified number of positions. Column 2 in the new array is:${\text{z}}_{\text{2}} {\text{z}}_{\text{3}} \text{.} \text{.} \text{.} {\text{z}}_{\text{1}}$ which is the same as column 3 in the original array. So column 3 in the original array is the same as column 2 in the original array but shifted by some unspecified number of positions p. (Q.E.D.)

As will be seen later, the shift p can take on only certain values. So far, no means has been found to determine p in advance or from a knowledge of p, to determine the array, except for special cases. However, there are some rules for eliminating possible values of p and for pairing permissible values. The shift p determines whole classes of arrays and substitutions. So far, all possible values of p have been found for block size n ≤ 8.

Proposition 5: If g is a maximal length additive permutation of n-bit binary numbers with fixed identity, then for any power s of the permutation g, g^{s} is also additive.

Proof: g is defined by columns 1 and 2 of the following additive array, omitting the identity:${\text{x}}_{\text{m}} {\text{⊕ x}}_{\text{1}} {\text{= x}}_{\text{1-p}} {\text{x}}_{\text{1}} {\text{⊕ x}}_{\text{2}} {\text{= x}}_{\text{2-p}} \text{.} \text{.} \text{.} {\text{x}}_{\text{m-1}} {\text{⊕ x}}_{\text{m}} {\text{= x}}_{\text{m-p}}$ The array which defines g^{s} is:${\text{x}}_{\text{1-s}} {\text{⊕ x}}_{\text{1}} {\text{= w}}_{\text{1}} {\text{x}}_{\text{2-s}} {\text{⊕ x}}_{\text{2}} {\text{= w}}_{\text{2}} \text{.} \text{.} \text{.} {\text{x}}_{\text{m-s}} {\text{⊕ x}}_{\text{m}} {\text{= w}}_{\text{m}}$ As in the proof of proposition 4, from the group structure of the array for g, g can be regenerated by taking the sums of the m pairs of rows whicn are s spaces apart:${\text{(x}}_{\text{m}} {\text{⊕ x}}_{\text{s}} {\text{) ⊕ (x}}_{\text{1}} {\text{⊕ x}}_{\text{s+1}} {\text{) = w}}_{\text{1}} {\text{⊕ w}}_{\text{s+1}} {\text{(x}}_{\text{1}} {\text{⊕ x}}_{\text{s+1}} {\text{) ⊕ (x}}_{\text{2}} {\text{⊕ x}}_{\text{s+2}} {\text{) = w}}_{\text{s}} {\text{⊕ w}}_{\text{s+2}} \text{.} \text{.} \text{.} {\text{(x}}_{\text{m-1}} {\text{⊕ x}}_{\text{s+m-1}} {\text{) ⊕ (x}}_{\text{m}} {\text{⊕ x}}_{\text{s+m}} {\text{) = w}}_{\text{m}} {\text{⊕ w}}_{\text{s+m}}$ From the diagonal structure on the left, it is clear that columns 1 and 2 are in the same order as before but with a different starting point, i.e., the array has been rotated. Noting that xₛ₋ₛ = xₘ, from the array for g^{s}, xₘ ⊕ xₛ = wₛ Thus, column 1 (or column 2) of the rotated array for g consists of the set {w₁, ..., wₘ} which is a displaced or rotated form of {x₁, ..., xₘ}. (Q.E.D.)

This shows that the general form of a row in the additive array for g^{s} is:${\text{x}}_{\text{k-s}} {\text{⊕ x}}_{\text{k}} \text{= x} {\text{}}_{{\text{k-p}}_{\text{s}}}$ where pₛ is the shift corresponding to the power s. pₛ is related to the basic shift p and is different for each value of s. It is important to know these shifts and their sequences when changing from one substitution to another in the same permutation group. More will be said about this later.

In proposition 5, the property of being additive is necessary. Examples can be shown of replicative permutations g which are not additive and for which g^{s} is not replicative.

Proposition 5 is also true even if g is not a maximal length permutation. The presence of cycles slightly complicates the proof. However, there is little practical interest in starting with substitutions corresponding to non-maximal permutations because powers will not generate the full group. The permutations which have fixed points other than the identity also form groups. However, the additive arrays which generate them are not groups.

The next step is to show that these groups of permutations and the corresponding substitutions have the highly desirable property of yielding all possible input/output pairs.

Since each additive permutation is generated by an array in which pairs of columns keep exactly one element fixed, each permutation will keep one of the 2ⁿ binary words fixed. Thus, these permutations not only belong to the symmetric group of all permutations on 2ⁿ elements, but they also belong to the subgroup Pₘ of permutations on m = 2ⁿ-1 elements. All powers of a given permutation will form a group. The order of the permutation is the least common multiple of its cycles, and the order of the group is the number of distinct permutations in it. A permutation is said to be regular if all its cycles are the same length.

An important property for a group of permutations is transitivity. A transitive group has at least one permutation which transforms any element or word into any other.

Proposition 6: If G is a subgroup of Pₘ which is generated by powers of an additive permutation g, where g is of order m = 2ⁿ-1, then G is transitive on the 2ⁿ-1 non-fixed words.

Proof: Omitting the single cycle permutation (j) corresponding to the fixed word, xⱼ, G is a subgroup of permutations on the 2ⁿ-1 n-bit words that are held fixed. Since the m powers of g {g, g², g³, .... g^{m} = I} generate G, its order |G| = m. Let G₁ be the subgroup of G which holds fixed one of the 2ⁿ-1 n-bit words. Since this is a group of additive permutations, G₁ = {I} the identity permutation only. So G₁ has order |G₁| = 1 and the index of G₁ in G $\frac{\text{|G|}}{{\text{|G}}_{\text{1}} \text{|}}$ = m. So G is transitive. (Q.E.D.)

### ADDITIVE ARRAYS WITH OTHER FIXED POINTS

One can generate additive arrays with a fixed element other than the identity by simply adding a fixed binary number to each number in column 1 and column 2. For example, let H be the array (and group) as written in proposition 4, and generate a new array H' as follows:

| H | H' |
|---|---|
| I ⊕ I = I | w ⊕ w = I |
| xₘ ⊕ x₁ = x₁₋ₚ | (xₘ ⊕ x) ⊕ (x₁ ⊕ w) = x₁₋ₚ |
| x₁ ⊕ x₂ = x₂₋ₚ | (x₁ ⊕ w) ⊕ (x₂ ⊕ w) = x₂₋ₚ |
| . | . |
| . | . |
| . | . |
| xₘ₋₁ ⊕ xₘ = xₘ₋ₚ | (xₘ₋₁ ⊕ w) ⊕ (xₘ ⊕ w) = xₘ₋ₚ |

Clearly, H' has 2ⁿ rows and the sum of any pair or even number of rows will be in H since the w's will cancel out. If any odd number of rows in H' are summed, it will result in a row in H' because it is equivalent to the sum of rows in H plus the row w ⊕ w = I. Thus, H∪H' has 2ⁿ⁺¹ elements, is closed under addition of rows, and contains the identity I ⊕ I = I. Thus, H∪H' is a group, H is a maximal subgroup, and H' = $\overline{\text{H}}$ is the relative complement of H.

We can shift column 1 in H' to obtain the array corresponding to a power of the permutation defined by the original array. A typical row is:${\text{(x}}_{\text{k-j}} {\text{⊕ w) ⊕ (x}}_{\text{k}} {\text{⊕ w) = x}}_{\text{k}} {\text{- p}}_{\text{j}}$ This is the image of the corresponding row in the jth power of H. So the permutation defined by H' is additive and so are its powers.

Now, suppose that we have an additive array with 2ⁿ rows for which I is not fixed. Further, assume that the array contains sums of all odd combinations of n+1 linearly independent rows. As in the proof of proposition 1, this generates exactly 2ⁿ rows. Thus, no sums of even sets or rows can be in the array. Since I occurs once in column 3, there is one row of the form w ⊕ w = I. Adding it to each of the single rows, including itself, generates an additive array of 2ⁿ rows with fixed identity.

Thus, there is a one-to-one correspondence between additive arrays with fixed identity and additive arrays with another fixed number.

Thus, all the additive arrays of interest for use as block substitutions have either fixed identity or can be derived from such arrays as described above. In what follows, additive arrays will have fixed identity unless otherwise specified. Typically, the row I ⊕ I = I will be omitted.

### GENERATION OF ADDITIVE ARRAYS

It is helpful to know something about the distribution of independent rows or generators in the array.

Proposition 7: In a maximal additive array with fixed I, on the n-bit binary numbers, any n consecutive rows are generators.

Proof: Consider the first n rows:${\text{x}}_{\text{m}} {\text{⊕ x}}_{\text{1}} {\text{= x}}_{\text{1-p}} \text{.} \text{.} \text{.} {\text{x}}_{\text{n-1}} {\text{⊕ x}}_{\text{n}} {\text{= x}}_{\text{n-p}}$ If these are not independent then 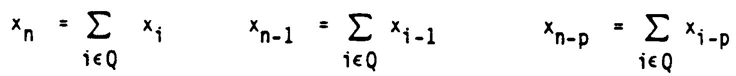 where Q is a subset of {1, ...., n-1} with s ≤ n-1 elements. The next row in the array will be: xₙ ⊕ xₙ₊₁, = xₙ₊₁₋ₚ. Since the array is an additive group, it must be true that 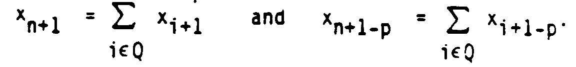 In that case applying this to each successive row, one could generate the entire array witn s < n generators. (Q.E.D.)

This is enough for our purposes, but it can also be shown that any n equally spaced rows are generators.

### THE SHIFT p

In what follows, it is assumed, unless otherwise stated, that the additive arrays are maximal, normalized, and with fixed identity. For brevity, the row I ⊕ I = I will be omitted. The general form for the kth row of the basic array is:${\text{x}}_{\text{k-1}} {\text{⊕ x}}_{\text{k}} {\text{= x}}_{\text{k-p}}$ For the array corresponding to the power s of the basic permutation, the kth row is:${\text{x}}_{\text{k-s}} {\text{⊕ x}}_{\text{k}} \text{= x} {\text{}}_{{\text{k-p}}_{\text{s}}}$ As usual, n is the block size and m = 2ⁿ-1. By definition, p₁ ≡ p. It is important to know something about the values of pₛ in order to use the block substitutions which they generate. It is obvious that pₛ ≠ pₜ if s ≠ t.

Proposition 8: p ≥ n

Proof: The (p+1)st row of the basic array is:${\text{x}}_{\text{p}} {\text{⊕ x}}_{\text{p+1}} {\text{= x}}_{\text{p+1-p}} {\text{- x}}_{\text{1}}$ If p+1 ≤ n, this implies that the first n rows are dependent which contradicts proposition 7. (Q.E.D.)
Note: Since s is a power of a permutation g of order m, if s = m+k${\text{g}}^{\text{m+k}} {\text{= g}}^{\text{m}} {\text{ο g}}^{\text{k}} {\text{= I ο g}}^{\text{k}} \text{.}$ So the exponents can be expressed modulo m.

Proposition 9: If p is an allowable value for the shift, so is $\overline{\text{p}}$ = 2ⁿ-p.

Proof: In the normalized array, the first column is displaced down one place with respect to column 2. The third column is displaced down p places (the shift) with respect to column 2 and p-1 places from column 1. If we interchange columns 1 and 2 and turn the resulting array upside down (i.e., reverse the order of the rows) then in the new array, the third column is shifted down m-(p-1) = 2ⁿ-p places with respect to column 2. Since only the order has been changed, the new array is equivalent to the original in the sense that it will generate permutations from the same group. (Q.E.D.)
Note: Since $\overline{\text{p}}$ ≥ n, p ≤ 2ⁿ-n.

Proposition 10: If the power s = 2^{r} for some integer r ≥ 0, pₛ = sp.

Proof: If r = 1, s = 2 and xₖ₋₂ ⊕ xₖ = x_{k-p₂}. One can write:${\text{x}}_{\text{k-2}} {\text{⊕ x}}_{\text{k}} {\text{= x}}_{\text{k-2}} {\text{⊕ x}}_{\text{k-1}} {\text{⊕ x}}_{\text{k-1}} {\text{⊕ x}}_{\text{k}} \text{.}$ Considering k-1 and k-p as indices,${\text{x}}_{\text{k-2}} {\text{⊕ x}}_{\text{k}} {\text{= x}}_{\text{k-1-p}} {\text{⊕ x}}_{\text{k-p}} {\text{= x}}_{\text{k-p-p}} {\text{= x}}_{\text{k-2p}} \text{.}$ So p₂ = 2p and the statement is true for r = 1.${\text{Assume that for some s = 2}}^{\text{r}} {\text{, p}}_{\text{s}} {\text{= 2}}^{\text{r}} {\text{p. 2}}^{\text{r+1}} {\text{= 2}}^{\text{r}} {\text{+ 2}}^{\text{r}} \text{.}$ Then,$\text{x} {\text{}}_{{\text{k-2}}^{\text{r+1}}} {\text{⊕ x}}_{\text{k}} \text{= x} {\text{}}_{{\text{k-2}}^{\text{r}} {\text{-2}}^{\text{r}}} {\text{⊕ x}}_{\text{k}} \text{= x} {\text{}}_{{\text{k-2}}^{\text{r}} {\text{-2}}^{\text{r}}} \text{⊕ x} {\text{}}_{{\text{k-2}}^{\text{r}}} \text{⊕ x} {\text{}}_{{\text{k-2}}^{\text{r}}} {\text{⊕ x}}_{\text{k}} \text{= x} {\text{}}_{{\text{k-2}}^{\text{r}} {\text{-2}}^{\text{r}} \text{p}} \text{⊕ x} {\text{}}_{{\text{k-2}}^{\text{r}} \text{p}} \text{= x} {\text{}}_{{\text{k-2}}^{\text{r}} {\text{p-2}}^{\text{r}} \text{p}} \text{= x} {\text{}}_{{\text{k-2}}^{\text{r+1}} \text{p}} \text{. (Q.E.D)}$

There are other constraints on p, the shift in the third column. If g is the permutation defined by columns 2 → 1 of the additive array, then the permutation defined by columns 1 → 3 is g^{p-1} and by columns 3 → 2, is g^{m-p}. These permutations are obviously commutative and g ο g^{p-1} ο g^{m-p} = g⁰ = I, the identity permutation.

The sum of the exponents 1 + (p-1) + (m-p) ο 0 mod m. Clearly, 1 < p < m. More generally, for a power g^{s}, the corresponding permutations are:${\text{g}}^{\text{s}} {\text{ο g}}^{\text{p}} {\text{s}}^{\text{-s}} {\text{ο g}}^{\text{m-p}} \text{s = I}$ Then s + (pₛ-s) + (m-pₛ) ≡ 0 mod m and pₛ ≠ s, m.

Proposition 11: If an additive array generates the power s of the basic permutation in two pairs of columns, it generates this in all three columns and 3s ≡ 0 mod m.

Proof: If two of the three permutations are of the same power, the array can be arranged so that typical rows are:${\text{x}}_{\text{k-s}} {\text{⊕ x}}_{\text{k}} {\text{= x}}_{\text{k+s}} \text{.} \text{.} \text{.} {\text{x}}_{\text{k}} {\text{⊕ x}}_{\text{k+s}} {\text{= x}}_{\text{k+2s}}$ By the group property, adding these together will give another row in the same array:${\text{x}}_{\text{k+s}} {\text{⊕ x}}_{\text{k+2s}} {\text{= (x}}_{\text{k}} {\text{⊕ x}}_{\text{k+s}} {\text{) ⊕ (x}}_{\text{k}} {\text{⊕ x}}_{\text{k-s}} \text{)} {\text{= x}}_{\text{k+s}} {\text{⊕ x}}_{\text{k-s}}$ which implies that xₖ₊₂ₛ = xₖ₋ₛ and that 3s ≡ 0 mod m. This will occur only if 3 | m, in which case, pₛ = -s ≡ 2s mod m, and pₛ-s = 2s-s = s, m-pₛ = s. (Q.E.D.)

Corollary: If an additive array generates the same permutation with eacn pair of columns, the permutation is of order 3.

Proof: If h = g^{s} is generated as in proposition 11, then h³ = g^{3s} = I. (Q.E.D.) If pₛ = 2s, $\frac{\text{m+s}}{\text{2}}$ or m-s, the same permutation will be generated, so if 3 m, pₛ ≠ {s, 2s, $\frac{\text{m+s}}{\text{2}}$, m-s, m}.

There are a number of miscellaneous facts to help select or eliminate candidates for the shift, but so far insufficient rules have been found to fully determine the shift pattern. Some of the facts are:
1. If Pₛ = t, then pₜ = s by symmetry
2. If p = 2^{t}, then${\text{x}}_{\text{k-1}} {\text{⊕ x}}_{\text{k}} {\text{⊕ x}}_{\text{k-p}} {\text{⊕ x}}_{\text{k-2}} {\text{t = x}}_{\text{k-2}} {\text{t}}_{\text{p}} {\text{= x}}_{\text{k-2}} \text{2t}$ which is possible only if 2^{2t} ≡1 modulo m.
3. If p = 2^{t}+1, then${\text{x}}_{\text{k}} {\text{= x}}_{\text{k-1}} {\text{⊕ x}}_{\text{k-1-2}} {\text{t = x}}_{\text{k-1-2}} {\text{t}}_{\text{p}} {\text{= x}}_{\text{k-1-2}} {\text{t}}_{\text{(2t+1)}}$ which is possible only if 2^{2t} + 2^{t} + 1 ≡ 0 modulo m.
4. If p | m then $\frac{\text{m}}{\text{p}}$ ≠ 2^{t} -1 since otherwise, 2^{t}p = m+p and${\text{x}}_{\text{k}} {\text{⊕ x}}_{\text{k-2}} {\text{t = x}}_{\text{k-2}} {\text{t}}_{\text{p}} {\text{= x}}_{\text{k-m-p}} {\text{= x}}_{\text{k-p}} {\text{= x}}_{\text{k}} {\text{⊕ x}}_{\text{k-1}}$ and t = 0.

### ENUMERATION OF MAXIMAL ADDITIVE PERMUTATIONS

The additive arrays, by convention, have been constructed according to the permutation defined by columns 1 and 2. If the permutation is of maximal length (i.e., a permutation of m m = 2ⁿ-1 elements with no subcycles) the array will be maximal also in the sense that it has no distinct self-contained blocks. Conversely, the maximal array will generate a maximal permutation. However, powers of a maximal permutation may have cycles. This will be the case unless the maximal length permutation is of prime order. Thus, no general conclusions can be drawn about the permutations generated by other pairs of columns.

If all six of the permutations generated by the additive array have the same cycles, the array will have corresponding cycles in the form of disjoint subarrays of the same length in which each column has the same elements. If the basic permutation generated by columns 1 and 2 has a cyclical structure not shared by the other permutations, then there will be disjoint subarrays or blocks in the array in which the elements in column 3 will be distinct from those in columns 1 and 2.

It is also obvious that any maximal length additive permutation can be used to generate a maximal array. Thus, initially considering arrays and permutations with fixed identity, there is a one-to-one correspondence between maximal length permutations and columns 1 and 2 of maximal arrays and, hence, with the array as an entity.

Proposition 12: For n-bit binary numbers, the number of maximal length additive arrays with fixed identity for a given value of the shift p, is

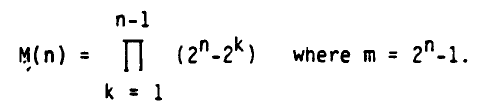

Proof: Let Q(n) be the number of distinct sets of generators of the n-bit binary numbers. Each set of generators will generate a maximal array. However, the order in which the generators are used makes a difference. This is because the column 3 lead term xₘ = f (x₁, ... xₙ) depends on the relative orders of the generators. There are n! such orders. Once an array is generated, the starting row of the array or starting point of the permutation is irrelevant. For example, if the first row is: xₘ ⊕ x₁ = x₁₋ₚ it could be circulated to the bottom and instead start with: x₁ ⊕ x₂ = x₂₋ₚ so the process is redundant by a factor of m = 2ⁿ-1.
Therefore:$\text{M(n) =} \frac{\text{n!}}{\text{m}} \text{Q(n)}$ Assume q(n, k) = $\frac{\text{1}}{\text{k!}}$ 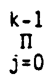 (2ⁿ-2^{j}) is the number of independent k-tuples which can be selected from n-bit words. Clearly, it is true for k = 1 or k = 2. n-tuples can be constructed by adjoining a single n-bit word to an (n-1)-tuple. There are m such words which could be adjoined. However. m = 2ⁿ-1 must be diminished by eliminating the 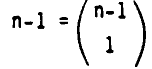 words which duplicate those in the (n-1)-tuple, by the 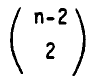 words which are sums of pairs of words in the (n-1)-tuple, etc, and finally by the 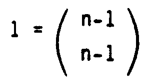 word which is the sum of all words in the (n-1)-tuple. Thus, m must be diminished by

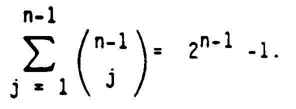

The number of words to be adjoined to the (n-1)-tuples = 2ⁿ-1-(2ⁿ⁻¹-1) = 2ⁿ-2ⁿ⁻¹. However, each n-tuple could be generated by n different (n-1)-tuples, so that, 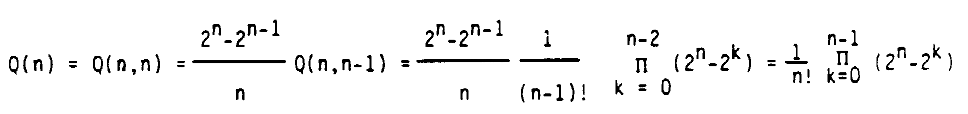 Thus, 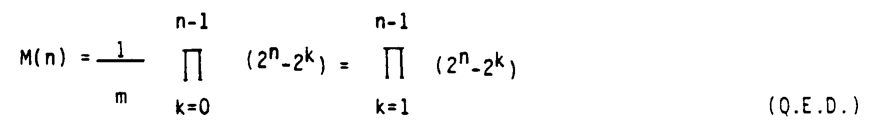 M(n) can be rewritten in a form easier to compute: 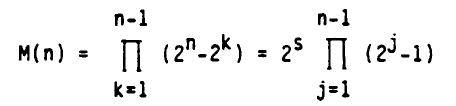 where s = $\frac{\text{n(n-1)}}{\text{2}}$. There is a simple recursive relationship:${\text{M(n+1) = 2}}^{\text{n}} {\text{(2}}^{\text{n}} \text{-1) M(n)}$

Unless m is prime, the permutation group will contain some permutations which are not maximal and, thus, will have some proper cycles. These will be powers g^{s} of a maximal permutation g where s is a divisor of m. These can be enumerated by counting the number of values of s which are divisors of m-1.

In a group of additive permutations of n-bit numbers with fixed I, there are L(n) maximal permutations and S(n) non-maximal permutations.${\text{L(n) + S(n) = m-1 = 2}}^{\text{n}} \text{-2}$ While there are 2ⁿ! permutations on the set of n-bit numbers, there are only 2ⁿ⁻¹! which give distinct substitutions because the starting point in the permutation does not make any difference. In the maximal additive array, we can cycle the order of the rows, other than the fixed row, and not change the substitution. These additive arrays generate permutations which are a subset of all possible permutations having a single fixed point. If F(n) is the total number of permutations holding any one of the 2ⁿ words fixed, then${\text{F(n) = 2}}^{\text{n}} {\text{(2}}^{\text{n}} \text{-2)! =} \frac{{\text{2}}^{\text{n}} \text{!}}{\text{m}}$

For convenience, a number of other terms can be defined. They are as follows:
- Nₚ(n) -: the number of distinct values of p₁, the basic shift in column 3 of a maximal additive array of n-bit numbers.
- M(n) -: the number of maximal additive permutations for a given p and a given fixed point. It is derived in proposition 12.
- T(n) -: the total number of additive permutations for a given p and a given fixed point. If m = 2ⁿ-1 is prime, then T(n) = M(n).

In general:$\text{T(n) =} \frac{\text{m-1}}{\text{L(n)}} \text{M(n).}$
- H(n) -: the total number of additive permutations on n-bit numbers:${\text{H(n) = 2}}^{\text{n}} {\text{N}}_{\text{p}} \text{(n) T(n).}$
- G(n) -: the number of groups of additive permutations on n-bit numbers:$\text{G(n) =} \frac{\text{H(n)}}{\text{m-1}} \text{=} \frac{{\text{2}}^{\text{n}} {\text{N}}_{\text{p}} \text{(n)M(n)}}{\text{L(n)}} \text{.}$
Table 1 is a tabulation of these parameters for bit size n ≤ 8. Ratio $\frac{\text{H(n)}}{\text{F(n)}}$ gives a measure of the relative rarity of additive permutations.

### UNBIASED BLOCK SUBSTITUTIONS

In designing a block substitution device, a basic goal is to have an unbiased transformation of the n-bit binary numbers onto themselves. This does not seem to be well defined but, basically, one desires that the cipher text contain no information on the nature of the clear text. For example, no subset should be mapped onto itself, and numbers with some characteristic (such as, even, lower half, zero in a binary position) should be equally likely to be images of a number with the same property or the reverse property. To require

| Table 1. Comparison of Permutations of Various Bit Sizes | | | | | | |
|---|---|---|---|---|---|---|
| n | 3 | 4 | 5 | 6 | 7 | 8 |
| 2ⁿ | 8 | 16 | 32 | 64 | 128 | 256 |
| m | 7 | 15 | 31 | 63 | 127 | 255 |
| Nₚ(n) | 2 | 2 | 6 | 6 | 18 | 16 |
| M(n) | 24 | 1,344 | 322,560 | 3.20 x 10⁸ | 1.29 x 10¹² | 8.42 x 10¹⁶ |
| L(n) | 6 | 8 | 30 | 36 | 126 | 128 |
| S(n) | 0 | 6 | 0 | 26 | 0 | 126 |
| T(n) | 24 | 2,352 | 322,560 | 5.51 x 10⁸ | 1.29 x 10¹² | 16.78 x 10¹⁶ |
| H(n) | 384 | 75,264 | 61,931,520 | 2.12 x 10¹¹ | 2.97 x 10¹⁵ | 6.87 x 10²⁰ |
| G(n) | 64 | 5,376 | 2,064,384 | 3.41 x 10⁹ | 2.36 x 10¹³ | 2.71 x 10¹⁸ |
| F(n) | 5760 | 1.39 x 10¹² | 8.49 x 10³³ | 2.01 x 10⁸⁷ | 3.04 x 10²¹³ | 3.36 x 10⁵⁰⁴ |
| $\frac{\text{H(n)}}{\text{F(n)}}$ | .0667 | 5.40 x 10⁻⁸ | 7.30 x 10⁻²⁷ | 1.05 x 10⁻⁷⁶ | 9.79 x 10⁻¹⁹⁹ | 2.04 x 10⁻⁴⁸⁴ |

that all outputs be equally likely for a random input is insufficient and requires only that the transformation be one-to-one. The following definition is proposed.

Definition: A transformation or substitution of the n-bit binary numbers onto themselves is said to be unbiased if:
a. There is no invariant subset other than a single fixed point.
b. Every maximal subgroup of the n-bit numbers is mapped in two equal parts into itself and into its relative complement.

Before proceding further, it is necessary to collect some facts on these maximal subgroups. Any set of binary numbers that has zeros in the same binary position is such a subgroup; however, there are others as well. Any subgroup of order 2^{k} is embedded in a subgroup of order 2^{k+1} and has a relative complement in the larger subgroup with 2^{k} elements.

Proposition 13: Let Gₙ be the group of n-bit binary numbers with modulo 2 addition as the group operation. Let H be a subgroup of order 2ⁿ⁻¹ and H its complement in Gₙ. Then for x, y ∈ $\overline{\text{H}}$, x ⊕ y ∈ H, and if x ∈ H, and y ∈ $\overline{\text{H}}$, x ⊕ y = z ∈ $\overline{\text{H}}$.

Proof: $\overline{\text{H}}$ cannot be a subgroup since it does not contain the identity I = (0···0). By definition, if x, y ∈ H, x ⊕ y ∈ H.

Let z = x ⊕ y where x ∈ H and y ∈ $\overline{\text{H}}$. If z ∈ H , then y = z ⊕ x ∈ H by the group property. This is a contradiction since H∩$\overline{\text{H}}$ = 0̸. So z ∈$\overline{\text{H}}$. The number of elements in H and in H is p = 2ⁿ⁻¹. Each element or binary number in H can be written as the sum of p pairs of numbers belonging to H. This gives p² pairs from H to H.

The numbers in $\overline{\text{H}}$ which are sums of mixed pairs can be expressed in two ways considering order: p² pairs in which the p numbers from H are matched with the p numbers from $\overline{\text{H}}$. Another p² pair is generated by matching the p words from $\overline{\text{H}}$ with p words from $\overline{\text{H}}$. This gives a total of 2p² ways of expressing the mixed sums in $\overline{\text{H}}$.

Overall, in G there are 2p words which can be expressed as (2p)² = 4p² pairs. The remaining p² pairs are those where the sum of numbers from $\overline{\text{H}}$ is taken. So far, 2p² pairs correspond to $\overline{\text{H}}$ and p² pairs to H. Since the two sets H and $\overline{\text{H}}$ have the same number of elements, the remaining p² pairs belong to H (i.e., x, y ∈ $\overline{\text{H}}$ ⇒ - x ⊕ y ∈ H). (Q.E.D.)

A substitution of the n-bit binary numbers Gₙ onto themselves can also be thought of as a transformation T, such that, TGₙ = Gₙ if this is expressed by an additive array:${\text{y}}_{\text{1}} {\text{⊕ x}}_{\text{1}} {\text{= z}}_{\text{1}} \text{.} \text{.} \text{.} {\text{y}}_{\text{k}} {\text{⊕ x}}_{\text{k}} {\text{= z}}_{\text{k}} \text{.} \text{.} \text{.}$ Then the first column defines the transformation Txₖ = zₖ. If T is linear, T(xⱼ ⊕ xₖ) = Txⱼ ⊕ Txₖ.

Proposition 14: A maximal additive array with fixed identity defines a linear transformation.

Proof: A general row is xₖ₋₁ ⊕ xₖ = xₖ₋ₚ.
Let T be the transformation mapping column 2 on column 3, Txₖ = xₖ₋ₚ.
Let${\text{x}}_{\text{k}} {\text{⊕ x}}_{\text{j}} {\text{= x}}_{\text{i}} \text{.} {\text{T(x}}_{\text{k}} {\text{⊕ x}}_{\text{j}} {\text{) = Tx}}_{\text{i}} {\text{= x}}_{\text{i-p}} \text{.} {\text{Ix}}_{\text{k}} {\text{⊕ Tx}}_{\text{j}} {\text{= x}}_{\text{k-p}} {\text{⊕ x}}_{\text{j-p}} \text{.}$ Since the array is an additive group by proposition 3,${\text{x}}_{\text{k-p}} {\text{⊕ x}}_{\text{j-p}} {\text{= (x}}_{\text{k}} {\text{⊕ x}}_{\text{j}} {\text{) ⊕ (x}}_{\text{k-1}} {\text{⊕ x}}_{\text{j-1}} {\text{) = x}}_{\text{i}} {\text{⊕ x}}_{\text{i-1}} {\text{= x}}_{\text{i-p}}$ and${\text{T(x}}_{\text{k}} {\text{⊕ x}}_{\text{j}} {\text{) = Tx}}_{\text{k}} {\text{⊕ Tx}}_{\text{j}} \text{.}$ This property is not generally true for one-to-one transformations on Gₙ.

Proposition 15: A transformation of the n-bit binary numbers onto themselves can be linear only if I = (00···0) is a fixed point.

Proof: Without loss of generality, the n-bit binary numbers can be arranged in order such that the successor to eacn is its image under tne transformation:${\text{x}}_{\text{1}} {\text{→x}}_{\text{2}} {\text{x}}_{\text{2}} {\text{→x}}_{\text{3}} \text{.} \text{.} \text{.} {\text{x}}_{\text{k}} {\text{→x}}_{\text{k+1}} \text{.} \text{.} \text{.} {\text{x}}_{\text{m}} {\text{→x}}_{\text{1}}$

Since T is linear, T(xₖ ⊕ xⱼ) = Txₖ ⊕ Txⱼ = xₖ₊₁ ⊕ xⱼ₊₁. xₖ ⊕ xⱼ = xᵢ for some i in the set 1,....,m. If xⱼ = I, then T(xₖ ⊕ xⱼ) = T(xₖ ⊕ I) = Txₖ = Txₖ ⊕ Txⱼ, which implies that Txⱼ = xⱼ₊₁ = I. (Q.E.D.)

Proposition 16: A linear transformation of the n-bit binary numbers onto themselves can be represented as an additive array.

Proof: Without loss of generality, the n-bit numbers can be arranged in an order so that each is mapped onto its successor:${\text{x}}_{\text{1}} {\text{→x}}_{\text{2}} {\text{x}}_{\text{2}} {\text{→x}}_{\text{3}} \text{.} \text{.} \text{.} {\text{x}}_{\text{k}} {\text{→x}}_{\text{k+1}} \text{.} \text{.} \text{.} {\text{x}}_{\text{m}} {\text{→x}}_{\text{1}}$ By proposition 15, if T is linear, I = (0···0) is a fixed point. Initially, it is assumed that there are no cycles. Txₖ = xₖ₊₁. Since T is a linear transformation, T(xₖ ⊕ xⱼ) = Txₖ ⊕ Txⱼ. If xᵢ = xₖ ⊕ xⱼ, then${\text{x}}_{\text{i+1}} {\text{= Tx}}_{\text{i}} {\text{= T(x}}_{\text{k}} {\text{⊕ x}}_{\text{j}} {\text{) = Tx}}_{\text{k}} {\text{⊕ Tx}}_{\text{j}} {\text{= x}}_{\text{k+1}} {\text{⊕ x}}_{\text{j+1}} \text{.}$

Let zₖ = xₖ ⊕ xₖ₋₁) for each of the m = 2ⁿ⁻¹ binary numbers other than I = (0···0). There are m = 2ⁿ⁻¹ such equations. Either zₖ takes on all values of the n-bit numbers except I, or there are duplicates. Suppose zₖ = zⱼ for some k ≠ j. Then xₖ ⊕ xₖ₊₁ = xⱼ ⊕ xⱼ₊₁ and xᵢ = xₖ ⊕ xⱼ = xₖ₊₁ ⊕ xⱼ₊₁ = xᵢ₊₁, a contradiction.

If there are cycles or invariant sets, each cycle can be written as above as a self-contained set and the same reasoning applied to each cycle. (Q.E.D.)

So far we have seen that all linear transformations on Gₙ are additive with fixed identity. Next we consider affine transformations which are non-linear (at least to a mathematician). An affine transformation has the property tnat T(x ⊕ y) = Tx ⊕ Ty ⊕ C where C is some constant.

Proposition 17: A maximal additive array with a fixed point other than the identity defines an affine transformation.

Proof: It has already been shown tnat an additive array with some fixed number A can be obtained from an array with fixed I by adding the row A ⊕ A = I to each row in that array.

In the array with fixed I, Txₖ = xₖ₋ₚ. In the array with fixed A, T'(xₖ ⊕ A) = xₖ₋ₚ. Then, redesignating${\text{x}}_{\text{j}} {\text{= x}}_{\text{k}} {\text{⊕ A, T'x}}_{\text{j}} {\text{= Tx}}_{\text{k}} {\text{= T(x}}_{\text{j}} \text{⊕ A).} \text{T'(x ⊕ y) = T(x ⊕ y ⊕ A) T(x ⊕ A ⊕y ⊕ A ⊕ A)} \text{T'(x ⊕ y) = T(x ⊕ A) ⊕ T(y + A) + TA} \text{T'(x ⊕ y) T'x ⊕ T'y ⊕ C}$ where C = TA. (Q.E.D.)

If T' is an arbitrary affine transformation, it can be written in terms of a linear transformation T as T'x = Tx ⊕ C. By proposition 16, T can be represented as an additive array. Defining A = T⁻¹C, a corresponding additive array can be generated to represent T' by adding the row A ⊕ A = I to each row in the array for T.

Proposition 18: If H is a subgroup of Gₙ, the group of n-bit binary numbers, and T is a linear transformation or T'x = Tx ⊕ TA with A ∈ H, is an affine transformation on Gₙ, then TH and T'H are subgroups of Gₙ.

Proof: Let G = TH. By propositions 15 and 16, T can be represented by an additive array with fixed identity. I ∈ H, TI = I so I∈G. Let x, y∈H. Since H is an additive group x ⊕ y = z ∈ H. Tx, Ty and Tz ∈ G. By linearity Tz = T(x ⊕ y) = Tx ⊕ Ty ∈ G, so G is closed under modulo 2 addition. For any x ∈ G, x ⊕ x = I ∈ G, so x is its own inverse and G is a group. In the affine case, TA∈G and T'A = TA ⊕ TA = I, so I ∈ G. T'x ⊕T'y = T'(x ⊕ y ⊕ A) ∈ G since x ⊕ y ⊕ A ∈ H. (Q.E.D.)

Proposition 19: A maximal length linear or affine transformation is unbiased.

Proof: First of all, being of maximal length, the transformation has no cycles, other than its fixed point, and thus has no proper invariant set.

Let T be linear and consider a maximal subgroup H of Gₙ. Define two sets:$\text{M = {x ∈ H| Tx ∈ H)}} \text{N = {x ∈ H| Tx ∈} \overline{\text{H}} \text{}} \text{I ∈ M, M ∩ N = 0̸ and H = M∪N.}$

If x, y ∈ M, T(x ⊕ y) = Tx ⊕ Ty ∈ H since T is linear and H is a group. Thus, x ⊕ y ∈ M also. Since each x is a self-inverse, M is a subgroup, and N is its complement relative to H.

If x ∈ H and y ∈ N, then z = x ⊕ y ∈ H and, hence, is either in M or N. If z ∈ M, then y = z ⊕ x ∈ m by its group property. Thus, z ∈ N.

If x, y ∈ N, Tx, Ty ∈ $\overline{\text{H}}$, complement of a maximal subgroup H. By proposition 13, Tx ⊕ Ty ∈ H. By linearity T(x ⊕ y) ∈ H. Since x, y ∈ H, x ⊕ y ∈ H. Since T(x ⊕ y) ∈ H, so x, y ∈ N ⇒ x ⊕ y ∈ M.

Since T has no proper invariant subset, TH ≠ H and N ≠ 0̸, the empty set. Select x ∈ N and consider the group Q generated by x and M. Q ⊂ H. Q contains the complex x ⊕ M which includes all pairs of the form x ⊕ y where y ∈ M. Obviously, X ⊂ Q. Choose any z ∈ N, where z ≠ x. This is possible since |M| divides |H| = 2ⁿ⁻¹. So |N| ≥ 2. z = x ⊕ w for some w. Since z, x ∈ H, a group, w ∈ H also. Since x, z ∈ N, w ∈ M. Thus, any element of N or M is an element of Q. Therefore, Q = H and M is a maximal subgroup of H. H is of order 2ⁿ⁻¹ and, thus, the order of the maximal subgroup M is |M| = 2ⁿ⁻² = $\frac{\text{1}}{\text{2}}$ |H|. |N| = |H| - |M| = $\frac{\text{1}}{\text{2}}$ |H|.
**Note:** TM is a group and |TM| = |M|.

Let T' be an affine transformation defined by T'x ⊕ Tx ⊕ TA, and C = TA. Again define two sets:$\text{M' = {x ∈ H | T'x ∈ H}} \text{N' = {x ∈ H | T'x ∈} \overline{\text{H}} \text{}}$ Assume C ∈ H. If x ∈ M', T'x = Tx ⊕ C ∈ H. Thus Tx ∈ H and M' ⊆ M. If x ∈ M, Tx ∈ H. T'x = Tx ⊕ C ∈ H, so x ∈ M', and M' = M. Since M'∪N' = H and M'∩N' = 0̸, N' = N. From here, the proof proceeds as in the first part.

Now assume C ∈ $\overline{\text{H}}$. If x ∈ M', T'x = Tx ⊕ C ∈ H. Thus, Tx ∈ $\overline{\text{H}}$ and M'⊆N. If x ∈ N, Tx ∈ $\overline{\text{H}}$. T'x = Tx ⊕ C ∈ H, M' = N and, consequently, N' = M. In this case, M' is not a subgroup but, by the first part of the proof, |M'| = |N| = $\frac{\text{1}}{\text{2}}$ |H|. Since H is maximal, the relative complement H is the total complement, so that C ∈ H or C ∈ $\overline{\text{H}}$. (Q.E.D.)

If T is linear, the proof holds for any subgroup. If H is of order 2ⁿ⁻¹ it is isomorphic to the group Gₙ₋₁ of n-1 bit binary numbers. Gₙ₋₁ has a relative complement in Gₙ consisting of $\overline{\text{H}}$. The same process can be applied to Gₙ₋₁. This leads to a nested sequence of subgroups${\text{G}}_{\text{n}} {\text{⊃ G}}_{\text{n-1}} {\text{⊃ ... G}}_{\text{1}} {\text{⊃ G}}_{\text{0}} \text{= {I}}$ in which each Gₖ is mapped by T half onto Gₖ₋₁ and half onto $\overline{\text{G}}$ₖ₋₁.
**Note:** This sequence of subgroups is not unique, as we can begin with several candidates for Gₙ₋₁, etc.

We have seen that any additive array produces unbiased substitutions or transformations. Next, we consider the necessary properties for a transformation or substitution to be unbiased in the sense defined here.

Proposition 20: Gₙ has m = 2ⁿ-1 maximal subgroups.

Proof: Gₙ is generated by any n independent n-bit numbers. Let {x₁, x₂, ... , xₙ} be such a set. Any subset of n-1 of the generators will generate a maximal subset. 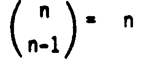 maximal subgroups will be generated this way. Let this collection of maximal subgroups be designated H₁, H₂, ... , Hₙ where Hᵢ is generated by {x₁, ..., xᵢ₋₁, xᵢ₊₁, ..., xₙ}, that is, by all except xᵢ. Then xᵢ ∈ $\overline{\text{H}}$ᵢ for each i ≤ n, and xᵢ ∈ Hⱼ for i ≠ j.

Next, one can define an operation "+" between maximal subgroups as:${\text{H}}_{\text{k}} {\text{= H}}_{\text{i}} {\text{+ H}}_{\text{j}} {\text{≡ (H}}_{\text{i}} {\text{∩ H}}_{\text{j}} \text{) ∪ (} {\overline{\text{H}}}_{\text{i}} \text{∩} {\overline{\text{H}}}_{\text{j}} \text{).}$ |Hₖ| = 2ⁿ⁻¹ since it is a union of disjoint sets and |Hᵢ ∩ Hⱼ| = |$\overline{\text{H}}$ᵢ ∩ $\overline{\text{H}}$ⱼ| = 2ⁿ⁻². Let x_{c} = xₐ ⊕ x_{b} where xₐ, x_{b} ∈ Hₖ. There are three possibilities:
1. Xₐ, x_{b} ∈ Hᵢ ∩ Hⱼ, then x_{c} ∈ Hᵢ ∩ Hⱼ since Hᵢ ∩ Hⱼ is a group.
2. xₐ, x_{b} ∈ $\overline{\text{H}}$ᵢ ∩ $\overline{\text{H}}$ⱼ, then x_{c} ∈ Hᵢ ∩ Hⱼ by proposition 13.
3. xₐ ∈ Hᵢ ∩ Hⱼ and x_{b} ∈ $\overline{\text{H}}$ᵢ ∩ $\overline{\text{H}}$ⱼ, then x_{c} ∈ $\overline{\text{H}}$ᵢ ∩ $\overline{\text{H}}$ⱼ by proposition 13.
In each case x_{c} ∈ Hₖ, obviously I ∈ Hₖ, so Hₖ is also a maximal subgroup.

To each maximal subgroup generated in this fashion, we can associate Xₖ = xᵢ ⊕ xⱼ, that is, xₖ is the sum of generators in the set {x₁, x₂, ... , xₙ} which belong to $\overline{\text{H}}$ₖ. Clearly, the maximal subgroups generated this way total m and are in one-to-one correspondence to the n-bit numbers.

Assume there is some maximal subgroup Hₒ which was not generated this way. Let the q numbers {xₐ, x_{b}, ...} ∈ $\overline{\text{H}}$ₒ be the maximal such subset of the generators {x₁, x₂, ... , xₙ). xₒ = xₐ ⊕ x_{b} ⊕ ··· . xₒ = xₖ for some Hₖ previously generated. Since the generators produce unique sums, then {xₐ, x_{b}, ...} ∈ $\overline{\text{H}}$_{k,} There are p remaining generators {x_{f}, x_{g} ···} ∈ Hₒ ∩ Hₖ where p + q **=** n. Then (Hₒ ∩ Hₖ) ∪ ($\overline{\text{H}}$ₒ ∩ $\overline{\text{H}}$ₖ) is a maximal subgroup. This is not possible unless Hₒ = Hₖ. (Q.E.D.)

There is an interesting relationship between the maximal subgroups and the numbers. Gₙ is trivially a maximal subgroup of itself. Gₙ + Hᵢ = Hᵢ + Gₙ = Hᵢ and Hᵢ + Hᵢ = Gₙ. The collection of maximal subgroups Ĝ = {Gₙ, Hᵢ, ··· , Hₙ, H₁ + H₂, ···} form a group under the operation "+" with Gₙ acting as tne identity. Ĝ is isomorphic to Gₙ under the mapping xₖ→Hₖ defined above.

The above proof is a little complicated, but it illustrates something of the structure of the subgroups. The same result can be obtained by more elementary means.

Each set of n-1 independent elements generates a maximal subgroup of order 2ⁿ⁻¹. The number of distinct sets of independent (n-1)-tuples, from proposition 12, is Q (n, n-1). However, different (n-1)-tuples may generate the same subgroup. The subgroup of order n-1 is isomorphic to the group of n-1 bit numbers. This latter group has Q(n-1) independent (n-1)-tuples. Thus, the group of n-1 bit numbers can be generated by Q(n-1) sets of generators, and each maximal subgroup is generated Q(n-1) times using all possible independent (n-1)-tuples. So the number of distinct maximal subgroups of Gₙ is:

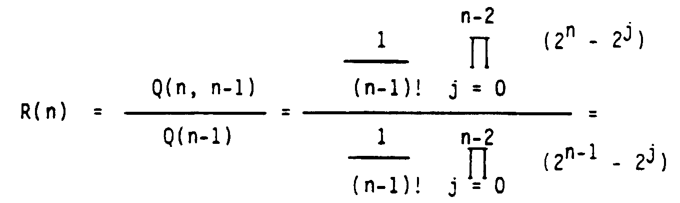

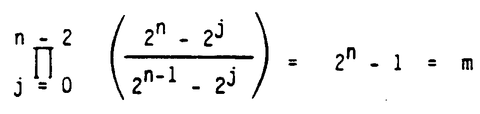

Corollary: Each number other than the identity will occur in $\frac{\text{m-1}}{\text{2}}$ maximal subgroups and in $\frac{\text{m+1}}{\text{2}}$ complements.

Proof: Since there are m maximal subgroups eacn number will appear m times, either in a maximal subgroup or its complement. The identity I will appear m times in the maximal subgroups but never in a complement. There are $\frac{\text{m (m-1)}}{\text{2}}$ remaining places for the non-identity numbers to appear in maximal subgroups and $\frac{\text{m (m+1)}}{\text{2}}$ places in the complements. Thus, by symmetry, each non-identity number will appear in $\frac{\text{m-1}}{\text{2}}$ maximal subgroups and in $\frac{\text{m+1}}{\text{2}}$ complements. (Q.E.D.)

Proposition 21: If Hᵢ, Hⱼ, Hₖ are any three dependent maximal subgroups, then Gₙ = Hᵢ + Hⱼ + Hₖ.

Proof: Each Hᵢ and each $\overline{\text{H}}$ᵢ have $\frac{\text{m+1}}{\text{2}}$ numbers. Also each Hᵢ ∩ Hⱼ, Hᵢ ∩ $\overline{\text{H}}$ⱼ, and $\overline{\text{H}}$ᵢ ∩ $\overline{\text{H}}$ⱼ have $\frac{\text{m+1}}{\text{4}}$ numbers. The set of distinct numbers in Hᵢ ∪ Hⱼ is the set (Hᵢ ∩ $\overline{\text{H}}$ⱼ) ∪ ($\overline{\text{H}}$ᵢ ∩ Hⱼ) ∪ (Hᵢ ∩ Hⱼ) and consists of $\frac{\text{3(m+1)}}{\text{4}}$ numbers. The missing $\frac{\text{m+1}}{\text{4}}$ numbers are those contained in $\overline{\text{H}}$ᵢ ∩ $\overline{\text{H}}$ⱼ. Hₖ = Hᵢ + Hⱼ = (Hᵢ ∩ Hⱼ) ∪ ($\overline{\text{H}}$ᵢ ∩ $\overline{\text{H}}$ⱼ). So Gₙ = Hᵢ ∪ Hⱼ ∪ Hₖ and Gn = Hᵢ + Hⱼ + Hₖ. (Q.E.D)

Corollary: The set of any three dependent numbers {xᵢ, xⱼ, xₖ}, none of which is I, contain at least one number from each of the m maximal subgroups.

Proof: In the proof of proposition 20, for a set of generators of Gₙ, {x₁, x₂, ··· , xₙ}, a set of maximal subgroups was generated. The generators can be written in terms of these subgroups:${\text{{x}}_{\text{1}} \text{} =} {\overline{\text{H}}}_{\text{1}} {\text{= H}}_{\text{1}} {\text{∩ H}}_{\text{2}} {\text{∩ ····· ∩ H}}_{\text{n}} {\text{{x}}_{\text{2}} {\text{} = H}}_{\text{1}} \text{∩} {\overline{\text{H}}}_{\text{2}} {\text{∩ ····· ∩ H}}_{\text{n}} \text{.} \text{.} {\text{{x}}_{\text{n}} {\text{} = H}}_{\text{1}} {\text{∩ H}}_{\text{2}} \text{∩····· ∩} {\overline{\text{H}}}_{\text{n}}$ |Hₖ| = |$\overline{\text{H}}$ₖ| = 2ⁿ⁻¹, |Hⱼ ∩ Hₖ| = |$\overline{\text{H}}$ⱼ ∩ $\overline{\text{H}}$ₖ| = |Hⱼ ∩ $\overline{\text{H}}$ₖ| = |$\overline{\text{H}}$ⱼ ∩ Hₖ| = 2ⁿ⁻². By induction these n-fold intersections have 2^{o} = 1 elements and are singleton sets. As an example, take x₁, x₂, and xₖ = x₁ ⊕ x₂. Hₖ = H₁ + H₂ is a dependent set in the sense of proposition 20, xₖ is the number associated with H_{k,} and by proposition 21, Gₙ = H₁ + H₂ + Hₖ. By proposition 13,${\text{{x}}_{\text{k}} \text{} =} {\overline{\text{H}}}_{\text{1}} \text{∩} {\overline{\text{H}}}_{\text{2}} {\text{∩ ···· ∩ H}}_{\text{n}}$ of course, k ∉ {1, 2, ··· , n}. Any maximal subgroup is of the form Σ Hᵢ where i ranges over some subset of {1, 2, ··· , n}. If i ≠ 1, 2, then {x₁, x₂, xₖ} ∈ Σ Hᵢ. Otherwise, there are three possible cases:
1. i ≠ 1, = 2 x₁ ∈ Σ Hᵢ
2. i = 1, ≠ 2 x₂ ∈ Σ Hᵢ
3. i = 1, = 2 xₖ ∈ Σ Hᵢ (Q.E.D)
This is different from the situation with vector spaces where an independent set of vectors spans the space.

Proposition 22: A one-to-one transformation of Gₙ onto itself is unbiased, if and only if, it can be represented by a replicative array.

Proof: As shown in the introduction, any transformation TGₙ→Gₙ, where Txᵢ = Zᵢ, can be written in the form yᵢ ⊕ xᵢ = zᵢ. This can be represented by the addition modulo 2 of two column matrices to obtain a third: 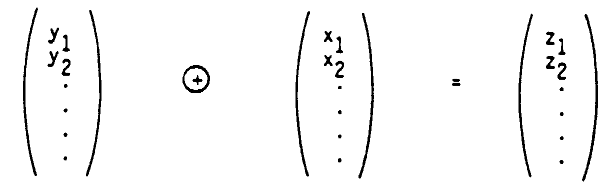 The yᵢ matrix represents the transformation T. Each matrix will have 2ⁿ entries. For the xᵢ and zᵢ matrices, each of the 2ⁿ n-bit binary numbers will appear exactly once since T is 1 to 1 onto it. Assume that T is unbiased and that the yᵢ matrix may have some of the n-bit numbers repeated so that the 2ⁿ numbers are not all distinct.

There are m = 2ⁿ-1 maximal subgroups H₁, H₂, ··· , Hₘ. Since T is unbiased, it will map each Hᵢ such that$\left|{\text{TH}}_{\text{i}} {\text{∩ H}}_{\text{i}}\right| \text{=} \left|{\text{TH}}_{\text{i}} \text{∩} \overline{{\text{H}}_{\text{i}}}\right| \text{=} \frac{\text{1}}{\text{2}} \left|{\text{H}}_{\text{i}}\right| \text{.}$ From proposition 13, we can arrange the matrices in blocks that correspond to the maximal subgroup Hᵢ and its complement 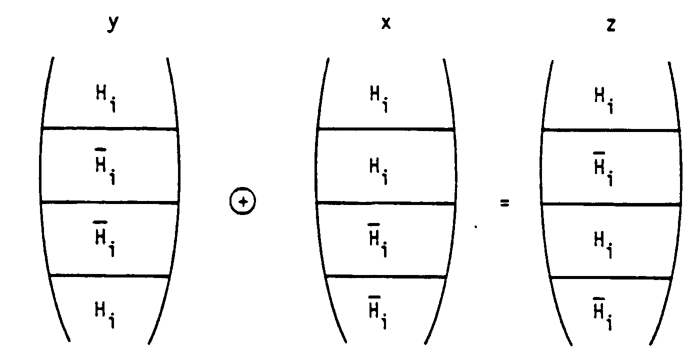 Since T is unbiased, each of the four blocks must consist of 2ⁿ⁻² numbers. The n-bit numbers may be designated yₒ = I, y₁, y₂, ···· , yₙ in the y matrix, and each will appear with some multiplicity pⱼ ≥ 0. Let aᵢⱼ = 1 if yⱼ ∈ Hᵢ and aᵢⱼ = 0 if yⱼ ∈ $\overline{\text{H}}$ᵢ. Clearly aᵢₒ = 1 for all i since the identity I belongs to each subgroup. For each Hᵢ and $\overline{\text{H}}$ᵢ the following equations hold: 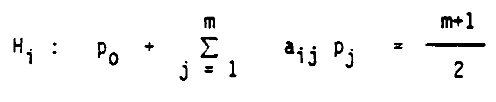 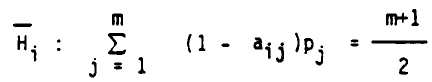 These two sets of equations are consistent since 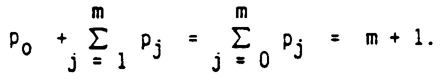 The m equations corresponding to the m maximal subgroups can be written in matrix form: 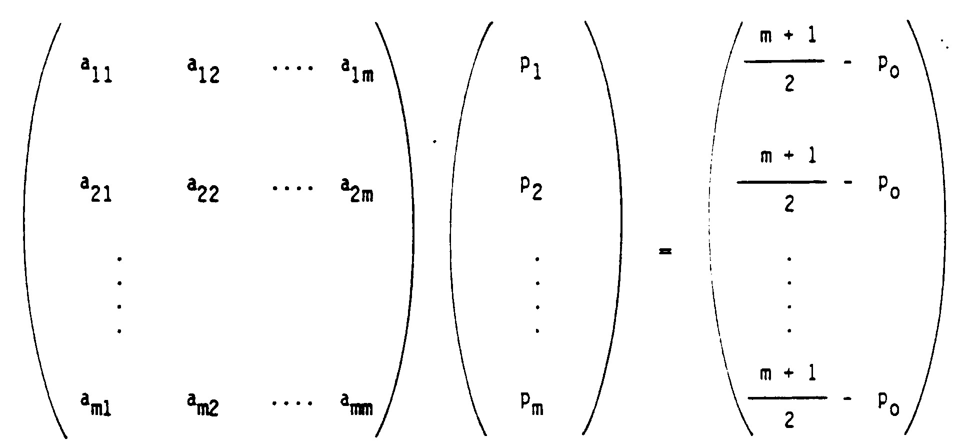 Using the determinant of the m x m matrix on the left, we can use Cramer's rule to solve for the pᵢ. For example, 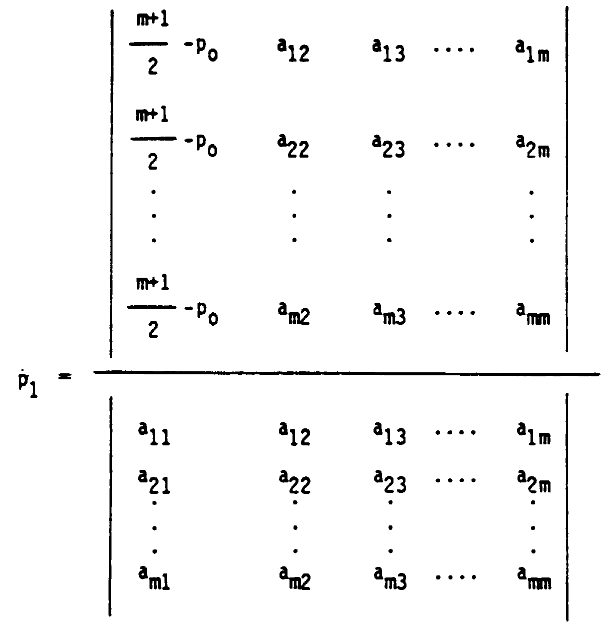 From the corollary to proposition 20, each row of the determinant in the denominator will have $\frac{\text{m-1}}{\text{2}}$ entries which are 1 and $\frac{\text{m+1}}{\text{2}}$ which are 0. Adding columns 2 through m to column 1 will not change the value of the determinant, so that: 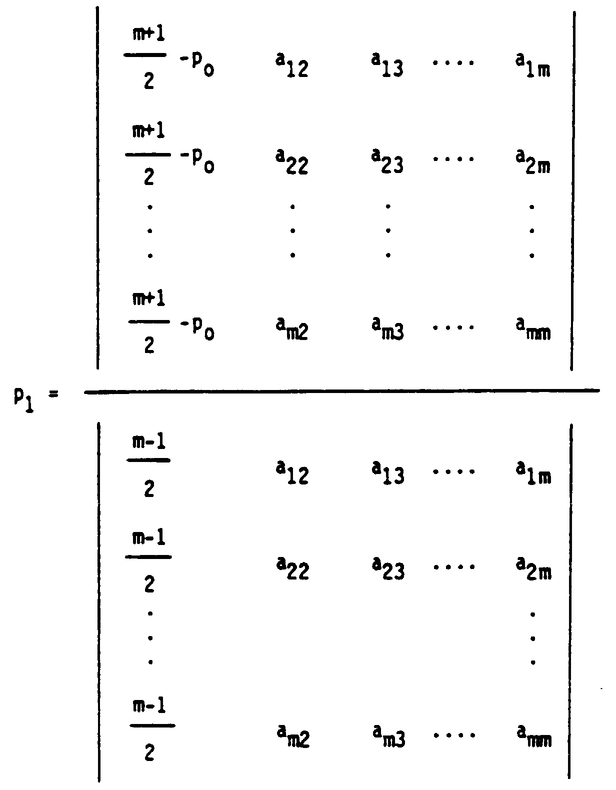 Factoring out the constant first column in each determinant and noting that the same result holds for the ith column, yields:${\text{p}}_{\text{i}} \text{=} \frac{\frac{\text{m+1}}{\text{2}} {\text{-p}}_{\text{o}}}{\frac{\text{m-1}}{\text{2}}}$ for 1 ≤ i ≤ m. pₒ ≤ 1 since pₒ > 1 implies more than one fixed word, contrary to the definition of an unbiased substitution. If pₒ = o then $\frac{\text{m+1}}{\text{m-1}}$ which is not an integer. The only remaining posibility is pₒ = 1, in which case:${\text{p}}_{\text{i}} \text{=} \frac{\frac{\text{m+1}}{\text{2}} \text{-1}}{\frac{\text{m-1}}{\text{2}}} \text{= 1 for all i.}$ Thus if the transformation is unbiased, all the pᵢ = 1 which, by definition, is a replicative array.
NOTE: One does not need to appeal to the definition of an unbiased substitution to restrict the value of pₒ. If pₒ ≥ 2, than o < pᵢ < 1 which is also impossible.
Assume now that the transformation is replicative. Consider any arbitrary maximal subgroup H. Each column matrix will have 2ⁿ⁻¹ entries in H and 2ⁿ⁻¹ entries in $\overline{\text{H}}$. The matrices can be written in blocks, as follows, using proposition 13: 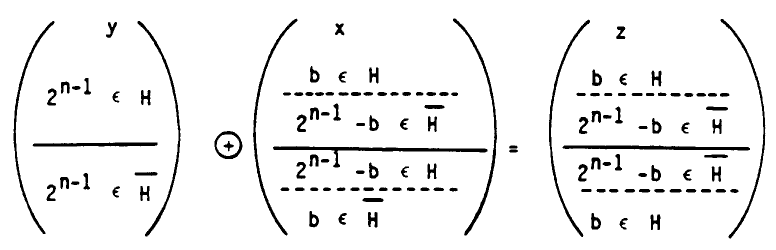 where b entries from H and 2ⁿ⁻¹ -b entries from $\overline{\text{H}}$ in the x matrix are added to the 2ⁿ⁻¹ entries from H in the y matrix. This yields a total of 2b entries from H and 2ⁿ - 2b entries from $\overline{\text{H}}$ in the z matrix. Since the transformation is replicative, the z column matrix has |H| = 2ⁿ⁻¹ entries from H. Thus 2b = 2ⁿ⁻¹ and b = 2ⁿ⁻² = 2ⁿ⁻¹ -b. So |TH∩H| = |T$\overline{\text{H}}$∩$\overline{\text{H}}$| = 2ⁿ⁻² and T is unbiased. Q.E.D. Proposition 14 is really included in proposition 22, but the proof of the former reveals more about the structure of the transformations and the additional property resulting from linearity.

Thus, any unbiased substitution of the n-bit binary numbers will fall into one of three categories:
1. It is replicative but not additive. Its powers are in general not replicative. It is a non-linear transformation which is also not affine.
2. It is additive with fixed point other than the identity. Its powers are also additive. This group of transformations are all affine.
3. It is additive with the identity fixed. Its powers are also additive. This group of transformations are all linear. They have the further property that they split all subgroups and not just the maximal ones.

### APPENDIX 2

### NON-LINEAR DYNAMIC SUBSTITUTION DEVICES AS MECHANISMS FOR BLOCK SUBSTITUTIONS

### TABLE OF CONTENTS

| Section | Title | |
|---|---|---|
| 1. | INTRODUCTION | |
| | | |
| 2. | BACKGROUND WORK WITH LINEAR AND AFFINE ORTHOMORPHISMS | |
| | | |
| 3. | NONLINEAR ORTHOMORPHISMS AND DYNAMIC SUBSTITUTION DEVICES (DSD) | |
| | 3-1 | General Considerations |
| | 3-2 | Conversion of Linear Orthomorphisms |
| | 3-3 | Nonlinearization Summary |
| | 3-4 | Application of Nonlinearization Techniques |
| | 3-5 | Selection of Equations for Nonlinearization |
| | 3-6 | Nonlinearization Techniques Summary |
| | | |
| 4. | MEASURES OF CRYPTOGRAPHIC FREEDOM FROM BIAS . | |
| | 4-1 | Avalanching and Bit Independence |
| | 4-2 | Other Criteria for Lack of Bias |
| | 4-3 | Applications to Orthomorphisms |
| | | |
| REFERENCES | | |
| | | |
| APPENDIX | | |

### 1. INTRODUCTION

The term Dynamic Substitution Device (DSD) was coined at Teledyne Electronics to designate a block substitution device, or S-box, in which the mappings or substitutions of clear text blocks of binary numbers to encrypted blocks of binary numbers, or vice versa, are accomplished by means of so-called *orthomorphisms.*

Any block substitution can be described in terms of look-up tables, permutations, or Boolean functions. A look-up table is simply a tabulation of corresponding clear text and cipher text pairs. A permutation is an orderly way of describing a look-up table and has the advantage of showing any cycles or subsets of numbers mapped onto themselves. Permutations also have some algebraic properties which can be considered in the design of *S*-boxes. Boolean functions (commonly used) are functions of *n*-bit binary numbers or blocks whose dependent variables are individual bits of another *n*-bit number. Thus, *n* Boolean functions are needed to describe a block substitution for *n*-bit numbers.

Orthomorphisms are another method of describing block substitutions, albeit a special class of them because most block substitutions are not orthomorphisms. As shown in ref. 2, there are many orthomorphisms existing. When they are described by look-up tables or Boolean functions, their special properties tend to be obscured.

Letting *G*_{*n*} be the group of *n*-bit binary numbers under coordinatewise addition modulo 2 (denoted by the symbol ⊕), an orthomorphism of *G*_{*n*} is a 1 to 1 mapping *R:G*_{*n*}→*G*_{*n*} such that {*x* ⊕ *R(x)*}_{*xεGn*} = *G*_{*n*}. This is equivalent to pairing each *n*-bit binary number with another in such a way that in the collection of 2^{*n*} pairs, each number appears exactly once in each of the two sets of numbers and in such a way that the sums modulo 2 of the pairs is again *G*_{*n*}*.* (It is not obvious that this can ever be done.) This constitutes a bijective mapping with a single fixed point since some number must be added modulo 2 to the all-zero additive identity.

### 2. BACKGROUND WORK WITH LINEAR AND AFFINE ORTHOMORPHISMS

Linear (automorphic) and affine orthomorphisms are described in some detail in refs. 3 and 4. A linear orthomorphism can be represented by a set of 2^{*n*} equations, for block size *n*, where each *x*_{*i*} is an *n*-bit binary number: 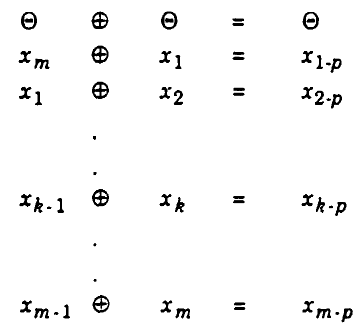 where *m* = 2^{*n*} - 1 and *p* is an integer determined by the generating function but independent of the initial conditions or key variable {*x*₁, *x*₂, ···, *x*_{*n*}}. This set of equations can be thought of as a set of 2^{*n*} vectors on a three-dimensional space. These vectors can be added componentwise modulo 2.

In the linear case, the set of vectors forms an additive group, but this is both a strength and a weakness. Knowing any set of *n* linearly independent vectors (equations) one could construct the remaining equations from the group property. As in every block substitution, the mapping can be represented by a permutation. In this case, there are three permutations depending on which pair of columns is chosen. As a converntion, we typically consider the mapping to be from column 1, *x*_{*k*}₋₁ to column 3, *x*_{*k-p*}. The compensating quality described in refs. 3 and 4 is that if column 1 is shifted with respect to column 2, column 3 is also shifted by a corresponding amount and represents a new linear orthomorphism.

The permutation representing the new orthomorphism is a power of the permutation representing the original orthomorphism. In ref. 4, it is shown that these permutations form a cyclic permutation group of order 2^{*n*} - 1 which is transitive, *i.e.*, each number other than the fixed number is mapped on every other number by the family of orthomorphisms.

The affine orthomorphisms can be converted to or derived from linear orthomorphisms by adding vectorially to each of the 2^{*n*} original equations an equation of the form *S ⊕ S =* Θ where *S* is a fixed number.

In practice, a linear DSD has been used with a continual change of shift position, or equivalently, a different member of the permutation group. Employed in this way, the *S*-box is nonlinear.

There is another aspect to linearity *us*. nonlinearity, namely, the level at which it is described. Orthomorphic block substitutions have been derived by linear recursive generating functions applied to a maximal set of linearly independent n-bit numbers. The mappings of numbers from one column to another in the set of equations is also linear under the operation of modulo 2 addition bitwise; however, if the same mapping is now considered under the operation modulo *m*, where *m* = 2^{*n*} · 1, the mappings, in general, are nonlinear. Here, linearity is defined by the property of a mapping *F*, such that *F*(*ax* + *by*) = *aFx* + *bFy* for all vectors *x,y,* and scalars *a, b*.

In ref. 1, *S*-boxes or mappings are defined in terms of Boolean functions, *i.e*., a set of *n* functions which map an *n*-bit number (clear text) to one bit of an *n*-bit (cipher text) number. Because orthomorphisms are block substitutions, although of a special type, they can also be represented this way. In ref. 1, it is proven that a sufficient condition for the mapping or block substitution to be nonlinear at the integer level (presumably under modulo m addition) is that all *n* Boolean functions (at the bit level) be nonlinear. This is not claimed to be a necessary condition. In the appendix, an example is given of a linear orthomorphism (under modulo 2 addition) with linear Boolean functions which is nonlinear at the integer level modulo m.

### 3. NONLINEAR ORTHOMORPHISMS & DYNAMIC SUBSTITUTION DEVICES

### 3.1 General Considerations

In view of the comments in the last section on different definitions of nonlinearity, this section is concerned specifically with block substitutions using nonlinear orthomorphisms in the sense that they are nonlinear mappings from *G*_{*n*} onto *G*_{*n*} under the operation of bitwise addition modulo 2. The motivation to look at nonlinear orthomorphisms is twofold:
a. There are many more nonlinear than linear orthomorphisms.
b. Nonlinear orthomorphisms should be more resistant to cryptanalysis than the linear or affine versions because of the lack of group symmetries.
There is a trade-off, however, in that the nonlinear orthomorphisms do not generate an automorphism group and the corresponding dynamic substitution devices no longer can change substitutions by shifting.

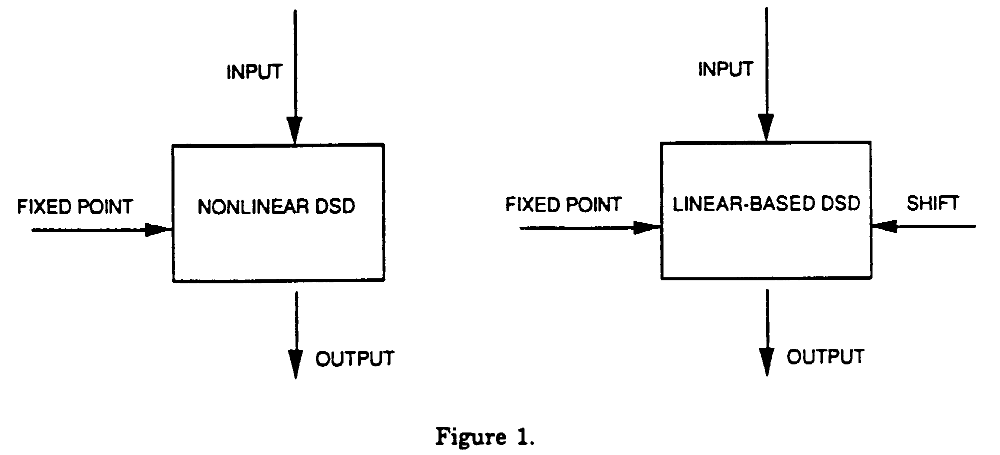

The first problem is to find a way of routinely generating nonlinear orthomorphisms. In one approach, it is tempting to try a variation of the process used in ref. 4, prop. 1, relaxing the requirement that successive sets of *n* numbers in each column be linearly independent, while constructing a set of equations to represent an orthomorphism. Select *n* linearly independent numbers, and start the array of equations as follows: 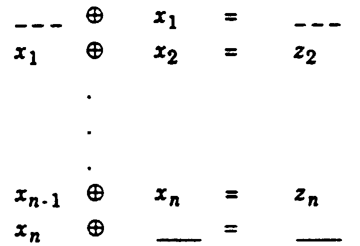 The choice of the linearly independent set *{x*₁, ···, *x*_{*n*}} specifies *n* - 1 equations of the budding orthomorphism. Choosing a candidate for *x*_{*n*}_{+1,} such that {*x*₂, ···, *x*_{*n*}₊₁} and {*z*₂, ···, *z*_{*n*}₊₁} are linearly independent, yields a linear or affine orthomorphism if successive steps can continue to *x*_{*m*}. If the restriction on linear independence is removed, the only restriction is that neither *x*_{*n*}₊₁ nor *z*_{*n*}₊₁ duplicate a predecessor. The problem experienced with this procedure is that one almost always runs out of choices before reaching *x*_{*m*} where *m* = 2^{*n*} - 1. Without loss of generality, one can assume that the fixed point is given by the equation Θ ⊕ Θ = Θ. To avoid lengthy "cut and try" procedures, some additional guidance is needed.

Another approach is to convert a linear orthomorphism to a nonlinear one by taking the set of equations defining the linear orthomorphism and permuting the numbers in two columns in such a manner that the third column of sums is unchanged. In the next section, this approach will be explored.

### 3.2 Conversion of Linear Orthomorphisms to Nonlinear

Any linear orthomorphism can be expressed as an additive group of equations which can be treated as vectors and added componentwise modulo 2 to obtain another equation (vector) in the same array or group of equations representing the orthomorphic block substitution. Omitting the identity equation, Θ ⊕ Θ = Θ, the orthomorphism can be written: 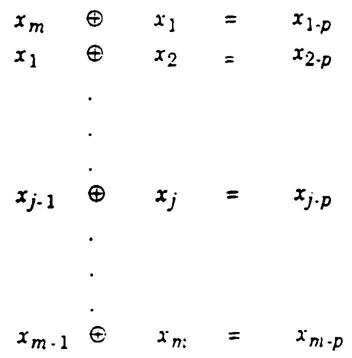 If numbers in columns 1 and 2 could be rearranged within themselves so that the sums in column 3 are preserved, a nonlinear orthomorphism would result. Since the orthomorphism is based on the relationship between three columns, it is intuitively tempting to seek some relationship among triples of rows. Because of the group structure, the vector sum of the first three equations will be another equation which already occurs at position *q,* where *q* is given by:${\text{x}}_{\text{1}} \text{⊕} {\text{x}}_{\text{2}} \text{⊕} {\text{x}}_{\text{3}} \text{=} {\text{x}}_{\text{q}} {\text{x}}_{\text{2-}} {\text{}}_{\text{p}} \text{⊕} {\text{x}}_{\text{3}} \text{=} {\text{x}}_{\text{q}} {\text{x}}_{\text{3-(}} {\text{}}_{\text{p+}} {\text{}}_{\text{1)}} \text{⊕} {\text{x}}_{\text{3}} \text{=} {\text{x}}_{\text{q}}$ This last equation is from the array representing a shift of *p* + 1 in column 1 or the (*p* + 1)st power of the basic permutation.
Thus:${\text{x}}_{\text{3-(}} {\text{}}_{\text{p}} {\text{}}_{\text{+1)}} \text{⊕} {\text{x}}_{\text{3}} \text{=} \text{x} {\text{}}_{\text{3-} {\text{p}}_{\text{(} \text{p} \text{+1)}}}$ and$\text{q} \text{≡ 3 -} {\text{p}}_{\text{(} \text{p} \text{+1)}} \text{modulo} \text{m}$ where *p*_{(*p*+1}) is the shift in column 3 corresponding to a shift of *p* + 1 in column 1. (See ref. 4.)

Without loss of generality, we take the first *j* rows in the linear orthomorphic array and take successive triple sums of adjacent rows. The first of these will be:$\text{(} {\text{x}}_{\text{m}} \text{⊕} {\text{x}}_{\text{1}} \text{⊕} {\text{x}}_{\text{2}} \text{) ⊕ (} {\text{x}}_{\text{1}} \text{⊕} {\text{x}}_{\text{2}} \text{⊕} {\text{x}}_{\text{3}} \text{) = (} {\text{x}}_{\text{1-} \text{p}} \text{⊕} {\text{x}}_{\text{2-} \text{p}} \text{⊕} {\text{x}}_{\text{3-}} {\text{}}_{\text{p}} \text{)}$ which is the row in the *q*th position in the array of equations and can be written:${\text{x}}_{\text{q}} {\text{}}_{\text{-1}} \text{⊕} {\text{x}}_{\text{q}} \text{=} {\text{x}}_{\text{q-p}}$ The remaining rows generated in this way are: 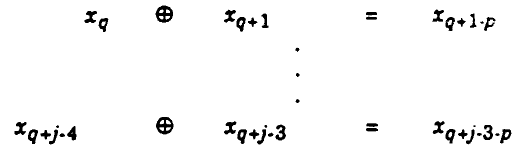 for a total of *j* - 2 adjacent rows in the original array separated by *q* -*j* rows from the set of *j* equations. The second group of *j*- 2 rows lend themselves to a natural transformation by cancelling the common numbers in columns 1 and 2, yielding: 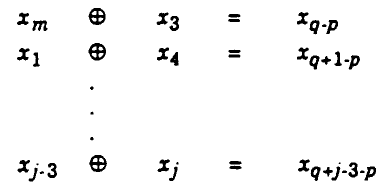 In these *j* - 2 modified rows, column 1 duplicates all but *x*_{*j*}₋₂ and *x*_{*j*}₋₁ in column 1 of the first set and all but *x*₁ and *x*₂ from column 2. If this process is to succeed, a mechanism must be found to replace the duplicates in the first set with *j* - 2 original numbers in columns 1 and 2 of the second set. The first question, however, is whether or not this is possible.

Let *S* be the set of numbers in column 1 of the first j equations and T be the corresponding set of numbers in column 2. These sets must be replaced, respectively, by the sets *S'* and *T'* consisting of the original numbers in columns 1 and 2 of the second set of *j* - 2 equations plus those two numbers left over in each of *S* and T.$\text{S} \text{= (} {\text{x}}_{\text{m}} \text{,} {\text{x}}_{\text{1}} \text{···,} {\text{x}}_{\text{j}} {\text{}}_{\text{-1}} \text{) →} \text{S'} \text{= {} {\text{x}}_{\text{j}} {\text{}}_{\text{-2}} \text{,} {\text{x}}_{\text{j}} {\text{}}_{\text{-1}} \text{,} {\text{x}}_{\text{q}} {\text{}}_{\text{-1}} \text{, ···,} {\text{x}}_{\text{q+j}} {\text{}}_{\text{-4}} \text{}} \text{T} \text{= {} {\text{x}}_{\text{1}} \text{,} {\text{x}}_{\text{2}} \text{, ···,} {\text{x}}_{\text{j}} \text{) →} \text{T} \text{= {} {\text{x}}_{\text{1}} \text{,} {\text{x}}_{\text{2}} \text{,} {\text{x}}_{\text{q}} \text{, ···,} {\text{x}}_{\text{q}} {\text{}}_{\text{+}} {\text{}}_{\text{j}} {\text{}}_{\text{-3}} \text{}}$ The conditions on transforming from one set to another are interrelated. If *x*_{*k*} ε *S* and *x*$\frac{\text{'}}{\text{k}}$ → *x*_{*k*} ε *S'*, then, *x*_{*k*}₊₁ ε *T* and *x*_{*k*}₊₁ → *x'*_{*k*}₊₁ ε *T'*. *x*_{*k*} *⊕ x*ₖ₊₁ = *x*_{*k*}₊₁₋_{*p*} = *x'*_{*k*} ⊕ $\frac{\text{'}}{\text{k}}$ *x'*_{*k*}₊₁, so that *x'*_{*k*}₊₁ = *x*_{*k*} ⊕ *x*_{*k*}₊₁ ⊕ *x'*_{*k*}.

Let *x*_{*m*} → *x'*_{*m*} ε *S'*, then, from T, *x*₁ → *x*_{*m*} ⊕ *x*₁ ⊕ *x'*_{*m*} = *x*$\frac{\text{'}}{\text{1}}$ ε *T'*. There is only one possible choice of *x*$\frac{\text{'}}{\text{m}}$ ε *S'*so that *x*$\frac{\text{'}}{\text{1}}$ ε *T'*, *i.e., x*_{*m*} = *x*_{*q*}₋₁ = *x*_{*m*} ⊕ *x*₁ ⊕ *x*₂, in which case, *x*₁ → *x*$\frac{\text{'}}{\text{1}}$ = x₂.

Similarly, at the other end, *x*_{*j*-1} ε *S* and *x*_{*j*}₋₁ → *x'*_{*j*}₋₁ ε *S'*. *x*_{*j*} ε *T* and *x*_{*j*} - *x*_{*j*}₋₁ ⊕ *x*_{*j*} ⊕ *x*$\frac{\text{'}}{\text{j} \text{-1}}$ *= x*_{*j*}ε *T'*. Again, there is only one possible choice for *x*_{*j*}₋₁ = *x*_{*j*}₋₂ so that *x*_{*j*}ε *T'*, namely, x$\frac{\text{'}}{\text{j}}$ = *x*_{*j-2*} ⊕ *x*_{*j*} = *x*_{*q+j*}₋₃ ε *T'*. Thus, the first and last modified rows of the first set of *j* equations are uniquely specified:${\text{x}}_{\text{m}} \text{⊕} {\text{x}}_{\text{1}} \text{=} {\text{x}}_{\text{1-}} {\text{}}_{\text{p}} \text{becomes} {\text{x}}_{\text{q}} {\text{}}_{\text{-1}} \text{⊕} {\text{x}}_{\text{2}} \text{=} {\text{x}}_{\text{1-}} {\text{}}_{\text{p}}$ and:${\text{x}}_{\text{j}} {\text{}}_{\text{-1}} \text{⊕} {\text{x}}_{\text{j}} \text{=} {\text{x}}_{\text{j-p}} \text{becomes} {\text{x}}_{\text{j}} {\text{}}_{\text{-2}} \text{⊕} {\text{x}}_{\text{q+j}} {\text{}}_{\text{-3}} \text{=} {\text{x}}_{\text{j-p}} \text{.}$

Next, consider the second original equation:${\text{x}}_{\text{1}} \text{⊕} {\text{x}}_{\text{2}} \text{=} {\text{x}}_{\text{2-}} {\text{}}_{\text{p}}$ *x*₁ → *x*$\frac{\text{'}}{\text{1}}$ ε *S'*. *x*$\frac{\text{'}}{\text{1}}$ ≠ *x*_{*q*}₋₁ or *x*_{*j*}₋₂ since these have been used. *x*₂ → *x*$\frac{\text{'}}{\text{2}}$ ε *T'* where *x*$\frac{\text{'}}{\text{2}}$ = *x*₁ ⊕ *x*₂ ⊕ *x*$\frac{\text{'}}{\text{1}}$
If *x*$\frac{\text{'}}{\text{1}}$ = *x*_{*q*}, *x*_{*q*}₊₁, ···, *x*_{*q+j*}₋₄, then, *x*$\frac{\text{'}}{\text{2}}$ ε *T*. So, the only possibility is *x*$\frac{\text{'}}{\text{1}}$ = *x*_{*j*}₋₁ ε *S'*. In that case, *x*$\frac{\text{'}}{\text{2}}$ = *x*₁ ⊕ *x*₂ ⊕ *x*_{*j*}₋₁. *j* ≥ 3:

| | | | |
|---|---|---|---|
| if *j* = 3 | *x*$\frac{\text{'}}{\text{1}}$ = *x*₂ | and x$\frac{\text{'}}{\text{2}}$ = x₁ | x₂ ⊕ x₁ = x_{2-*p*}. |
| if *j* = 4 | *x*$\frac{\text{'}}{\text{1}}$ = *x*₂ | and x$\frac{\text{'}}{\text{2}}$ = x_{q} | x₃ ⊕ x_{q} = x_{2-*p*}. |
| if *j* > 4 | x$\frac{\text{'}}{\text{2}}$ ∉ *T*'. | | |

If *j* = 4, there is one more equation of the first set of four to be modified: the third. Because j = 4, *S'* = {*x*₂, *x*₃, *x*_{*q*}₋₁, *x*_{*q*}} and *T'* = {*x*₁, *x*₂, *x*_{q}, *x*_{*q*}₊₁}. The only unused pair is *x*_{*q*} ε *S'* and *x*₁ ε *T'*. Fortunately, *x*_{*q*} ⊕ *x*₁ = *x*₃₋_{*p*}, and the transformation is complete.

### 3.3 Nonlinearization Summary

Nonlinearization by taking sums of consecutive triples of rows works, if and only if, a set of three or four consecutive rows is used. If three consecutive rows are selected, the result is:

| | Original | Modified |
|---|---|---|
| 1. | *x*_{*m*} ⊕ *x*₁ = *x*_{1-*p*} | *x*_{*q*}₋₁ ⊕ *x*₂ = *x*₁₋_{*p*} |
| 2. | *x*₁ ⊕ *x*₂ = *x*_{2-*p*} | *x*₂ ⊕ *x*₁ = *x*₂₋_{*p*} |
| 3. | *x*₂ ⊕ *x*₃ = *x*_{3-*p*} | *x*₁ ⊕ *x*_{*q*} = *x*₃₋_{*p*} |
| *q* | *x*_{*q*}₋₁ ⊕ *x*_{*q*} = *x*_{*q-p*} | *x*_{*m*} ⊕ *x*₃ = *x*_{*q-p*} |

The modification can be obtained by adding vectorially to each of the four rows:$\text{(} {\text{x}}_{\text{1}} \text{⊕} {\text{x}}_{\text{2}} \text{) ⊕ (} {\text{x}}_{\text{1}} \text{⊕} {\text{x}}_{\text{2}} \text{) = Θ}$ If four consecutive rows are selected, the result is:

| | Original | Modified |
|---|---|---|
| 1. | *x*_{*m*} ⊕ *x*₁ = *x*_{1-*p*} | *x*_{*q*}₋₁ ⊕ *x*₂ = *x*₁₋_{*p*} |
| 2. | *x*₁ ⊕ *x*₂ = *x*_{2-*p*} | *x*₃ ⊕ *x*_{*q*} = *x*₂₋_{*p*} |
| 3. | *x*₂ ⊕ *x*₃ = *x*_{3-*p*} | *x*_{*q*} ⊕ *x*₁ = *x*₃₋_{*p*} |
| 4. | *x*₃ ⊕ *x*₄ = *x*_{4-*p*} | *x*₂ ⊕ *x*_{*q*}₊₁ = *x*₄₋_{*p*} |
| *q* | *x*_{*q*}₋₁ ⊕ *x*_{*q*} = *x*_{*q-p*} | *x*_{*m*} ⊕ *x*₃ = *x*_{*q-p*} |
| *q* + 1 | *x*_{*q*} ⊕ *x*_{*q*}₊₁ = *x*_{*q*}_{+1-*p*} | *x*₁ ⊕ *x*₄ = *x*_{*q*}₊₁₋_{*p*} |

The modification can be obtained by adding vectorially:

| | |
|---|---|
| to rows 1 and *q* | (*x*₁ ⊕ *x*₂) ⊕ (*x*₁ ⊕ *x*₂) = Θ |
| to rows 2 and 3 | (*x*₁ ⊕ *x*₃) ⊕ (*x*₁ ⊕ *x*₃) = Θ |
| to rows 4 and *q* + 1 | (*x*₂ ⊕ *x*₃) ⊕ (*x*₂ ⊕ *x*₃) = Θ |

### 3.4 Application of Nonlinearization Techniques

It is often tempting to try to speak of levels of nonlinearity as if such levels were measurable quantities. Somehow, piecewise linear functions seem less nonlinear than transcendental functions. In cryptography, one refers to the *Hamming distance* of nonlinear Boolean functions from linear ones. While linearity is well defined, and nonlinear functions are simply everything left over when the linear, and perhaps affine functions are deleted, in what follows we will succumb to the tendency to ascribe measurability to levels of nonlinearity.

In the last section, two means were described to nonlinearize four or six rows at a time of an arbitrary linear orthomorphism. Because those methods could be applied, starting with any row in the orthomorphic array, each could yield 2^{*n*} -1 different, nonlinear orthomorphisms from one linear orthomorphism; however, they would not "be very nonlinear" in the sense that for large *n*, a big chunk of the original array of equations would be left intact. So it is natural to use one or both of these processes repeatedly. The limitation, short of running out of rows, is having chunks of rows overlap. The fraction of original rows, modified, might be considered a measure of nonlinearity, so the next question is how to select efficiently clumps of non-overlapping rows.

### 3.5. Selection of Rows or Equations for Nonlinearization

There are many ways to choose sets of triples or quadruples of consecutive equations for this nonlinearization process. The only essential criterion is that no rows derived as triple sums from some triple or quadruple sets overlap with another triple or quadruple set. In addition to this, it seems obvious that as many rows as possible from the linear orthomorphism be modified and with a reasonably uniform distribution so as to avoid any piecewise linear portions in the new orthomorphism. First, consider the case in which *m* = 2^{*n*} - 1 is a composite number. Let *d* be a factor of *m*. From the linear orthomorphisms, select rows number 1, 2, 3 and 4 along with the corresponding sum rows *q* and *q* + 1. We can then select successive sextuples of rows to be modified as in the preceding section. The row numbers of these successive sextuples will be:

| 1 | 2 | 3 | 4 | *q* | *q* + 1 |
|---|---|---|---|---|---|
| 1 + *d* | 2 + *d* | 3 + *d* | 4 + *d* | *q* + *d* | *q* + 1 + *d* |
| | . | | | . | |
| | . | | | . | |
| | . | | | . | |
| 1 + *ad* | 2 + *ad* | 3 + *ad* | 4 + *ad* | *q* + *ad* | *q* + 1 + *ad* |

where a takes on successive values 0, 1, 2, ··· . This process can terminate in two ways. First of all, one of the equations in a quadruple set may, be duplicated in another set, i.e., overlapping quadruplets and the same may happen between the sets of equations which are the triple sums. This will occur when for some integer *a*:$\text{1 +} \text{ad} \text{, 2 +} \text{ad} \text{, 3 +} \text{ad} \text{or 4 +} \text{ad} \text{≡ 1, 2, 3 or 4 modulo} \text{m} \text{q} \text{+} \text{ad} \text{or} \text{q} \text{+ 1 +} \text{ad} \text{≡} \text{q} \text{or} \text{q} \text{+ 1 modulo} \text{m} \text{.}$ This is equivalent to:$\text{ad} \text{≡ 0, ±1, ±2 or ±3 modulo} \text{m} \text{.}$ The minimum separation between successive initial rows, *i.e*., 1 and 1 + *d*, must be at at least 4 for quadruples. Since *m* = 2^{*n*} - 1 is odd, and *d* divides *m*, *d* is also odd and, thus, d ≥ 5. this also means that ad ≢ ±1, ±2, ±3 modulo *m*.

The second means of potential overlap is when:$\text{1, 2, 3, or 4 ≡} \text{q} \text{+} \text{ad} \text{or} \text{q} \text{+ 1 +} \text{ad modulo m}$$\text{1 +} \text{ad} \text{, 2 +} \text{ad} \text{, 3 +} \text{ad} \text{, or 4 +} \text{ad} \text{≡} \text{q} \text{or} \text{q} \text{+ 1 modulo} \text{m} \text{.}$ This is equivalent to:$\text{ad} \text{≡ ±} \text{q} \text{, ±(} \text{q} \text{- 1), ±(} \text{q} \text{- 2), ±(} \text{q} \text{- 3), or ±(} \text{q} \text{- 4) modulo} \text{m} \text{.}$ To avoid this, *d* must be relatively prime to *q*, ···, *q* - 4; however, one of these numbers must be a multiple of 5 so that we require *d* ≥ 7. If triples rather than quadruples of rows are selected, then the conditions *ad* ≢ ±*q* or ±(*q* - 4) are eliminated. In that case, d ≥ 5 satisfies the conditions above. (*Note:* All integers here are positive, so the condition ad ≢ - *q* modulo *m*, *etc*, means *ad* ≢ *bm* - *q*. Since *d* divides *m*, if it is relatively prime to *q*, it must also be relatively prime to *bm* - *q* for any integer *b*.)

### 3.5 Nonlinearization Techniques Summary

If *m* = 2^{*n*} - 1 is not a prime, seek a factor *d* of *m*, relatively, prime to *q*, *q* - 1, ····, *q* - 4 to space successive quadruples of equations (relatively prime to *q* - 1, *q* - 2, q - 3 to space successive triples of equations) for the nonlinearization process.

When such a number d can be found, it leads a uniformly spaced, dense set of equations in the linear array for nonlinearization. Some examples are given in the appendix.

### 3.6 Other Selections of Rows

When the above method does not appear to be rewarding, another obvious possibility is to take successive quadruples of rows, defined by a triple and its sum, in which the first row of a subsequent quadruple follows immediately after the last row (triple sum) of the previous quadruple. For example:

| 1 | 2 | 3 | *q* |
|---|---|---|---|
| *q* + 1 | *q* + 2 | *q* + 3 | 2*q* |
| | . | | . |
| | . | | . |
| | . | | . |
| *bq* + 1 | *bq* + 2 | *bq* + 3 | (*b* + 1)*q* |

This process terminates when any one of three conditions occurs:
1. *bq* ≡ 0, ±1, +2 modulo *m*
2. (*b* - 1)*q* ≡ -1, -2, -3 modulo *m*
3. (*b* + 1) ≡ 1, 2, 3 modulo *m*
If *q* is a prime, or at least not a divisor of *m* ±1, *m* ±2, or *m* ±3, this process can yield a large number of nonoverlapping quadruples for nonlinearization. This process can also be done with sextuples of rows, but the conditions for termination are more complex.

In general, these two methods, under proper conditions, can select nonoverlapping sets of equations from the linear orthomorphism for nonlinearization. Only a relatively small number of equations, evenly distributed, are left unmodified.

There are many other ways to go about this process, e.g., fitting sets of quadruples and sextuples of rows together without overlapping. This becomes a topological problem. The important point is that it is possible in this way to generate nonlinear orthomorphisms which are not piecewise linear.

### 4. MEASURES OF CRYPTOGRAPHIC BIAS

The author is unaware of any generally accepted measurable standard for freedom from bias in block substitutions of binary numbers. Two widely used criteria are *avalanching* (good or strict) and *bit independence*. In what follows, two other possible criteria are suggested: (1) balance, which is related to properties of the *n*-bit binary numbers as an algebraic group, and (2) transitivity, which is a property of certain permutation groups that in not commonly applied to block substitutions. Of the four, it appears to be possible to meet, at most, three criteria simultaneously.

### 4.1 Avalinching and Bit Independence

The strict avalanche criterion (SAC) is defined as the property that changing the *i*th bit in the input block causes a change in the *j*th bit in the output block one half of the time for all 1 ≤ *i, j* ≤ *n*, where *n* is the block size. The bit independence criterion (BIC) is defined as the property that changing the ith bit in the input block of the averages changes half the bits in the output block. (See ref. 1.) These properties can also be described in terms of the algebraic properties of the binary numbers of arbitrary block size.

*G*_{*n*} is the additive group of all *n*-bit binary numbers, where the symbol ⊕ means modulo 2 addition bitwise.

There are *n* maximal subgroups *H*_{*i*} which may be termed "basic" which are defined by the property that each block in *H*_{*i*} has 0 in the *i*th position. Numbering from left to right, *H*_{*n*} consists of all even numbers, and *H*_{*1*}, consists of all lower half numbers. In general: 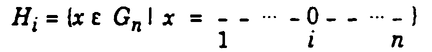 Clearly, *H*_{*i*} is characterized by the property that: 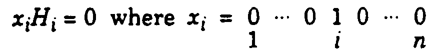 $\left|{\text{H}}_{\text{i}}\right| \text{=} \frac{\text{1}}{\text{2}} \left|{\text{G}}_{\text{n}}\right| {\text{= 2}}^{\text{n} \text{-1}} \text{.}$

There are a total of 2^{*n*} - 1 maximal subgroups (MSG) which can be generated from these basic MSG's by the operation:${\text{H}}_{\text{k}} \text{=} {\text{H}}_{\text{i}} \text{+} {\text{H}}_{\text{j}} \text{≡ (} {\text{H}}_{\text{i}} \text{∩} {\text{H}}_{\text{j}} \text{) ∪ (} {\overline{\text{H}}}_{\text{i}} \text{∩} {\overline{\text{H}}}_{\text{j}} \text{)}$ This is somewhat analogous to the Boolean rings described in ref. 2, section 9.4; however, the multiplicative semi-groups property defined by the intersection of sets does not apply here because the intersections of MSG's are not MSG's. The addition operation is actually the complement of that defined above, which would, in effect, define the sum of two MSG's to be the complement of another.

Changing the ith bit in some number *x* to obtain a new number *y* is equivalent to choosing y such 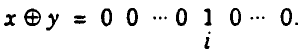 For a given *i* there are 2^{*n*}⁻¹ such pairs. SAC is equivalent to requiring that for 1 ≤ *i,j* ≤ *n Tx* ⊕ *Ty* has 0 as the *j*th bit one half of the time (no change) and 1 as the *j*th *n*-bit one half of the time (change). More formally, define:${\text{P}}_{\text{i}} \text{= {} \text{Tx} \text{⊕} \text{Ty} \text{|} \text{x} \text{⊕} \text{y} \text{= 0 ··· 0 1 0 ··· 0} where 1 is at the} \text{i} \text{th bit position.}$ *Note*: This implies that *x* ε *H*_{*i*} and *y* ε $\overline{\text{H}}$_{*i*} or vice versa. |*P*_{*i*}| ≤ 2^{*n*}⁻¹ since there are 2ⁿ⁻¹such pairs but the sums may not be distinct. Thus, SAC is equivalent to:$\left|{\text{P}}_{\text{i}} \text{∩} {\text{H}}_{\text{j}}\right| \text{=} \left|{\text{P}}_{\text{i}} \text{∩} {\overline{\text{H}}}_{\text{j}}\right| \text{=} \frac{\text{1}}{\text{2}} \left|{\text{P}}_{\text{i}}\right|$ for 1 ≤ *i,j* ≤*n n*² conditions.

*P*_{*i*} consists of 2^{*n*}⁻¹ *n*-bit numbers which may range from all the same to all different. Each bit results from adding a (unordered) pair (0,1), (0,0), (1,1). If the number of such pairs is, respectively, *a, b, c,* then *a + b + c* = 2^{*n*}⁻¹, the number of pairs defining *P*_{*i*}*.* The number of zeroes in the pairs is *a* + 2*b* = 2^{*n*}⁻¹ and the number of one's is *a* + 2*c* = 2^{*n*}⁻¹; therefore, *a* is even and the number of 1's and 0's appearing in each bit position of the 2^{*n*}⁻¹ numbers in *P*_{*i*} is even. For example, if *n* = 4, *P*_{*i*} will contain eight 4-bit numbers, perhaps not distinct but each bit position will contain 0, 2, 4, 6 or 8 one's. If they are not evenly divided (avalanching), the closest approximation will be 2:6.

Considering *P*_{*i*} a set of 2^{*n*}⁻¹ numbers, including multiple occurrences. a measure of approximate avalanching is $\frac{{\text{|P}}_{\text{i}} {\text{∩H}}_{\text{j}} \text{|}}{{\text{2}}^{\text{n-1}}}$ averaged over all *n*² *i,j* pairs. The bit independence criterion is related to avalanching. Consider the set *P*_{*i*} including the multiplicity of each member. To meet BIC, the number of zeroes and ones should be approximately equal in each block. For n odd, of course, this can never occur in an individual block. There are 2^{*n*}⁻¹ *n*-bit numbers (including duplicates) in *P*_{*i*} with a natal of *n*2^{*n*}⁻¹ binary bits. Let *NP*_{*i*} be the number of zeroes in the set *P*_{*i*}, including duplicates or multiple appearances. $\frac{{\text{NP}}_{\text{i}}}{{\text{}}_{\text{n}} {\text{2}}^{\text{n} \text{-1}}}$ is a measure of BIC for a given bit position. Overall, BIC specifies that: 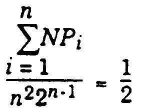 For a given *P*_{*i*}, let the numbers be enumerated as follows, where Z_{*ij*} is the _{*j*}th position of the *i*th number and *l* = 2^{*n*}⁻¹. 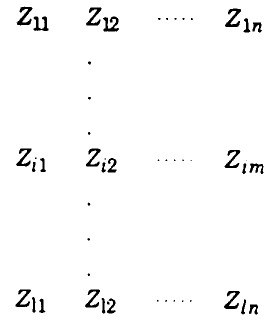 Then, avalanching specifies that the zeroes and ones in each column will be approximately evenly divided, and BIC specifies the equivalent condition on the rows.

Both SAC and BIC are usually referred to as bit level properties because they refer to relations between individual bits in the same and different *n*-bit numbers for a given *S*-box or mapping. Thus, if applied to orthomorphic mappings, these properties depend on the key variable or the particular set of *n* linearly independent numbers acted on by the generating functions.

### 4-2. Other Criteria for Lack of Bias

The previous section briefly described the maximal subgroups (MSG's) of the group *G*_{*n*} of *n*-bit binary numbers where the group operation (⊕) is bitwise addition modulo 2. There are *m* = 2^{*n*} - 1 such MSG's *H*₁, ····, *H*_{*m*} which themselves form a group under the operation of Boolean addition:${\text{H}}_{\text{k}} \text{=} {\text{H}}_{\text{i}} \text{+} {\text{H}}_{\text{j}} \text{≡(} {\text{H}}_{\text{i}} \text{∩} {\text{H}}_{\text{j}} \text{)∪(} {\overline{\text{H}}}_{\text{i}} \text{∩} {\overline{\text{H}}}_{\text{j}} \text{)}$ The *n* MSG's which are characterized by all having zero in a given bit position, *e.g*., the even numbers, are easy to visualize conceptually. They are implicitly used in the definition of avalanching; however, the other *m* - *n* MSG's are of equal significance algebraically, and any *n* linearly independent MSG's can be used to generate the entire set. In ref. 3, the following was introduced:

Definition: A bijective mapping on *G*_{*n*} is said to be balanced if it maps each maximal subgroup, *i.e*., each subgroup of order 2^{*n*} - 1, half into itself and half into its complement.

If *T* is the bijective mapping, this means |*TH*_{*i*} ∩ *H*_{*i*}| = |*TH*_{*i*} ∩ *H*_{*i*}| = 2^{*n*}⁻² 1 ≤ *i* ≤ 2^{*n*} - 1. It was also shown in ref. 3 that *T* is an orthomorphism if and only if it is balanced. Thus, balance is a unique and universal property of orthomorphic block substitutions at the integer level, independent of linearity or key variable. A practical consequence is that in design of an orthomorphic *S*-box, no special effort need be made to incorporate or verify this property.

Transitivity is not an obvious quality to attribute to *S*-boxes since it is a property of certain permutation groups. If we are considering permutations on *m* = 2^{*n*} - 1 numbers (or letters) of which block substitutions are an example, then the definition from ref. 6, pg. 82, is pertinent:

Definition: A group of permutations is said to be transitive if it contains at least one permutation which transforms any one of the *m* letters (numbers) into any other letter (number).

However, by prop. 6 of ref. 3, linear orthomorphisms form a transitive group on the 2^{*n*} - 1 nonfixed numbers. In fact, this is also true for affine orthomorphisms. This property, which implies a thorough mixing at the integer level is, of course, a property not of a single block substitution but of a group of them.

The collection of all possible block substitutions or bijective mappings on *G*_{*n*}, viewed as permutations, constitute a transitive group, namely *P*_{*m*}, the symmetric group on *m* elements and of order *m*!. Other transitive subgroups can be generated by taking all powers of a maximal permutation, that is, one with no proper subcycles. In the case of linear or automorphic orthomorphisms, this is particularly easy because of the property of being able to shift columns in the array of equations defining the automorphisms. Maximal nonlinear orthomorphisms could be used to generate a transitive subgroup but, in general, the other members would not be orthomorphisms.

### 4-3. Applications to Orthomorphisms

If *T* is a linear (automorphic) or affine orthomorphism, it is clear that strict avalanching is not possible. In this case, *Tx* ⊕ *Ty* = *T*(*x* ⊕ *y*) + *S* where *S* is a fixed number (*S* = 00···0 if *T* is linear). Thus, *P*_{*i*} consists of a single number and |*P*_{*i*} ∩ *H*_{*j*}| = 0 or 1 and |*P*_{*i*} ∩ *H*_{*j*}| = 1 or 0. However, the *n* numbers *P*_{*i*} may have an equal distribution of zeros and ones so that bit independence is possible.

On the other hand, the nonlinear orthomorphisms constructed from linear ones have shown good avalanching and BIC. An example is given in the appendix of a nonlinear orthomorphism with strict avalanching and a BIC ratio of exactly $\frac{\text{1}}{\text{2}}$

All orthomorphisms and only orthomorphisms have balance as defined in ref. 3. Linear and affine orthomorphisms are represented by transitive groups of Permutations. Thus, over the family of block substitutions, each clear text block is mapped to each possible cipher text block except for the fixed point which may be varied. This can be summarized as follows:
a. SAC and BIC: Bit level properties depending on the key variable
b. Balance: A universal integer level property of all orthomorphisms
c. Transitivity: A universal integer level property for groups of linear or affine orthomorphisms
and also:

| | Orthomorphisms | | Other |
|---|---|---|---|
| Property | Nonlinear | Linear/Affine | Substitutions |
| Avalanching | Yes | No | Yes |
| Bit Independence | Yes | Yes | Yes |
| Balance | Yes | Yes | No |
| Transitivity | No | Yes | Possibly* |

| | | | |
|---|---|---|---|
| * This is a group property and depends on selecting a block substitution which is maximal, i.e., no cycles, and then taking all powers of it. | | | |

### 6. REFERENCES

1. "The Structured Design of Cryptographically Good S-Boxes," Adams and Tavares, J, Cryptology (1990) 3:27-41
2. "Fundamentals of Mathematics," Vol 1, Behnke, Bachman, *et. al.*, MIT Press 1986.
6. "Introduction to the Theory of Finite Groups," W. Ledermann, Oliver and Boyd, 1964.
7. "Shift Register Sequences," S.W. Golomb, Aegean Park Press, 1982.

### APPENDIX (of Appendix 2)

### A. LINEAR ORTHOMORPHISMS VIEWED FROM VARIOUS PERSPECTIVES

As pointed out in section 2, a linear orthomorphism can be viewed and represented in several ways. For example, consider *n* = 4, with generating function *x*_{*k*} = *x*_{*k*}₋₄ ⊕ *x*_{*k*}₋₃ for which *p* = 12, and with base set or linearly independent set:${\text{x}}_{\text{1}} \text{= 0001,} {\text{x}}_{\text{2}} \text{= 0010,} {\text{x}}_{\text{3}} \text{= 0100,} {\text{x}}_{\text{4}} \text{= 1000.}$ This defines the table:

**Table 1**

| Column 1 | | Column 2 | | Column 3 |
|---|---|---|---|---|
| 0000 | ⊕ | 0000 | = | 0000 |
| 1001 | ⊕ | 0001 | = | 1000 |
| 0001 | ⊕ | 0010 | = | 0011 |
| 0010 | ⊕ | 0100 | = | 0110 |
| 0100 | ⊕ | 1000 | = | 1100 |
| 1000 | ⊕ | 0011 | = | 1011 |
| 0011 | ⊕ | 0110 | = | 0101 |
| 0110 | ⊕ | 1100 | = | 1010 |
| 1100 | ⊕ | 1011 | = | 0111 |
| 1011 | ⊕ | 0101 | = | 1110 |
| 0101 | ⊕ | 1010 | = | 1111 |
| 1010 | ⊕ | 0111 | = | 1101 |
| 0111 | ⊕ | 1110 | = | 1001 |
| 1110 | ⊕ | 1111 | = | 0001 |
| 1111 | ⊕ | 1101 | = | 0010 |
| 1101 | ⊕ | 1001 | = | 0100 |

It is easily verified that the mapping from column 1 to column 3 (or any other pair of columns) is linear under addition modulo 2. That same mapping could be represented by a table in which *y* (column 3) is a function *f*(*x*) of *x* (column 1). In decimal notation this becomes:

**Table 2**

| *x* | | *y* |
|---|---|---|
| 0 | → | 0 |
| 1 | | 3 |
| 2 | | 6 |
| 3 | | 5 |
| 4 | | 12 |
| 5 | | 15 |
| 6 | | 10 |
| 7 | | 9 |
| 8 | | 11 |
| 9 | | 8 |
| 10 | | 13 |
| 11 | | 14 |
| 12 | | 7 |
| 13 | | 4 |
| 14 | | 1 |
| 15 | | 2 |

It is easy to see that this is nonlinear under addition modulo 16 or by representing it in graphical form. The mapping can also be represented as a permutation:
(0) (1, 3, 5, 15, 2, 6, 10, 13, 4, 12, 7, 9, 6, 11,14)
It can also be written in terms of Boolean functions by new.iiting column 1 in the natural order of the numbers and correspondingly rearranging column 3. The Boolean functions describe bits in column 3 as functions of blocks in column 1.

**Table 3**

| Column 1 | | | | Column 3 | | | |
|---|---|---|---|---|---|---|---|
| *b*₁ | *b*₂ | *b*₃ | *b*₄ | *f*₁ | *f*₂ | *f*₃ | *f*₄ |
| 0 | 0 | 0 | 0 | 0 | 0 | 0 | 0 |
| 0 | 0 | 0 | 1 | 0 | 0 | 1 | 1 |
| 0 | 0 | 1 | 0 | 0 | 1 | 1 | 0 |
| 0 | 0 | 1 | 1 | 0 | 1 | 0 | 1 |
| 0 | 1 | 0 | 0 | 1 | 1 | 0 | 0 |
| 0 | 1 | 0 | 1 | 1 | 1 | 1 | 1 |
| 0 | 1 | 1 | 0 | 1 | 0 | 1 | 0 |
| 0 | 1 | 1 | 1 | 1 | 0 | 0 | 1 |
| 1 | 0 | 0 | 0 | 1 | 0 | 1 | 1 |
| 1 | 0 | 0 | 1 | 1 | 0 | 0 | 0 |
| 1 | 0 | 1 | 0 | 1 | 1 | 0 | 1 |
| 1 | 0 | 1 | 1 | 1 | 1 | 1 | 0 |
| 1 | 1 | 0 | 0 | 0 | 1 | 1 | 1 |
| 1 | 1 | 0 | 1 | 0 | 1 | 0 | 0 |
| 1 | 1 | 1 | 0 | 0 | 0 | 0 | 1 |
| 1 | 1 | 1 | 1 | 0 | 0 | 1 | 0 |

From this, the Boolean functions can be written:${\text{f}}_{\text{1}} \text{=} {\text{b}}_{\text{1}} \text{⊕} {\text{b}}_{\text{2}}$${\text{f}}_{\text{2}} \text{=} {\text{b}}_{\text{2}} \text{⊕} {\text{b}}_{\text{3}}$${\text{f}}_{\text{3}} \text{=} {\text{b}}_{\text{1}} \text{⊕} {\text{b}}_{\text{3}} \text{⊕} {\text{b}}_{\text{4}}$${\text{f}}_{\text{4}} \text{=} {\text{b}}_{\text{1}} \text{⊕} {\text{b}}_{\text{4}}$

The generating function *x*_{*k*} = *x*_{*k*}₋₄ ⊕ *x*_{*k*}₋₄ operates universally on any set of 4 linearly independent 4-bit numbers; however, the Boolean functions depend on the specific mapping. For example, consider the same generating function but applied to the base:${\text{x}}_{\text{1}} \text{= 0011,} {\text{x}}_{\text{2}} \text{= 0110,} {\text{x}}_{\text{3}} \text{= 1100,} {\text{x}}_{\text{4}} \text{= 1000}$ This defines a new Table:

**Table 4**

| Column 1 | | Column 2 | | Column 3 |
|---|---|---|---|---|
| 0000 | ⊕ | 0000 | = | 0000 |
| 1001 | ⊕ | 0011 | = | 1000 |
| 0011 | ⊕ | 0110 | = | 0101 |
| 0110 | ⊕ | 1100 | = | 1010 |
| 1100 | ⊕ | 1000 | = | 0100 |
| 1000 | ⊕ | 0101 | = | 1101 |
| 0101 | ⊕ | 1010 | = | 1111 |
| 1010 | ⊕ | 0100 | = | 1110 |
| 0100 | ⊕ | 1101 | = | 1001 |
| 1101 | ⊕ | 1111 | = | 0010 |
| 1111 | ⊕ | 1110 | = | 0001 |
| 1110 | ⊕ | 1001 | = | 0111 |
| 1001 | ⊕ | 0010 | = | 1011 |
| 0010 | ⊕ | 0001 | = | 0011 |
| 0001 | ⊕ | 0111 | = | 0110 |
| 0111 | ⊕ | 1011 | = | 1100 |

As in the first example, to obtain the Boolean functions, it is convenient to rearrange columns 1 and 3:

**Table 5**

| Column 1 | | | | Column 3 | | | |
|---|---|---|---|---|---|---|---|
| *b*₁ | *b*₂ | *b*₃ | *b*₄ | *f*₁ | *f*₂ | *f*₃ | *f*₄ |
| 0 | 0 | 0 | 0 | 0 | 0 | 0 | 0 |
| 0 | 0 | 0 | 1 | 0 | 1 | 1 | 0 |
| 0 | 0 | 1 | 0 | 0 | 0 | 1 | 1 |
| 0 | 0 | 1 | 1 | 0 | 1 | 0 | 1 |
| 0 | 1 | 0 | 0 | 1 | 0 | 0 | 1 |
| 0 | 1 | 0 | 1 | 1 | 1 | 1 | 1 |
| 0 | 1 | 1 | 0 | 1 | 0 | 1 | 0 |
| 0 | 1 | 1 | 1 | 1 | 1 | 0 | 0 |
| 1 | 0 | 0 | 0 | 1 | 1 | 0 | 1 |
| 1 | 0 | 0 | 1 | 1 | 0 | 1 | 1 |
| 1 | 0 | 1 | 0 | 1 | 1 | 1 | 0 |
| 1 | 0 | 1 | 1 | 1 | 0 | 0 | 0 |
| 1 | 1 | 0 | 0 | 0 | 1 | 0 | 0 |
| 1 | 1 | 0 | 1 | 0 | 0 | 1 | 0 |
| 1 | 1 | 1 | 0 | 0 | 1 | 1 | 1 |
| 1 | 1 | 1 | 1 | 0 | 0 | 0 | 1 |

From this, the Boolean functions can be written:${\text{f}}_{\text{1}} \text{=} {\text{b}}_{\text{1}} \text{⊕} {\text{b}}_{\text{2}}$${\text{f}}_{\text{2}} \text{=} {\text{b}}_{\text{1}} \text{⊕} {\text{b}}_{\text{4}}$${\text{f}}_{\text{3}} \text{=} {\text{b}}_{\text{3}} \text{⊕} {\text{b}}_{\text{4}}$${\text{f}}_{\text{4}} \text{=} {\text{b}}_{\text{1}} \text{⊕} {\text{b}}_{\text{2}} \text{⊕} {\text{b}}_{\text{3}}$ Except for *f*₁, these differ from the previous example.

### B. SELECTION OF EQUATIONS OR ROWS IN AN AUTOMORPHIC (LINEAR) ORTHOMORPHISM FOR NONLINEARIZATION

Section 3.5 suggested various ways to choose nonoverlapping quadruples or sextuples of equations for nonlinearization. The idea is to nonlinearize a large fraction of the *m* = 2^{*n*} - 1 equations in the array which defines the orthomorphic mapping. Since 2^{*n*} - 1 is odd, it will be possible by the methods of section 3.2 to modify all the equations because the process is applied to sets with four or six members. There is no optimal process for all block sizes or even for different generating functions with the same block size. Following are some examples for block sizes *n* = 4, 5, 6, 7, and 8.

For *n* = 4, there is just one pair of conjugate generating functions with *p* = 4, *q* = 8 and *p* = 12, *q* = 11, respectively. The corresponding maximal density of rows is given by:

**Table 6**

| | | | | | | |
|---|---|---|---|---|---|---|
| | 1 | 2 | 3 | 4 | 8 | 9 |
| | 5 | 6 | 7 | | 12 | |
| and | | | | | | |
| | 1 | 2 | 3 | 4 | 11 | 12 |
| | 5 | 6 | 7 | | 15 | |

for a modification of 10 of the 15 rows.

For *n* = 5, the optimum again is a hybrid mix. For example, for *x*_{*k*} = *x*_{*k*}₋₅ ⊕ *x*ₖ₋₂, *p* = 18, *q* = 23, and *m* = 31. Twenty-four rows out of 31 can be modified, selecting:

**Table 7**

| | | | | | |
|---|---|---|---|---|---|
| 1 | 2 | 3 | 4 | 23 | 24 |
| 7 | 8 | 9 | 10 | 29 | 30 |
| 14 | 15 | 16 | | 5 | |
| 20 | 21 | 22 | | 11 | |
| 25 | 26 | 27 | | 6 | |

For *p* = 19, *q* = 11 corresponding to *x*_{*k*} = *x*_{*k*}₋₅ ⊕ *x*_{*k*}₋₄ ⊕ *x*_{*k*}₋₂ ⊕ *x*_{*k*}₋₁ one can do a little better with 28 rows out of 31 for modification by selecting:

**Table 8**

| | | | | | |
|---|---|---|---|---|---|
| 1 | 2 | 3 | 4 | 11 | 12 |
| 7 | 8 | 9 | 10 | 17 | 18 |
| 13 | 14 | 15 | 16 | 23 | 24 |
| 19 | 20 | 21 | 22 | 29 | 30 |
| 26 | 27 | 29 | | 5 | |

For *n* = 6 and *x*_{*k*} = *x*_{*k*}₋₆ ⊕ *x*_{*k*}₋₁, the shift *p* = 6 and *q* = 40. Since *m* = 63 of which 7 is a factor, *d* = 7 is a candidate for a spacing as described in section 3.5. Also, for *q* = 40, 7 is not a divisor of *q*, *q* - 1, ···, *q* - 4. This yields 54 out of 63 rows for modification as follows:

**Table 9**

| | | | | | |
|---|---|---|---|---|---|
| 1 | 2 | 3 | 4 | 40 | 41 |
| | | . | | | |
| | | . | | | |
| | | . | | | |
| 1 + *a*7 | 2 + *a*7 | 3 + *a*7 | 4 + *a*7 | 40 + *a*7 | 41 + *a*7 |
| | | . | | | |
| | | . | | | |
| | | . | | | |
| 57 | 58 | 59 | 60 | 33 | 34 |

Once again, the selection of sets of equations or rows for modification depends on the generating function. This particular selection will not work for most other values of q corresponding to *n* = 6.

For *n* = 7, *m* = 127 is a Mersenne prime, so the previous shortcut is not available; however, for certain generating functions, one can do quite well. Consider *n* = 7, *x*_{*k*} = *x*_{*k*}₋₇ ⊕ *x*_{*k*}₋₅ ⊕ *x*_{*k*}₋₄ ⊕ *x*ₖ₋₃ ⊕ *x*_{*k*}₋₂ ⊕ *x*_{*k*}₋₁ for which *p* = 19 and *q* = 9. Take rows as follows:

**Table 10**

| | | | | | | |
|---|---|---|---|---|---|---|
| | 1 | 2 | 3 | | 9 | |
| then, | | | | | | |
| | 5 | 6 | 7 | 8 | 13 | 14 |
| | 10 | 11 | 12 | | 18 | |
| | 15 | 16 | 17 | | 23 | |
| Following the same pattern of a sextuple followed by two quadruples, through: | | | | | | |
| | 103 | 104 | 105 | 106 | 111 | 112 |
| | 108 | 109 | 110 | | 116 | |
| | 113 | 114 | 115 | | 121 | |
| and then completing with rows: | | | | | | |
| | 118 | 119 | 120 | | 126 | |
| | 123 | 124 | 125 | | 4 | |

124 out of 127 equations can thus be modified, omitting only 117, 122, and 127. Other variations on this will work just as well omitting only three equations.

Also for *n* = 7, *x*_{*k*} = *x*_{*k-7*} ⊕ *x*_{*k*}₋₆ ⊕ *x*_{*k*}₋₄ ⊕ *x*_{*k*}₋₂, *p* = 107 and *q* = 10, an analogous system works taking two sextuples and one quadruple followed by adjustments among the last rows. Again, 124 out of 127 equations can be selected for modification; however, this density or efficiency does not appear to hold for all generating functions.

For *n* = 8, consider the generating function *x*_{*k*} = *x*_{*k*}₋₈ ⊕ *x*_{*k*}₋₆ ⊕ *x*_{*k*}₋₅ ⊕ *x*_{*k*}₋₃ for which *p* = 16, *q* = 54, and *m* = 2^{*n*} - 1 = 255. We will select quadruples of rows consisting of successive triples, starting with the first row other than the identity, plus the row which is the triple sum of the first three. Referring to section 3.5, choose the row spacing *d* = 5. 5 is a factor of *m* and relatively prime to *q* - 1 = 53, *q* - 2 = 52, and *q* - 3 = 51. This will lead to selection of the following rows:

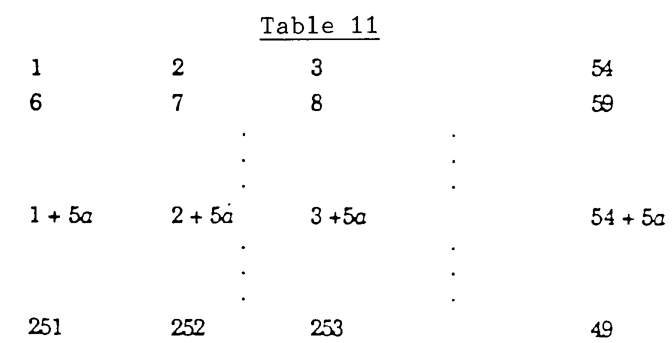

where 0 ≤ *a* ≤ 50. This selects 51 × 4 = 204 rows or equations for nonlinearization from the total of 255 in the orthomorphic array. Left out are row 5 and all multiples of 5.

This spacing, however, will not work efficiently if We choose sextuples of rows because *q* - 4 = 50, a multiple of 5. In fact, when *a*= 10, 4 + 10*a*= 54, so that the process will terminate with just 6 × 10 = 60 rows. However, there are several ways in which the remaining 195 rows can be divided into quadruples or sextuples, more or less piecemeal.

The spacing *d* = 17 is also a divisor of *m* = 255, but it is also a divisor of *q* - 3 = 51 and, hence, is not an efficient spacing.

Again, for *n* = 8 but with the generating function *x*_{*k*} = *x*_{*k*}₋₈ ⊕ *x*_{*k*}₋₄ ⊕ *x*_{*k*}₋₃ ⊕ *x*_{*k*}₋₂ for which *p* = 25, *q* = 60, and *m* = 255, *d* = 17 is a factor of *m* but now it is not a divisor of *q* = 60, *q* - 1 = 59, ····, *q* - 4 = 56. Sextuples of rows can be selected as follows:

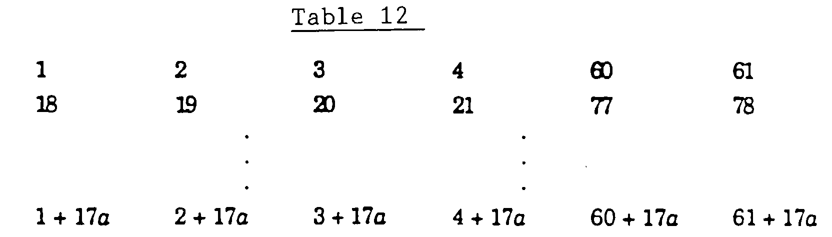

This process terminates when *a*= 14, for a total of 15 × 6 = 90 rows. For *a*= 15, 1 + 17*a* = 256 ≡ 1 modulo *m*, and, so, the process repeats; however, one can start again as follows:

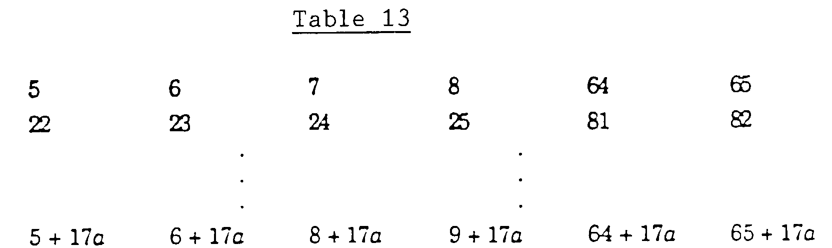

This process again terminates when *a*= 14 for 15 × 6 = 90 additional rows. Again, at *a*= 15 the process repeats. This gives a total of 180 rows. None of the remaining 75 rows contain triples with corresponding sums.

However, as in *p* = 16, *q* = 54, quadruples can be selected with a spacing of *d* = 5 again because 5 is relatively prime to *q* - 1 = 59, *q* - 2 = 58, and *q* - 3 = 57.

This is easy to apply for suitable combinations of *m* and q, that is, for cooperative generating functions; however, it is not obvious how many equations representing the linear orthomorphism must be modified to get a "good" nonlinear mapping.

### C. THE DEPENDENCE OF AVALANCHING AND BIT INDEPENDENCE ON SYSTEM PARAMETERS

In section 4-1 it was pointed out that avalanching and bit independence depend on the actual numbers in the block substitution and not just the algebraic structure. Ti illustrate this, we take an *n* = 4 bit family of block substitutions defined by a linear orthomorphism with generating function *x*_{*k*} = *x*_{*k*}₋₄ ⊕ *x*_{*k*}₋₃ for which the shift *p* = 12 and *q* = 11.

As the first example, we generate a nonlinear orthomorphism using rows:

**Table 14**

| | | | |
|---|---|---|---|
| 1 | 2 | 3 | 11 |
| 5 | 6 | 7 | 15 |

and with base or linearly independent set *x*₁ = 0001, *x*₂ = 0010, *x*₃ = 0100, *x*₄ = 1000. This is a nonlinearized version of the first linear orthomorphic mapping in section A of this appendix. As modified, it becomes:

**Table 15**

| | | | | |
|---|---|---|---|---|
| 0000 | ⊕ | 0000 | = | 0000 |
| 1010 | ⊕ | 0010 | = | 1000 |
| 0010 | ⊕ | 0001 | = | 0011 |
| 0001 | ⊕ | 0111 | = | 0110 |
| 0111 | ⊕ | 1110 | = | 1001 |
| 1110 | ⊕ | 1111 | = | 0001 |
| 1111 | ⊕ | 1101 | = | 0010 |
| 1101 | ⊕ | 0110 | = | 1011 |
| 0110 | ⊕ | 0011 | = | 0101 |
| 0011 | ⊕ | 1001 | = | 1010 |
| 1001 | ⊕ | 0100 | = | 1101 |
| 0100 | ⊕ | 1000 | = | 1100 |
| 1000 | ⊕ | 1100 | = | 0100 |
| 1100 | ⊕ | 1011 | = | 0111 |
| 1011 | ⊕ | 0101 | = | 1110 |
| 0101 | ⊕ | 1010 | = | 1111 |

To measure avalanching and bit independence as described in section 4-1, we first enumerate the set *P*₁ = |*Tx* ⊕ *Ty | x* ⊕ *y* = 1000}, that is, pairs *x, y* which differ only in the first bit position. For *n* = 4, the sixteen 4-bit number pairs form eight pairs, not necessarily distinct. So, including multiplicity of appearances |*P*₁| = |*P*₂| = |*P*₃| = |*P*₄| = 8. Also recall that *II*_{*l*} is the maximal subgroup of *n*-bit numbers with 0 in the *i*th bit position. Here, for *n* = 4, *H*₄ is the subgroup of even numbers, and *H*₁ is the subgroup of lower half numbers, *etc*. For *P*₁, the tabulation is on the following worksheet. Each |*P*₁ ∩ *H*ⱼ| = 4 which means that 4 out of 8, or one half of the bits in each member of *P*₁ is 0 in the *j*th bit position, *i.e*., in the columnar tabulation, each column is comprised of hall 0's and half 1's. The number of 0's in each member of *P*₁ is tabulated, *i.e*., horizontal tabulation. The total number of 0's, *NP*₁ = 16 out of 32 bits, so that half are 0's.

When the same tabulation is made for *P*₁, *P*₃, *P*₄ it turns out that |*P*₁ ∩ *H*ⱼ| = 4 for all 16 pairs, *NP*₁ = 16 for each *p*₁ so that the avalanching is strict and

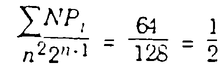

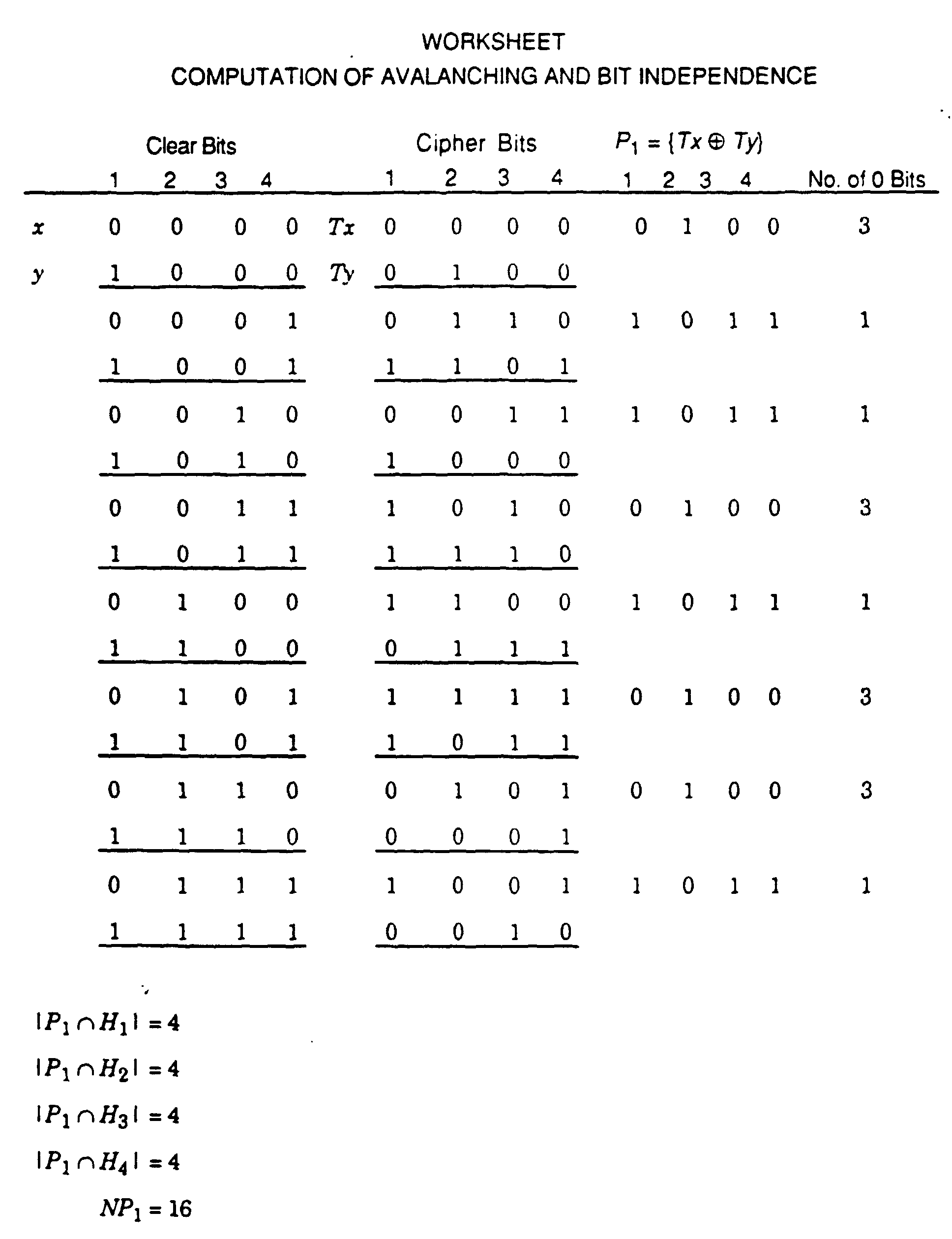

For comparison, we can now use the second example in section A, nonlinearized with the same set of equations, and differing only in that a new base set is used:${\text{x}}_{\text{1}} \text{= 0011,} {\text{x}}_{\text{2}} \text{= 0110,} {\text{x}}_{\text{3}} \text{= 1100,} {\text{x}}_{\text{4}} \text{= 1000}$ This second nonlinear orthomorphism can be written as follows:

**Table 16**

| | | | | |
|---|---|---|---|---|
| 0000 | ⊕ | 0000 | = | 0000 |
| 1110 | ⊕ | 0110 | = | 1000 |
| 0110 | ⊕ | 0011 | = | 0101 |
| 0011 | ⊕ | 1001 | = | 1010 |
| 1001 | ⊕ | 0010 | = | 1011 |
| 0010 | ⊕ | 0001 | = | 0011 |
| 0001 | ⊕ | 0111 | = | 0110 |
| 0111 | ⊕ | 1010 | = | 1101 |
| 1010 | ⊕ | 0101 | = | 1111 |
| 0101 | ⊕ | 1011 | = | 1110 |
| 1011 | ⊕ | 1100 | = | 0111 |
| 1100 | ⊕ | 1000 | = | 0100 |
| 1000 | ⊕ | 0100 | = | 1100 |
| 0100 | ⊕ | 1101 | = | 1100 |
| 1101 | ⊕ | 1111 | = | 0010 |
| 1111 | ⊕ | 1110 | = | 0001 |

Making the same computation as on the sample worksheet, the results are as follows:$\left|{\text{P}}_{\text{1}} \text{∩} {\text{H}}_{\text{1}}\right| \text{=} \left|{\text{P}}_{\text{1}} \text{∩} {\text{H}}_{\text{2}}\right| \text{= 0,} \left|{\text{P}}_{\text{1}} \text{∩} {\text{H}}_{\text{3}}\right| \text{= 8}$ and |*P*ᵢ∩*H*ⱼ| = 4 for the remaining 13. *NP*₁ = 12. and *NP*₂ = *NP*₃ = *NP*₄ = 16. Thus: 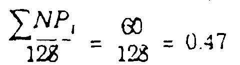 The avalanching is no longer strict but since almost half the time there is a bit change, it might be called "good".

For the third example, we again return to the same linear orthomorphism with *p* = 12 and *q* = 11, but this time nonlinearize it with a partially different collection of rows, that is, a sextuple and a quadruple:

**Table 17**

| | | | | | |
|---|---|---|---|---|---|
| 1 | 2 | 3 | 4 | 11 | 12 |
| 13 | 14 | 15 | | 8 | |

However, the same base or linearly independent set is used as in the first example, that is, *x*₁ = 0001, *x*₂ = 0010, *x*₃ = 0100, *x*₄ = 1000. The third nonlinear orthomorphism can be written as follows:

**Table 18**

| | | | | |
|---|---|---|---|---|
| 0000 | ⊕ | 0000 | = | 0000 |
| 1010 | ⊕ | 0010 | = | 1000 |
| 0010 | ⊕ | 1110 | = | 1100 |
| 1110 | ⊕ | 1001 | = | 0111 |
| 1001 | ⊕ | 0100 | = | 1101 |
| 0100 | ⊕ | 0111 | = | 0011 |
| 0111 | ⊕ | 0001 | = | 0110 |
| 0001 | ⊕ | 1000 | = | 1001 |
| 1000 | ⊕ | 0011 | = | 1011 |
| 0011 | ⊕ | 0110 | = | 0101 |
| 0110 | ⊕ | 1100 | = | 1010 |
| 1100 | ⊕ | 1101 | = | 0001 |
| 1101 | ⊕ | 1111 | = | 0010 |
| 1111 | ⊕ | 1011 | = | 0100 |
| 1011 | ⊕ | 0101 | = | 0100 |
| 0101 | ⊕ | 1010 | = | 1111 |

The results now are:$\left|{\text{P}}_{\text{2}} \text{∩} {\text{H}}_{\text{3}}\right| \text{= 0} \left|{\text{P}}_{\text{i}} \text{∩} {\text{H}}_{\text{j}}\right| \text{= 4 for the other 15 sets}$${\text{NP}}_{\text{2}} \text{= 12 and} {\text{NP}}_{\text{1}} \text{=} {\text{NP}}_{\text{3}} \text{=} {\text{NP}}_{\text{4}} \text{=16}$ Thus: 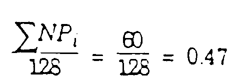 and the avalanching, while not strict, is closer to it by some visceral measure than in the second example.

### APPENDIX 3

### METHODS OF NON-LINEAR DYNAMIC SUBSTITUTION

1. Using the Generating Function and Base Set, generate the set of Linear Orthomorphism Equations: 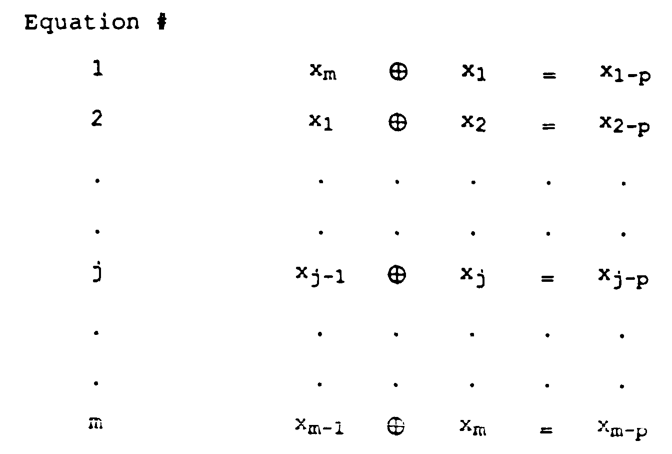 Where m = 2ⁿ - 1
2. Determine q such that xq = x₁ ⊕ x₂ ⊕ x₃
3. Based on q and the factors of m determine:
   a) Which of the following two sets of Equations to be nonlinearized for each iteration of a = 0, 1, 2, .. I:
      Set 1 = B+ad, B+1+ad, B+2+ad and B+q-1+ad
      Set 2 = B+ad, B+1+ad, B+2+ad, B+3+ad, B+q-1+ad, B+q+ad Where B is the Beginning Equation and may be any number between 1 and m, inclusive, and d is defined below.
   b) The spacing, d, between successive sets of nonlinearized equations (e.g., equations B+3d, B+1+3d, B+2+3d and B+q-1+3d will be nonlinearized in one iteration and then, in the next iteration, equations B+4d, B+1+4d, B+2+4d and B+q-1+4d will be nonlinearized).
      Note: In some instances, both Set 1 and Set 2 will be used alternately or in some other pattern.
4. Starting with a = 0 and stopping when either a = I (the input number of iterations) or when the process attempts to work on rows already nonlinearized, iteratively perform the nonlinearizing algorithm defined below:
   If Set 1 is being nonlinearized, add vectorially to each of the Set 1 equations,${\text{(x}}_{\text{B+ad}} {\text{⊕ x}}_{\text{B+1+ad}} {\text{) ⊕ (x}}_{\text{B+ad}} {\text{⊕ x}}_{\text{B+1+ad}} \text{) = θ.}$
   If Set 2 is being nonlinearized,
   add vectorially to equations B+ad and B+g-1+ad,${\text{(x}}_{\text{B+ad}} {\text{⊕ x}}_{\text{B+1+ad}} {\text{) ⊕ (x}}_{\text{B+ad}} {\text{⊕ x}}_{\text{B+1+ad}} \text{) = θ;}$ add vectorially to equations B+1+ad and B+2+ad,${\text{(x}}_{\text{B+ad}} {\text{⊕ x}}_{\text{B+2+ad}} {\text{) ⊕ (x}}_{\text{B+ad}} {\text{⊕ x}}_{\text{B+2+ad}} \text{) = θ; and}$ add vectorially to equations B+3+ad and B+Q+ad,${\text{(x}}_{\text{B+1+ad}} {\text{⊕ x}}_{\text{B+2+ad}} {\text{) ⊕ (x}}_{\text{B+1+ad}} {\text{⊕ x}}_{\text{B+2+ad}} \text{) = θ.}$
   Note: In all cases, if any equation number or index to x is greater than m, the value of m minus that number will be used instead of that number (e.g., if B+1+ad is greater than m, m - (B+1+ad) will be used instead).
5. Generate the naturally ordered Encryption Look-up Table and De-encryption Look-up Table which reflect the Orthomorphic Encryption Permutation and the Orthomorphic De-encryption Permutation resulting from the Nonlinear Orthomorphism Equations generated in step 4. The Nonlinear Dynamic Substitution Device is comprised of these look-up tables plus mechanisms for changing the transformation fixed point.
   As an alternative to the Look-up Table, two sets of modified equations can be used:
   For encryption, the clear text is column 1, which is encrypted into the cipher text in column 3: 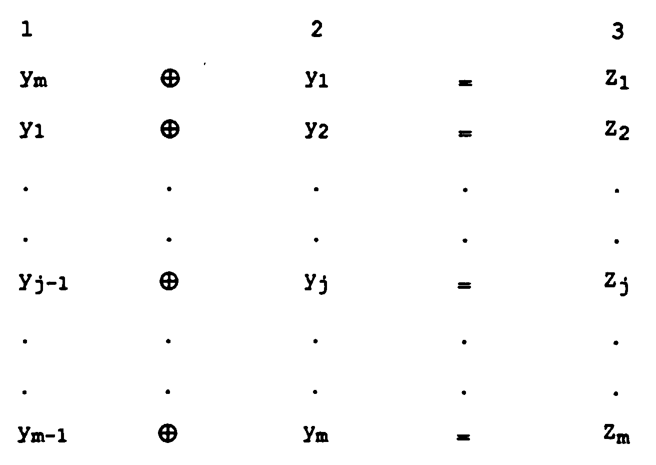
   Columns 1 and 2 are in the same order but shifted by one position. The numbers in column 3 are in a different order.
   For decryption, the cipher text in column 3 is de-encrypted into the clear text in column 1 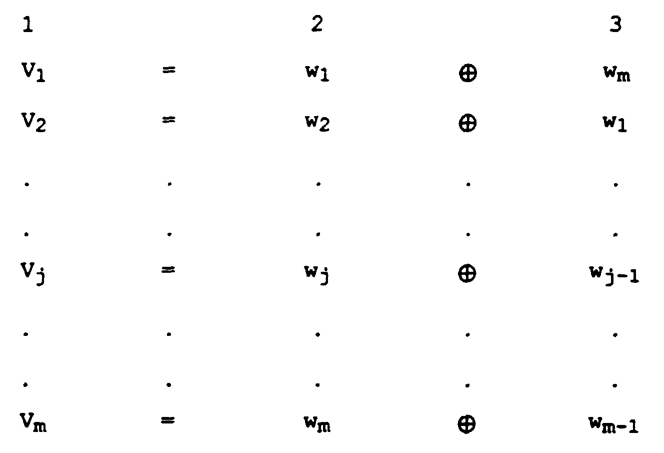 The order of the rows of equations have now been arranged leaving the individual equations unchanged, so that columns 2 and 3 are in the same order, but shifted by one position, the numbers in column 1 are now in a different order from those in columns 2 and 3.

## Claims

1. A method of encryption by substituting for any one of the 2ⁿ unique clear text blocks of n bit binary numbers an associated unique encrypted block of n bit binary numbers comprising the step of:
(a) finding a first matrix of 2ⁿ equations, each equation representing the modulo 2 addition of one of the 2ⁿ clear text blocks, xⱼ₋₁, with a unique one of 2ⁿ n bit numbers, xⱼ, to provide an associated unique intermediate n bit block, xⱼ₋ₚ, all of the equations in the first matrix of 2ⁿ equations having the property that the vector sum modulo 2 of any number of the equations also being one of the equations in the first matrix, the equations including the null equation Θ ⊕ Θ = Θ and the remaining 2ⁿ - 1 equations being orderable as follows: 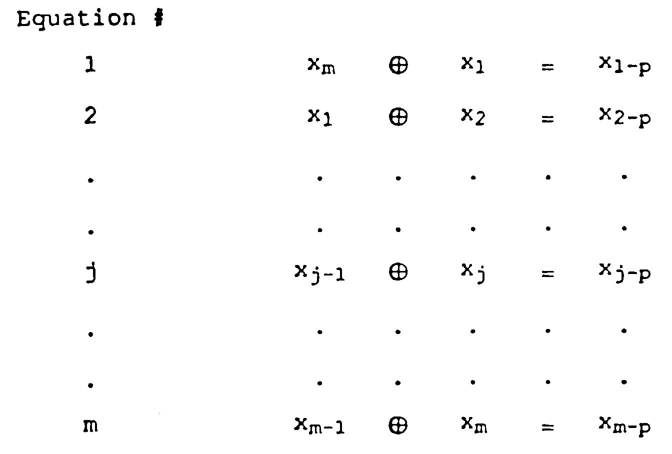 where m = 2ⁿ - 1 and p is an integer and wherein the vector is constituted by three components corresponding to the three numbers x in each equation;
characterized by the additional steps of
(b) modifying a plurality of the nonzero 2ⁿ - 1 equations in the first matrix of 2ⁿ equations to provide a second matrix of 2ⁿ equations, the plurality of equations being modified so that the second matrix of equations includes the 2ⁿ clear text blocks xⱼ₋₁ in the same order as the 2ⁿ clear text blocks xⱼ₋₁ of the first matrix of equations, with the unique set of 2ⁿ n bit numbers xᵢ of the second matrix of equations in different order from that of the unique set of 2ⁿ n bit numbers xⱼ of the first matrix of equations, the different order being such that the modulo 2 addition of one of the 2ⁿ clear text blocks xⱼ₋₁ of the second matrix of equations with the corresponding unique n-bit block in the reordered unique set 2ⁿ n bit number xᵢ of the second matrix of equations provides an associated unique n-bit block (xₖ₋ₚ), wherein each of the modified equations in the plurality is not the sum modulo 2 of any number of the unmodified equations left over and not included in the modified plurality of equations; the second matrix of 2ⁿ equations consisting of the modified plurality and the remaining unmodified equations from the first matrix of 2ⁿ equations; and
(c) for each clear text block to be encrypted, adding modulo 2 to that block, the unique one of the 2ⁿ n bit numbers associated therewith in accordance with the associated equation of the second matrix of 2ⁿ equations to obtain the encrypted block.

2. The method of claim 1 wherein step (b) further comprises the step of adding modulo 2 an offset to each of the blocks in the first and second columns of the first matrix after modifying a plurality of the nonzero 2ⁿ - 1 equations in the first matrix of 2ⁿ equations to provide the second matrix.

3. The method of claims 1 or 2 wherein in step (b), a plurality of the equations in the first matrix of 2ⁿ equations which are to be modified begins with a first set of three consecutive equations, and a fourth equation which is the vector sum modulo 2 of the three consecutive equations, the equations being modified by adding vectorially to each of the four equations, the following equation:${\text{(x}}_{\text{1}} {\text{⊕ x}}_{\text{2}} {\text{) ⊕ (x}}_{\text{1}} {\text{⊕ x}}_{\text{2}} \text{) = Θ,}$ wherein the first matrix of equations is ordered so that the first of the three consecutive equations is${\text{x}}_{\text{m}} {\text{⊕ x}}_{\text{1}} {\text{= x}}_{\text{1-p}} \text{.}$

4. The method of claims 1 or 2 wherein in step (b), a plurality of the equations in the first matrix of 2ⁿ equations which are to be modified begins with a first set of four consecutive equations, a fifth equation which is the vector sum modulo 2 of the first three of the four consecutive equations, and a sixth equation which is the vector sum modulo 2 of the last three of the four consecutive equations, the equations being modified by adding vectorially to the six equations, the following equations:${\text{to equations 1 and q (x}}_{\text{1}} {\text{⊕ x}}_{\text{2}} {\text{) ⊕ (x}}_{\text{1}} {\text{⊕ x}}_{\text{2}} \text{) = Θ}$${\text{to equations 2 and 3 (x}}_{\text{1}} {\text{⊕ x}}_{\text{3}} {\text{) ⊕ (x}}_{\text{1}} {\text{⊕ x}}_{\text{3}} \text{) = Θ}$${\text{to equations 4 and q + 1 (x}}_{\text{2}} {\text{⊕ x}}_{\text{3}} {\text{) ⊕ (x}}_{\text{2}} {\text{⊕ x}}_{\text{3}} \text{) = Θ}$ wherein the first matrix of equations is ordered so that the first of the four consecutive equations is${\text{x}}_{\text{m}} {\text{⊕ x}}_{\text{1}} {\text{= x}}_{\text{1-p}} \text{,}$ where q is a positive integer.

5. The method of claim 3, wherein the fourth equation is${\text{x}}_{\text{q-1}} {\text{⊕ x}}_{\text{q}} {\text{= x}}_{\text{q-p'}}$ being equation # q, for some number q, in the first matrix of unmodified equations; followed by a second set of three consecutive equations and a fourth equation of the second set which is the vector sum modulo 2 of the three consecutive equations of the second set, the equations being modified by adding vectorially to each of the four equations of the second set, the following equation:${\text{(x}}_{\text{1+d}} {\text{⊕ x}}_{\text{2+d}} {\text{) ⊕ (x}}_{\text{1+d}} {\text{⊕ x}}_{\text{2+d}} \text{) = Θ}$ wherein the first matrix of equations is ordered so that the first of the three consecutive equations is:${\text{x}}_{\text{d}} {\text{⊕ x}}_{\text{1+d}} {\text{= x}}_{\text{1+d-p}}$ and the fourth equation is${\text{x}}_{\text{d+q-1}} {\text{⊕ x}}_{\text{d+q}} {\text{= x}}_{\text{d+q-p}}$ being equation # d+q, for some number d+q, in the first matrix of equations, where d is greater than 2; followed by subsequent selections of three consecutive equations and repetitions of this process as desired or until some equation from the first matrix of 2ⁿ equations is selected a second time, so that the second matrix of 2ⁿ equations consists of the plurality of modified equations plus the remaining equations from the first matrix of 2ⁿ equations which were not modified.

6. The method of claim 4, wherein the fifth and sixth equations are${\text{x}}_{\text{q-1}} {\text{⊕ x}}_{\text{q}} {\text{= x}}_{\text{q-p}}$${\text{x}}_{\text{q}} {\text{⊕ x}}_{\text{q+1}} {\text{= x}}_{\text{q+1-p}}$ being equations # q and q+1, for some number q, in the first matrix of unmodified equations, followed by a second set of four consecutive equations, a fifth equation of the second set which is the vector sum modulo 2 of the first three of the four consecutive equations of the second set, and a sixth equation of the second set which is the vector sum modulo 2 of the last three of the four consecutive equations of the second set, the equations being modified by adding vectorially to the six equations, the following equations;${\text{to equations 1+d and q+d (x}}_{\text{1+d}} {\text{⊕ x}}_{\text{2+d}} {\text{) ⊕ (x}}_{\text{1+d}} {\text{⊕ x}}_{\text{2+d}} \text{) = Θ}$${\text{to equations 2+d and 3+d (x}}_{\text{1+d}} {\text{⊕ x}}_{\text{3+d}} {\text{) ⊕ (x}}_{\text{1+d}} {\text{⊕ x}}_{\text{3+d}} \text{) = Θ}$${\text{to equations 4+d and q+1+d (x}}_{\text{2+d}} {\text{⊕ x}}_{\text{3+d}} {\text{) ⊕ (x}}_{\text{2+d}} {\text{⊕ x}}_{\text{3+d}} \text{) = Θ}$ wherein the first matrix of equations is ordered so that the first of the four consecutive equations is${\text{X}}_{\text{d}} {\text{⊕ x}}_{\text{1+d}} {\text{= x}}_{\text{1+d-p}} \text{.}$

## Patentansprüche

1. Verschlüsselungsverfahren, bei dem für jeden einzelnen der 2ⁿ eindeutigen Klartextblöcke aus n Bit Binärzahlen ein zugehöriger eindeutiger verschlüsselter Block aus n Bit Binärzahlen substitutiert wird, wobei das Verfahren folgenden Verfahrensschritt umfaßt:
(a) Ermitteln einer ersten Matrix aus 2ⁿ Gleichungen, wobei jede Gleichung die Addition Modulo 2 eines der 2ⁿ Klartextblöcke, xⱼ₋₁, mit einer eindeutigen Zahl aus den 2n n Bit Zahlen, xj, darstellt, um einen zugehörigen eindeutigen vorläufigen n Bit Block, xⱼ₋ₚ, bereitzustellen, wobei alle Gleichungen in der ersten Matrix aus 2ⁿ Gleichungen die Eigenschaft haben, daß die Vektorsumme Modulo 2 jeder beliebigen Zahl der Gleichungen auch eine der Gleichungen in der ersten Matrix ist, wobei die Gleichungen die Null-Gleichung θ ⊕ θ = θ einschließen und die verbleibenden 2ⁿ -1 Gleichungen wie folgt geordnet werden können: 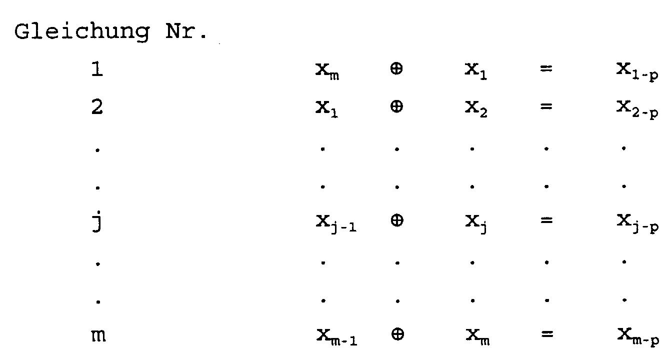 wobei m = 2ⁿ - 1 ist und p eine ganze Zahl ist, und wobei der Vektor durch drei Komponenten gebildet wird, die mit den drei Zahlen x in jeder Gleichung korrespondieren;
gekennzeichnet durch folgende zusätzliche Verfahrensschritte:
(b) Modifizieren einer Vielzahl von 2ⁿ - 1 Gleichungen ungleich Null in der ersten Matrix mit 2ⁿ Gleichungen, um eine zweite Matrix mit 2ⁿ Gleichungen zu bilden, wobei die Mehrzahl von Gleichungen derart modifiziert wird, daß die zweite Matrix aus Gleichungen die 2ⁿ Klartextblöcke xⱼ₋₁ in derselben Reihenfolge enthält wie die 2ⁿ Klartextblöcke xⱼ₋₁ der ersten Matrix aus Gleichungen, wobei der eindeutige Satz aus 2ⁿ n Bit Zahlen xᵢ der zweiten Matrix aus Gleichungen in unterschiedlicher Reihenfolge gegenüber derjenigen des eindeutigen Satzes von 2ⁿ n Bit Zahlen xⱼ der ersten Matrix aus Gleichungen, wobei diese unterschiedliche Reihenfolge derart ist, daß die Addition Modulo 2 eines der 2ⁿ Klartextblöcke xⱼ₋₁ der zweiten Matrix aus Gleichungen mit dem entsprechenden eindeutigen n-Bit Block im umgeordneten eindeutigen Satz aus 2ⁿ n Bit Zahlen xᵢ der zweiten Matrix aus Gleichungen einen zugehörigen eideutigen n-Bit Block (xₖ₋ₚ) ergibt, wobei jede der modifizierten Gleichungen in der Mehrzahl nicht die Summe Modulo 2 jeder beliebigen Zahl der übriggebliebenen nichtmodifizierten Gleichungen, die nicht in der modifizierten Mehrzahl von Gleichungen enthalten sind, ist; wobei die zweite Matrix der 2ⁿ Gleichungen aus der modifizierten Mehrzahl und den verbleibenden nichtmodifizierten Gleichungen aus der ersten Matrix aus 2ⁿ Gleichungen besteht; und
(c) für jeden zu verschlüsselnden Klartextblock: Addition Modulo 2 der eindeutigen der zu diesem gehörigen 2ⁿ n Bit Zahlen zu diesem Block, gemäß der zugehörigen Gleichung der zweiten Matrix aus 2ⁿ Gleichungen, um den verschlüsselten Block zu erhalten.

2. Verfahren nach Anspruch 1, wobei Verfahrensschritt (b) ferner den Verfahrensschritt der Addition Modulo 2 eines Offset zu jedem der Blöcke in der ersten und der zweiten Spalte der ersten Matrix umfaßt, nachdem eine Mehrzahl der 2ⁿ-1 Gleichungen ungleich Null in der ersten Matrix aus 2ⁿ Gleichungen modifiziert wurde, um die zweite Matrix zu ergeben.

3. Verfahren nach Anspruch 1 oder 2, wobei in Verfahrensschritt (b) eine Mehrzahl der Gleichungen in der ersten Matrix aus zu modifizierenden 2ⁿ Gleichungen mit einem ersten Satz aus drei konsekutiven Gleichungen, und einer vierten Gleichung, die die Vektorsumme Modulo 2 der drei konsekutiven Gleichungen ist, beginnt, wobei die Gleichungen modifiziert werden, indem zu jeder der vier Gleichungen folgende Gleichung vektoraddiert wird:${\text{(x}}_{\text{1}} {\text{⊕ x}}_{\text{2}} {\text{) ⊕ (x}}_{\text{1}} {\text{⊕ x}}_{\text{2}} \text{) = θ,}$ wobei die erste Matrix aus Gleichungen derart geordnet ist, daß die erste der drei konsekutiven Gleichungen folgende ist:${\text{x}}_{\text{m}} {\text{⊕ x}}_{\text{1}} {\text{= x}}_{\text{1-p}} \text{.}$

4. Verfahren nach Anspruch 1 oder 2, wobei in Verfahrensschritt (b) eine Mehrzahl der Gleichungen in der ersten Matrix aus 2ⁿ Gleichungen, die zu modifizieren sind, mit einem ersten Satz aus vier konsekutiven Gleichungen beginnt, einer fünften Gleichung, die die Vektorsumme Modulo 2 der ersten drei der vier konsekutiven Gleichungen ist, und einer sechsten Gleichung, die die Vektorsumme Modulo 2 der letzten drei der vier konsekutiven Gleichungen ist, wobei die Gleichungen durch Vektoraddition nachstehender Gleichungen zu den sechs Gleichungen modifiziert werden:${\text{zu Gleichungen 1 und q (x}}_{\text{1}} {\text{⊕ x}}_{\text{2}} {\text{) ⊕ (x}}_{\text{1}} {\text{⊕ x}}_{\text{2}} \text{) = θ}$${\text{zu Gleichungen 2 und 3 (x}}_{\text{1}} {\text{⊕ x}}_{\text{3}} {\text{) ⊕ (x}}_{\text{1}} {\text{⊕ x}}_{\text{3}} \text{) = θ}$${\text{zu Gleichungen 4 und q + 1 (x}}_{\text{2}} {\text{⊕ x}}_{\text{3}} {\text{) ⊕ (x}}_{\text{2}} {\text{⊕ x}}_{\text{3}} \text{) = θ}$ wobei die erste Matrix aus Gleichungen derart geordnet ist, daß die erste der vier konsekutiven Gleichungen${\text{x}}_{\text{m}} {\text{⊕ x}}_{\text{1}} {\text{= x}}_{\text{1-p}}$ ist, wobei q eine positive ganze Zahl ist.

5. Verfahren nach Anspruch 3, wobei die vierte Gleichung${\text{x}}_{\text{q-1}} {\text{⊕ x}}_{\text{q}} {\text{= x}}_{\text{q-p}}$ ist, die Gleichung Nr. q für eine beliebige Zahl q in der ersten Matrix nichtmodifizierter Gleichungen ist; gefolgt von einem zweiten Satz aus drei konsekutiven Gleichungen, und einer vierten Gleichung aus dem zweiten Satz, die die Vektorsumme Modulo 2 der drei konsekutiven Gleichungen des zweiten Satzes ist, wobei die Gleichungen durch Vektoraddition nachstehender Gleichung zu jeder der vier Gleichungen des zweiten Satzes modifiziert werden:${\text{(x}}_{\text{1+d}} {\text{⊕ x}}_{\text{2+d}} {\text{) ⊕ (x}}_{\text{1+d}} {\text{⊕ x}}_{\text{2+d}} \text{) = θ}$ wobei die erste Matrix aus Gleichungen derart geordnet ist, daß die erste der drei konsekutiven Gleichungen folgende ist:${\text{x}}_{\text{d}} {\text{⊕ x}}_{\text{1+d}} {\text{= x}}_{\text{1+d-p}}$ und die vierte Gleichung wie folgt lautet:${\text{x}}_{\text{d+q-1}} {\text{⊕ x}}_{\text{d+q}} {\text{= x}}_{\text{d+q-p}} \text{,}$ die die Gleichung Nr. d+q für eine beliebige Zahl d+q in der ersten Matrix aus Gleichungen darstellt, wobei d größer 2 ist; gefolgt von nachfolgenden Selektionen aus drei konsekutiven Gleichungen und Wiederholungen dieses Prozesses je nach Wunsch oder bis eine Gleichung aus der ersten Matrix aus 2ⁿ Gleichungen ein zweites Mal ausgewählt wird, so daß die zweite Matrix aus 2ⁿ Gleichungen aus der Mehrzahl modifizierter Gleichungen plus den verbleibenden Gleichungen aus der ersten Matrix aus 2ⁿ Gleichungen besteht, die nicht modifiziert wurden.

6. Verfahren nach Anspruch 4, wobei die fünfte und die sechste Gleichung folgende sind:${\text{x}}_{\text{q-1}} {\text{⊕ x}}_{\text{q}} {\text{= x}}_{\text{q-p}}$${\text{x}}_{\text{q}} {\text{⊕ x}}_{\text{q+1}} {\text{= x}}_{\text{q+1-p}}$ die die Gleichungen Nrn. q und q+1 für eine beliebige Zahl q in der ersten Matrix nichtmodifizierter Gleichungen darstellen, gefolgt von einem zweiten Satz aus vier konsekutiven Gleichungen, einer fünften Gleichung aus dem zweiten Satz, die die Vektorsumme Modulo 2 der ersten drei der vier konsekutiven Gleichungen des zweiten Satzes ist, und einer sechsten Gleichung aus dem zweiten Satz, die die Vektorsumme Modulo 2 der letzten drei der vier konsekutiven Gleichungen des zweiten Satzes ist, wobei die Gleichungen durch Vektoraddition nachstehender Gleichungen zu den sechs Gleichungen modifiziert werden:${\text{zu Gleichungen 1+d und q+d (x}}_{\text{1+d}} {\text{⊕ x}}_{\text{2+d}} {\text{) ⊕ (x}}_{\text{1+d}} {\text{⊕ x}}_{\text{2+d}} \text{) = θ}$${\text{zu Gleichungen 2+d und 3+d (x}}_{\text{1+d}} {\text{⊕ x}}_{\text{3+d}} {\text{) ⊕ (x}}_{\text{1+d}} {\text{⊕ x}}_{\text{3+d}} \text{) = θ}$${\text{zu Gleichungen 4+d und q+1+d (x}}_{\text{2+d}} {\text{⊕ x}}_{\text{3+d}} {\text{) ⊕ (x}}_{\text{2+d}} {\text{⊕ x}}_{\text{3+d}} \text{) = θ}$ wobei die erste Matrix aus Gleichungen derart geordnet ist, daß die erste der vier konsekutiven Gleichungen folgende ist:${\text{x}}_{\text{d}} {\text{⊕ x}}_{\text{1+d}} {\text{= x}}_{\text{1+d-p}} \text{.}$

## Revendications

1. Un procédé de chiffrage par substitution, à l'un quelconque des 2ⁿ blocs spéciaux de nombres binaires à n bits de texte en clair, d'un bloc chiffré spécial associé de nombres binaires de n bits comprenant l'étape consistant à:
(a) trouver une première matrice de 2ⁿ équations, chaque équation représentant l'addition modulo 2 de l'un des 2ⁿ blocs de texte en clair, xⱼ₋₁, avec un nombre spécial parmi les 2ⁿ nombres de n bits, xⱼ, pour produire un bloc intermédiaire spécial associé de n bits, xⱼ₋ₚ, toutes les équations de la première matrice de 2ⁿ équations possédant la propriété que la somme vectorielle modulo 2 d'un nombre quelconque des équations est aussi l'une des équations de la première matrice, les équations incluant l'équation nulle 0 ⊕ 0 = 0 et les 2ⁿ - 1 équations restantes pouvant être ordonnées de la manière suivante: 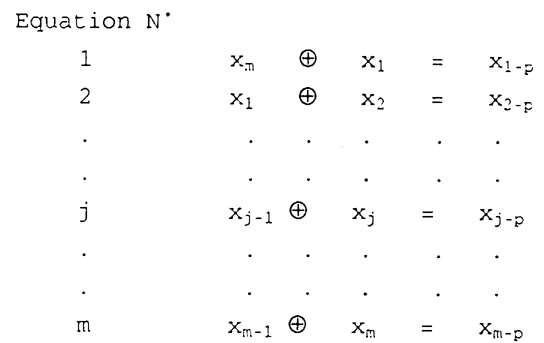 où m = 2ⁿ -1 et p est un entier et où le vecteur est constitué par trois composantes qui correspondent aux trois nombres x de chaque équation
caractérisé par les étapes additionnelles consistant à
(b) modifier une série des 2ⁿ - 1 équations non nulles de la première matrice de 2ⁿ équations pour produire une deuxième matrice de 2ⁿ équations, la série d'équations étant modifiée d'une manière telle que la deuxième matrice d'équations inclut les 2ⁿ blocs de texte en clair xⱼ₋₁ dans le même ordre que les 2ⁿ blocs de texte en clair xⱼ₋₁ de la première matrice d'équations, l'ensemble spécial de 2ⁿ nombres de n bits xⱼ de la deuxième matrice d'équations étant dans un ordre différent de celui de l'ensemble spécial de 2ⁿ nombres de n bits xⱼ de la première matrice d'équations, l'ordre différent étant tel que l'addition modulo 2 de l'un des 2ⁿ blocs de texte en clair xⱼ₋₁ de la deuxième matrice d'équations avec le bloc spécial correspondant de n bits dans l'ensemble spécial réordonné de 2ⁿ nombres de n bits xᵢ de la deuxième matrice d'équations produit un bloc spécial associé de n bits (xₖ₋ₚ), chacune des équations modifiées de la série n'étant pas la somme modulo 2 d'un nombre quelconque d'équations non modifiées restantes qui ne sont pas incluses dans la série modifiée d'équations; la deuxième matrice de 2ⁿ équations étant constituée de la série modifiée et des équations restantes non modifiées appartenant à la première matrice de 2ⁿ équations; et
(c) pour chaque bloc de texte en clair à chiffrer, ajouter modulo 2 à ce bloc, pour obtenir le bloc chiffré, le nombre spécial, parmi les 2ⁿ nombres de n bits, qui y est associé en fonction de l'équation associée de la deuxième matrice de 2ⁿ équations.

2. Le procédé selon la revendication 1 dans lequel l'étape (b) comprend en outre l'étape consistant à additionner modulo 2, pour produire la deuxième matrice, un déport à chacun des blocs de la première et de la deuxième colonnes de la première matrice après avoir modifié une série de 2ⁿ - 1 équations non nulles de la première matrice de 2ⁿ équations.

3. Le procédé selon la revendication 1 ou 2 dans lequel, à l'étape (b), une série des équations de la première matrice de 2ⁿ équations qui doivent être modifiées commence par un premier ensemble de trois équations consécutives, et une quatrième équation qui est la somme vectorielle modulo 2 des trois équations consécutives, les équations étant modifiées en ajoutant vectoriellement à chacune des quatre équations l'équation suivante:${\text{(x}}_{\text{1}} {\text{⊕ x}}_{\text{2}} {\text{) ⊕ (x}}_{\text{1}} {\text{⊕ x}}_{\text{2}} \text{) = θ}$ où la première matrice d'équations est ordonnée d'une manière telle que la première des trois équations consécutives est${\text{x}}_{\text{m}} {\text{⊕ x}}_{\text{1}} {\text{= x}}_{\text{1-p}}$

4. Le procédé selon la revendication 1 ou 2 dans lequel, à l'étape (b), une série des équations de la première matrice de 2ⁿ équations qui doivent être modifiées commence par un premier ensemble de quatre équations consécutives, une cinquième équation qui est la somme vectorielle modulo 2 des trois premières des quatre équations consécutives, et une sixième équation qui est la somme vectorielle modulo 2 des trois dernières des quatre équations consécutives, les équations étant modifiées en ajoutant vectoriellement aux six équations les équations suivantes:${\text{aux équations 1 et q (x}}_{\text{1}} {\text{⊕ x}}_{\text{2}} {\text{) ⊕ (x}}_{\text{1}} {\text{⊕ x}}_{\text{2}} \text{) = θ}$${\text{aux équations 2 et 3 (x}}_{\text{1}} {\text{⊕ x}}_{\text{3}} {\text{) ⊕ (x}}_{\text{1}} {\text{⊕ x}}_{\text{3}} \text{) = θ}$${\text{aux équations 4 et q + 1 (x}}_{\text{2}} {\text{⊕ x}}_{\text{3}} {\text{) ⊕ (x}}_{\text{2}} {\text{⊕ x}}_{\text{3}} \text{) = θ}$ où q est un entier positif, la première matrice d'équations est ordonnée d'une manière telle que la première des quatre équations consécutives est${\text{x}}_{\text{m}} {\text{⊕ x}}_{\text{1}} {\text{= x}}_{\text{1-p}} \text{.}$

5. Le procédé selon la revendication 3, dans lequel la quatrième équation est${\text{x}}_{\text{q-1}} {\text{⊕ x}}_{\text{q}} {\text{- x}}_{\text{q-p}} \text{,}$ qui est l'équation N° q, pour un certain nombre q, de la première matrice d'équations non modifiées; suivie par un deuxième ensemble de trois équations consécutives et d'une quatrième équation du deuxième ensemble qui est la somme vectorielle modulo 2 des trois équations consécutives du deuxième ensemble, les équations étant modifiées en ajoutant vectoriellement à chacune des quatre équations du deuxième ensemble l'équation suivante:${\text{(x}}_{\text{1+d}} {\text{⊕ x}}_{\text{2+d}} {\text{) ⊕ (x}}_{\text{1+d}} {\text{⊕ x}}_{\text{2+d}} \text{) = θ}$ où la premières matrice d'équations est ordonnée d'une manière telle que la première des trois équations consécutives est${\text{x}}_{\text{d}} {\text{⊕ x}}_{\text{1+d}} {\text{= x}}_{\text{1+d-p}} \text{,}$ et la quatrième équation est${\text{x}}_{\text{d+q-1}} {\text{⊕ x}}_{\text{d+q}} {\text{= x}}_{\text{d+q-p}} \text{,}$ qui est l'équation N° d + q, pour un certain nombre d + q, de la première matrice d'équations, où d est supérieur à 2; suivie par des sélections ultérieures de trois équations consécutives et des répétitions de ce processus à volonté ou jusqu'à ce qu'une certaine équation provenant de la première matrice de 2ⁿ équations soit sélectionnée une deuxième fois, de sorte que la deuxième matrice de 2ⁿ équations est constituée de la série des équations modifiées et, de plus, des équations restantes qui appartiennent à la première matrice de 2ⁿ équations et n'ont pas été modifiées.

6. Le procédé selon la revendication 4, dans lequel la cinquième et la sixième équations sont${\text{x}}_{\text{q-1}} {\text{⊕ x}}_{\text{q}} {\text{= x}}_{\text{q-p}}$${\text{x}}_{\text{q}} {\text{⊕ x}}_{\text{q+1}} {\text{= x}}_{\text{q+1-p}}$ qui sont les équations N° q et q + 1, pour un certain nombre q, de la première matrice d'équations non modifiées, suivies par un deuxième ensemble de quatre équations consécutives, d'une cinquième équation du deuxième ensemble qui est la somme vectorielle modulo 2 des trois premières des quatre équations consécutives du deuxième ensemble, et d'une sixième équation du deuxième ensemble qui est la somme vectorielle modulo 2 des trois dernières des quatre équations consécutives du deuxième ensemble, les équations étant modifiées en ajoutant vectoriellement aux six équations les équations suivantes aux équations 1+d et q+d${\text{(x}}_{\text{1+d}} {\text{⊕ x}}_{\text{2+d}} {\text{) ⊕ (x}}_{\text{1+d}} {\text{⊕ x}}_{\text{2+d}} \text{) = θ}$ aux équations 2+d et 3+d${\text{(x}}_{\text{1+d}} {\text{⊕ x}}_{\text{3+d}} {\text{) ⊕ (x}}_{\text{1+d}} {\text{⊕ x}}_{\text{3+d}} \text{) = θ}$ aux équations 4+d et q+1+d${\text{(x}}_{\text{2+d}} {\text{⊕ x}}_{\text{3+d}} {\text{) ⊕ (x}}_{\text{2+d}} {\text{⊕ x}}_{\text{3+d}} \text{) = θ}$ où la première matrice d'équations est ordonnée d'une manière telle que la première des quatre équations consécutives est${\text{x}}_{\text{d}} {\text{⊕ x}}_{\text{1+d}} {\text{= x}}_{\text{1+d-p}} \text{.}$
